# EUROPÄISCHE PATENTANMELDUNG

(11) **EP 4 775 315 A2**
(43) Veröffentlichungstag der Anmeldung: **15.07.2026**
(21) Anmeldenummer: 26182147.4
(22) Anmeldetag: 28.09.2020
(51) Int. Cl.: B05B 15/00

(54) **BEHANDLUNGSANLAGE UND BEHANDLUNGSVERFAHREN**

(30) Priorität: 30.09.2019 DE 102019215079; 30.09.2019 DE 102019215080; 19.06.2020 DE 202020103567 U
(62) Teilanmeldung aus: 20789443.7
(71) Anmelder: Dürr Systems AG, 74321 Bietigheim-Bissingen (DE)
(72) Erfinder: Wehler, Sören, 74336 Brackenheim (DE); Herre, Frank, 71739 Oberriexingen (DE); Wieland, Dietmar, 71336 Waiblingen (DE); Nanninga, Elias-Joshua, 75446 Wiernsheim (DE); Ackermann, Daniel, 71254 Ditzingen (DE); Ludwig, Uwe, 76229 Karlsruhe (DE)
(74) Vertreter: DTS Patent- und Rechtsanwälte PartmbB

(57) **Zusammenfassung**

Die vorliegende Erfindung betrifft eine Behandlungsanlage (100) mit einem Behandlungsbereich zur Aufnahme von zu behandelnden Werkstücken (102) ), insbesondere Fahrzeugkarosserien (106), und einer oder mehreren Aktionsvorrichtungen (130) zur Durchführung einer oder mehrerer Aktionen an den zu behandelnden Werkstücken (102).

Ferner betrifft die vorliegende Erfindung ein entsprechendes Verfahren zum Behandeln von Werkstücken (102), insbesondere Fahrzeugkarosserien (106).

## Beschreibung

Die vorliegende Erfindung betrifft eine Behandlungsanlage zum Behandeln von Werkstücken. Eine solche Behandlungsanlage kann beispielsweise zum Behandeln von Fahrzeugkarosserien vorgesehen sein. Insbesondere kann eine Behandlungsanlage zum Beschichten von Werkstücken dienen.

Der vorliegenden Erfindung liegt die Aufgabe zugrunde, eine Behandlungsanlage bereitzustellen, welche einfach aufgebaut und flexibel und effizient nutzbar ist.

Diese Aufgabe wird erfindungsgemäß durch den unabhängigen Vorrichtungsanspruch gelöst.

Der vorliegenden Erfindung liegt ferner die Aufgabe zugrunde, ein Behandlungsverfahren bereitzustellen, mittels welchem Werkstücke einfach, flexibel und effizient behandelbar sind.

Diese Aufgabe wird erfindungsgemäß durch die Merkmale des unabhängigen Verfahrensanspruchs gelöst.

Eine Behandlungsanlage zum Behandeln von Werkstücken, insbesondere Fahrzeugkarosserien, umfasst vorzugsweise Folgendes:
einen Behandlungsbereich zur Aufnahme von zu behandelnden Werkstücken;
eine oder mehrere Aktionsvorrichtungen zur Durchführung einer oder mehrerer Aktionen an den zu behandelnden Werkstücken.

Ein Behandlungsbereich ist beispielsweise ein Bearbeitungsbereich und/oder Beschichtungsbereich zum Bearbeiten und/oder Behandeln von Werkstücken.

Eine an den zu behandelnden Werkstücken durchzuführende Aktion ist insbesondere eine Behandlungsaktion, beispielsweise ein Beschichtungsvorgang und/oder Behandlungsvorgang.

Die Behandlungsanlage umfasst optional mindestens einen Zugriffsbereich, von welchem aus und/oder an welchem die eine oder die mehreren Aktionsvorrichtungen zumindest in einem Zugriffszustand der einen oder der mehreren Aktionsvorrichtungen zugänglich sind.

Insbesondere kann vorgesehen sein, dass von dem mindestens einen Zugriffsbereich aus und/oder an dem mindestens einen Zugriffsbereich die eine oder die mehreren Aktionsvorrichtungen für eine Person, beispielsweise einen Werker, und/oder maschinell, insbesondere für eine Wartungsmaschine und/oder Rüstmaschine, zugänglich sind, zumindest dann, wenn die eine oder die mehreren Aktionsvorrichtungen in einem Zugriffszustand sind.

Ein Zugriffszustand einer Aktionsvorrichtung ist insbesondere ein von einem Behandlungszustand und/oder Bereitschaftszustand verschiedener Zustand.

In einem Zugriffszustand einer Aktionsvorrichtung ist diese insbesondere zur Durchführung von Wartungsaktionen und/oder Rüstaktionen zugänglich. Insbesondere ist in einem Zugriffszustand einer Aktionsvorrichtung mittels dieser Aktionsvorrichtung keine Aktion an einem zu behandelnden Werkstück durchführbar.

Ein Behandlungszustand einer Aktionsvorrichtung ist insbesondere ein Zustand, in welchem mittels dieser Aktionsvorrichtung eine Aktion, beispielsweise ein Beschichtungsvorgang und/oder Handhabungsvorgang, an einem zu behandelnden Werkstück durchgeführt wird.

Ein Bereitschaftszustand einer Aktionsvorrichtung ist insbesondere ein Zustand, in welchem diese Aktionsvorrichtung zur Durchführung einer Aktion an einem zu behandelnden Werkstück vorbereitet ist.

In einem Behandlungszustand einer Aktionsvorrichtung ist diese vorzugsweise in unmittelbarer Nähe zu einem zu behandelnden Werkstück angeordnet, um eine Aktion an dem zu behandelnden Werkstück durchführen zu können.

In einem Bereitschaftszustand einer Aktionsvorrichtung ist diese vorzugsweise in einem größeren Abstand von einem zu behandelnden Werkstück angeordnet als in dem Behandlungszustand.

In einem Zugriffszustand einer Aktionsvorrichtung ist diese vorzugsweise beabstandet und/oder einem zu behandelnden Werkstück abgewandt angeordnet. Vorzugsweise ist eine Aktionsvorrichtung in einem Zugriffszustand derselben zumindest teilweise in einem Zugriffsbereich angeordnet oder grenzt an den Zugriffsbereich an.

Der mindestens eine Zugriffsbereich ist vorzugsweise ein räumlich von dem Behandlungsbereich verschiedener und/oder getrennter Bereich.

Insbesondere ist vorzugsweise keine räumliche Überlappung zwischen dem Behandlungsbereich und dem mindestens einem Zugriffsbereich vorgesehen.

Der Behandlungsbereich und der mindestens eine Zugriffsbereich sind vorzugsweise Teilbereiche eines von einer Einhausung umgebenen Behandlungsraums der Behandlungsanlage. Der Behandlungsraum der Behandlungsanlage umfasst somit vorzugsweise den Behandlungsbereich und den mindestens einen Zugriffsbereich.

Der Behandlungsraum ist dabei insbesondere von einer Bodenwand, insbesondere einem begehbaren Boden, einer Deckenwand, insbesondere einer Filterdecke, und zwei einander gegenüberliegend angeordneten Seitenwänden begrenzt. Für die Begrenzung in den verbleibenden zwei Raumrichtungen sind entweder ein oder mehrere weitere Seitenwände, eine oder mehrere Schleusen, insbesondere Luftschleusen, ein oder mehrere Tore und/oder Türen, etc. vorgesehen.

Vorzugsweise sind eine oder mehrere, insbesondere sämtliche, Aktionsvorrichtungen dauerhaft oder zumindest näherungsweise dauerhaft und/oder vollständig oder zumindest näherungsweise vollständig innerhalb des Behandlungsraums, insbesondere zwischen den beiden Seitenwänden, angeordnet. Die Aktionsvorrichtungen werden vorzugsweise nicht aus dem Behandlungsraum entfernt, um Wartungsaktionen und/oder Rüstaktionen durchzuführen.

Vorzugsweise verbleiben sämtliche Aktionsvorrichtungen innerhalb des Behandlungsraums, während Behandlungsvorgänge an den Werkstücken durchgeführt werden.

Vorzugsweise sind und/oder verbleiben sämtliche Aktionsvorrichtungen dauerhaft oder zumindest näherungsweise dauerhaft und/oder vollständig oder zumindest näherungsweise vollständig innerhalb eines Raumbereichs, welcher von einer senkrecht zu einer Förderrichtung verlaufenden, minimalen oder maximalen Querschnittsfläche des Behandlungsraums überstrichen wird, wenn diese Querschnittsfläche längs der Förderrichtung bis zu beiden Enden des Behandlungsraums und/oder der Behandlungsanlage verschoben wird.

Ein oder mehrere, insbesondere sämtliche, Zugriffsbereiche sind vorzugsweise permanent stationär, insbesondere dauerhaft an jeweils ein und demselben Ort, insbesondere innerhalb des Behandlungsraums, angeordnet.

Vorzugsweise sind und/oder verbleiben sämtliche Zugriffsbereiche dauerhaft oder zumindest näherungsweise dauerhaft und/oder vollständig oder zumindest näherungsweise vollständig innerhalb eines Raumbereichs, welcher von einer senkrecht zu einer Förderrichtung verlaufenden, minimalen oder maximalen Querschnittsfläche des Behandlungsraums überstrichen wird, wenn diese Querschnittsfläche längs der Förderrichtung bis zu beiden Enden des Behandlungsraums und/oder der Behandlungsanlage verschoben wird.

Die Behandlungsanlage umfasst vorzugsweise eine Fördervorrichtung zum Fördern von Werkstücken, wobei die Werkstücke vorzugsweise in einer Förderrichtung in den Behandlungsbereich hinein, durch den Behandlungsbereich hindurch und/oder aus dem Behandlungsbereich heraus förderbar sind.

Hierbei kann vorgesehen sein, dass die Fördervorrichtung eine Förderung in einer einzigen Richtung ermöglicht, beispielsweise bei einer Behandlungslinie einer Behandlungsanlage. Zudem kann vorgesehen sein, dass mittels der Fördervorrichtung die Werkstücke in unterschiedlichen Richtungen förderbar sind, beispielsweise durch eine Zuführöffnung in einen Behandlungsraum hinein und nach erfolgter Behandlung durch dieselbe Zuführöffnung erneut aus dem Behandlungsraum heraus.

Günstig kann es sein, wenn die Fördervorrichtung zum Fördern von Werkstücken oberhalb einer Bodenwand der Behandlungsanlage, insbesondere oberhalb eines begehbaren Bodens der Behandlungsanlage, angeordnet ist.

Insbesondere ist eine bezüglich der Schwerkraftrichtung obenliegende Oberseite der Fördervorrichtung ebenerdig mit einem begehbaren Boden des Behandlungsraums der Behandlungsanlage angeordnet.

Alternativ hierzu kann vorgesehen sein, dass eine bezüglich der Schwerkraftrichtung obenliegende Oberseite der Fördervorrichtung vorzugsweise mindestens ungefähr 30 cm, beispielsweise mindestens ungefähr 40 cm, insbesondere ungefähr 50 cm, oberhalb eines begehbaren Bodens des Behandlungsraums der Behandlungsanlage angeordnet. Im Vergleich zu alternativ denkbaren bodenebenen Fördervorrichtungen kann hierdurch vorzugsweise ein vergrößerter Raumbereich für mehrere und/oder zusätzliche Aktionsvorrichtungen in dem Behandlungsraum geschaffen werden. Zudem kann hierdurch vorzugsweise eine Zugänglichkeit der einen oder der mehreren Aktionsvorrichtungen optimiert werden.

Günstig kann es sein, wenn die gesamte Fördervorrichtung, insbesondere sämtliche im Behandlungsraum angeordneten Komponenten der Fördervorrichtung, oberhalb der Bodenwand, insbesondere oberhalb des begehbaren Bodens des Behandlungsraums, angeordnet sind.

Günstig kann es sein, wenn die Behandlungsanlage einen begehbaren Boden aufweist, welcher sich auf unterschiedlichen Höhenniveaus erstreckt. Der begehbare Boden ist insbesondere ein Gitterrostboden oder umfasst einen solchen.

Vorzugsweise ist in einem Einlaufbereich und/oder in einem Auslaufbereich des Behandlungsraums ein Normalniveau des begehbaren Bodens vorgesehen. Das Normalniveau ist insbesondere ein Höhenniveau, welches ein Überschreiten der Fördervorrichtung ermöglicht, insbesondere unter Einhaltung der bestehenden Sicherheitsvorschriften, beispielsweise unter Einhaltung einer maximalen Höhe einer durch die Fördervorrichtung gebildeten Hürde von höchstens ungefähr 10 cm, insbesondere höchstens ungefähr 5 cm.

Im Behandlungsbereich, insbesondere zwischen dem Einlaufbereich und dem Auslaufbereich, ist vorzugsweise ein abgesenktes Niveau vorgesehen, in welchem der begehbare Boden tiefer ist als im Einlaufbereich und/oder im Auslaufbereich. Der begehbare Boden ist im Bereich des abgesenkten Niveaus vorzugsweise mindestens ungefähr 300 mm, beispielsweise mindestens ungefähr 400 mm, insbesondere ungefähr 500 mm, tiefer als das Normalniveau.

Eine Verbindung zwischen dem abgesenkten Niveau und dem Normalniveau ist vorzugsweise durch eine oder mehrere Treppen gebildet, wobei die eine oder die mehreren Treppen beispielsweise bezüglich einer horizontal und senkrecht zur Förderrichtung verlaufenden Querrichtung zwischen zwei Zugriffsbereichen angeordnet sind, insbesondere beidseitig einer Fördervorrichtung zum Fördern der Werkstücke.

Die Behandlungsanlage kann vorzugsweise ein oder mehrere Führungselemente zur Führung jeweils einer oder mehrerer Aktionsvorrichtungen umfassen.

Günstig kann es sein, wenn ein oder mehrere, insbesondere sämtliche, Führungselemente der Behandlungsanlage über der Bodenwand, insbesondere über dem begehbaren Boden des Behandlungsraums, angeordnet sind. Hierdurch kann eine einfache Zugänglichkeit der Komponenten der Behandlungsanlage ermöglicht werden.

Die erfindungsgemäße Behandlungsanlage weist vorzugsweise mehrere Aktionsvorrichtungen auf. Insbesondere zu Wartungs- und/oder Rüstzwecken, beispielsweise zu Reinigungszwecken, sind die Aktionsvorrichtungen vorzugsweise aus einem Zugriffsbereich heraus und/oder an einem Zugriffsbereich zugänglich.

Vorteilhaft kann es sein, wenn mehrere Aktionsvorrichtungen zumindest in einem Zugriffszustand desselben von einem gemeinsamen Zugriffsbereich aus und/oder an einem gemeinsamen Zugriffsbereich zugänglich sind.

Vorzugsweise ist mindestens ein Zugriffsbereich mehreren Aktionsvorrichtungen zugeordnet.

Günstig kann es sein, wenn jeder Zugriffsbereich jeweils mehreren Aktionsvorrichtungen zugeordnet ist.

Ferner kann vorgesehen sein, dass jede Aktionsvorrichtung exakt einem Zugriffsbereich zugeordnet ist, wobei sich mindestens eine Aktionsvorrichtung vorzugsweise mit jeweils einer oder mehreren weiteren Aktionsvorrichtungen einen gemeinsamen Zugriffsbereich teilt.

Eine oder mehrere Aktionsvorrichtungen sind vorzugsweise beweglich angeordnet und/oder ausgebildet. Solche Aktionsvorrichtungen werden vorliegend insbesondere als bewegliche Aktionsvorrichtungen bezeichnet.

Die eine oder die mehreren Aktionsvorrichtungen sind insbesondere längs einer oder mehrerer Führungselemente verfahrbar, insbesondere längs einer Führungsrichtung.

Die Führungsrichtung ist dabei insbesondere zumindest näherungsweise parallel zu einer Förderrichtung einer Fördervorrichtung.

Günstig kann es sein, wenn eine oder mehrere Aktionsvorrichtungen zumindest teilweise in den mindestens einen Zugriffsbereich hinein und/oder an den mindestens einen Zugriffsbereich heran bewegbar sind.

Eine oder mehrere Aktionsvorrichtungen sind vorzugsweise als Ganzes beweglich und/oder in sich beweglich.

Günstig kann es sein, wenn eine oder mehrere Aktionsvorrichtungen jeweils eine beispielsweise an einem Führungselement angeordnete Aktionsbasis aufweisen. Ferner umfassen die eine oder die mehreren Aktionsvorrichtungen vorzugsweise jeweils ein Aktionselement zur Durchführung einer Aktion.

Günstig kann es sein, wenn das Aktionselement und die Aktionsbasis mittels eines Aktionsarms, insbesondere Roboterarms, miteinander verbunden sind.

Das Aktionselement ist somit insbesondere relativ zur Aktionsbasis beweglich angeordnet und/oder ausgebildet.

Günstig kann es sein, wenn ein oder mehrere Aktionselemente einer oder mehrerer Aktionsvorrichtungen in den mindestens einen Zugriffsbereich hinein und/oder an den mindestens einen Zugriffsbereich heran bewegbar sind. Die Aktionsbasis und/oder der Aktionsarm der jeweiligen Aktionsvorrichtung kann dann insbesondere außerhalb und/oder beabstandet von dem Zugriffsbereich angeordnet sein.

Günstig kann es sein, wenn die Aktionsvorrichtungen in unterschiedlichen Zugriffszuständen anordenbar sind, wobei insbesondere abhängig von einem Gefahrzustand einer Person, beispielsweise aufgrund unterschiedlicher elektrischer Spannungen an dem Aktionselement und/oder dem Aktionsarm, in unterschiedlichen Zugriffszuständen voneinander verschiedene Teile und/oder Komponenten der jeweiligen Aktionsvorrichtung zugänglich sind, insbesondere für eine Person, beispielsweise einen Werker.

Günstig kann es sein, wenn eine oder mehrere Aktionsvorrichtungen jeweils ein oder mehrere Aktionselemente, insbesondere ein oder mehrere Applikationselemente und/oder Handhabungselemente, aufweisen.

Eines oder mehrere der Aktionselemente, insbesondere sämtliche Aktionselemente, sind vorzugsweise teilweise und/oder vollständig und/oder gleichzeitig und/oder zeitlich nacheinander in den Zugriffsbereich hinein und/oder an den Zugriffsbereich heran bewegbar, insbesondere in einem Zugriffszustand der jeweiligen Aktionsvorrichtung.

Ein Aktionsarm ist insbesondere mehrgelenkig und/oder mehrachsig bewegbar und/oder verfahrbar. Beispielsweise kann eine fünfachsige, sechsachsige oder siebenachsige Ausgestaltung vorgesehen sein.

Günstig kann es sein, wenn die Behandlungsanlage ein oder mehrere Trennelemente, insbesondere Trennwände, umfasst, mittels welchen der mindestens eine Zugriffsbereich und der Behandlungsbereich voneinander getrennt sind.

Der mindestens eine Zugriffsbereich und der Behandlungsbereich sind vorzugsweise mittels einer oder mehrerer Zugangsöffnungen in einem oder mehreren Trennelementen, insbesondere Trennwänden, miteinander verbunden.

Die eine oder die mehreren Zugangsöffnungen sind insbesondere Öffnungen und/oder Ausnehmungen in dem einen oder den mehreren Trennelementen.

Alternativ oder ergänzend zu einem als Trennwand ausgebildeten Trennelement können eine oder mehrere Düsen, beispielsweise zur Zuführung eines Zuluftstroms, vorgesehen sein. Mittels einer oder mehrerer Düsen kann insbesondere ein Luftvorhang, beispielsweise ein Zuluftvorhang, erzeugt werden, mittels welchem der Behandlungsbereich und der mindestens eine Zugriffsbereich voneinander trennbar sind.

Insbesondere kann mittels einer oder mehrerer Düsen verhindert werden, dass die im Behandlungsbereich befindliche Luft in den mindestens einen Zugriffsbereich strömt.

Mittels einer oder mehrere Düsen ist vorzugsweise eine Luftvorhangsvorrichtung der Behandlungsanlage gebildet. Ferner kann vorgesehen sein, dass eine oder mehrere Düsen einen Bestandteil einer Luftvorhangsvorrichtung bilden.

Insbesondere kann vorgesehen sein, dass mittels einer oder mehrerer Düsen ein Luftvorhang, beispielsweise ein Zuluftvorhang, in einer oder mehreren Zugangsöffnungen erzeugbar ist, insbesondere um einen Luftaustausch zwischen dem Behandlungsbereich und dem einen oder den mehreren Zugriffsbereichen zu verhindern oder zumindest zu minimieren.

Vorteilhaft kann es sein, wenn bezüglich einer Schwerkraftrichtung oberhalb einer oder mehrerer Zugangsöffnungen, insbesondere direkt und/oder unmittelbar und/oder beabstandet über einer Oberkante der einen oder der mehreren Zugangsöffnungen, eine oder mehrere Düsen, insbesondere Schlitzdüsen, angeordnet sind.

Günstig kann es sein, wenn die eine oder die mehreren Düsen derart angeordnet und ausgebildet sind, dass eine Hauptströmungsrichtung eines mittels der Düsen applizierten Gasstroms, insbesondere eines Luftstroms, einen Winkel (α, alpha) mit der Schwerkraftrichtung einschließt, welcher mindestens ungefähr 5°, insbesondere mindestens ungefähr 10°, und/oder höchstens ungefähr 30°, insbesondere höchstens ungefähr 20°, beträgt.

Ferner kann vorgesehen sein, dass die Düsen variabel angeordnet und/oder ausgebildet sind, insbesondere variabel und/oder einstellbar derart, dass eine Hauptströmungsrichtung eines mittels der Düsen applizierten Gasstroms, insbesondere eines Luftstroms, einen einstellbaren Winkel (α, alpha) mit der Schwerkraftrichtung einschließt, wobei der Winkel vorzugsweise stufenlos oder in diskreten Stufen vorzugsweise mindestens zwischen ungefähr 0° bis ungefähr 90°, insbesondere mindestens zwischen ungefähr 5° bis ungefähr 45°, einstellbar ist.

Es kann vorgesehen sein, dass bezüglich einer Schwerkraftrichtung oberhalb einer oder mehrerer Zugangsöffnungen, insbesondere direkt über einer Oberkante der einen oder der mehreren Zugangsöffnungen, ein oder mehrere Ablenkelemente angeordnet sind, mittels welcher ein längs der Schwerkraftrichtung von oben nach unten durch den Behandlungsbereich hindurchgeführter Luftstrom, insbesondere Umluftstrom, von der einen oder den mehreren Zugangsöffnungen wegleitbar ist, insbesondere in einer senkrecht zur Schwerkraftrichtung von der Zugangsöffnung wegragenden Richtung.

Ein Abstand des einen oder der mehreren Ablenkelemente und/oder einer oder mehrerer Düsen einerseits von der Oberkante der Zugangsöffnung andererseits beträgt vorzugsweise höchstens ungefähr 700 mm, insbesondere höchstens ungefähr 500 mm, beispielsweise höchstens ungefähr 200 mm. Hierdurch kann vorzugsweise mit geringen Strömungsgeschwindigkeiten und geringen Volumenströmen eine gleichmäßige Strömung im Bereich der Zugangsöffnung realisiert werden.

Günstig kann es sein, dass eine den Luftstrom ablenkende Oberseite des Ablenkelements mit der Schwerkraftrichtung einen Winkel (β; beta) einschließt, welcher mindestens ungefähr 10°, insbesondere mindestens ungefähr 20°, und/oder höchstens ungefähr 40°, insbesondere höchstens ungefähr 30°, beträgt.

Bei einer Ausgestaltung der Erfindung kann es vorgesehen sein, dass bezüglich einer Schwerkraftrichtung oberhalb einer oder mehrerer Zugangsöffnungen, insbesondere direkt über einer Oberkante der einen oder der mehreren Zugangsöffnungen, eine oder mehrere Düsen, insbesondere Schlitzdüsen, und ein oder mehrere Ablenkelemente angeordnet sind, wobei die eine oder die mehreren Düsen unter dem einen oder den mehreren Ablenkelementen angeordnet sind und/oder in einen direkt unter dem einen oder den mehreren Ablenkelementen angeordneten Raumbereich münden.

Eine oder mehrere Düsen, insbesondere Schlitzdüsen, ragen vorzugsweise in den Behandlungsbereich hinein oder ausgehend von dem Trennelement in Richtung des Behandlungsbereichs. Insbesondere kann vorgesehen sein, dass ein oder mehrere Düsen, insbesondere Schlitzdüsen, für sich genommen oder gemeinsam mit einem Ablenkelement im Querschnitt zumindest näherungsweise dreiecksförmig ausgebildet sind, wobei eine Seite des Dreiecks vorzugsweise zumindest näherungsweise horizontal verläuft.

Insbesondere zur Strömungsstabilisierung kann vorgesehen sein, dass die eine oder die mehreren Zugangsöffnungen und/oder das eine oder die mehreren Trennelemente jeweils mit einem oder mit mehreren Leitelementen, insbesondere Seitenleitelementen, versehen sind, mittels welcher eine Luftströmung in einer Umgebung der einen oder der mehreren Zugangsöffnungen beeinflussbar ist.

Ein oder mehrere Leitelemente, insbesondere Seitenleitelemente, sind vorzugsweise Stabilisationselemente.

Günstig kann es sein, wenn ein oder mehrere Seitenleitelemente insbesondere benachbart und/oder beabstandet zu einer oder mehreren Seitenkanten der einen oder der mehreren Zugangsöffnungen angeordnet sind, wobei das eine oder die mehreren Seitenleitelemente sich vorzugsweise zumindest näherungsweise vertikal und/oder zumindest näherungsweise senkrecht zu dem das jeweilige Seitenleitelement aufnehmenden oder tragenden oder stützenden Trennelement erstrecken.

Insbesondere ist jeweils ein Seitenleitelement auf jeder Seite der einen oder der mehreren Zugangsöffnungen angeordnet.

Die Seitenleitelemente sind vorzugsweise zumindest näherungsweise parallel zueinander angeordnet und/oder ausgebildet.

Es kann vorgesehen sein, dass ein oder mehrere Ablenkelemente, eine oder mehrere Düsen und/oder ein oder mehrere Leitelemente, insbesondere Seitenleitelemente, beabstandet von der jeweiligen Zugangsöffnung angeordnet sind, so dass ein die jeweilige Zugangsöffnung umgebender, insbesondere ebener, Trennelementabschnitt gebildet ist, längs welchem und/oder mittels welchem vorzugsweise eine möglichst störungsfreie und/oder laminare Luftströmung erzielbar ist.

Vorteilhaft kann es sein, wenn der Trennelementabschnitt insbesondere unterhalb der jeweiligen Zugangsöffnung eben ausgebildet und/oder nicht mit Ablenkelementen und/oder Leitelementen versehen ist. Hierdurch kann vorzugsweise eine Wirbelbildung vermieden werden.

Der Trennelementabschnitt erstreckt sich vorzugsweise einseitig, zweiseitig, dreiseitig oder vierseitig, insbesondere nach oben, nach unten und/oder seitlich, von der Zugangsöffnung weg, insbesondere jeweils über eine Distanz von mindestens ungefähr 50 mm, vorzugsweise mindestens ungefähr 100 mm, beispielsweise mindesten ungefähr 150 mm. Hierdurch kann eine Strömung im Bereich der Zugangsöffnung vergleichmäßigt werden.

Ein Zugriffsbereich und/oder ein mittels mindestens eines Trennelements, insbesondere mindestens einer Trennwand, von dem Behandlungsbereich abgetrennter Raumbereich ist vorzugsweise ein sogenannter Cubicle oder ein Wartungsturm oder bildet einen sogenannten Cubicle oder einen Wartungsturm.

Mittels einer Luftführungsvorrichtung ist vorzugsweise ein Luftstrom zuführbar, insbesondere zu dem einen oder den mehreren Zugriffsbereichen und/oder zu einer oder mehreren Düsen, beispielsweise zu einer oder mehreren Düsen einer oder mehrerer Luftvorhangsvorrichtungen.

Es kann vorgesehen sein, dass ein übergeordneter Gesamtluftstrom angesaugt und/oder konditioniert und dann als Luftstrom jedem Zugriffsbereich beziehungsweise jeder Luftvorhangsvorrichtung zugeführt wird. Alternativ hierzu kann vorgesehen sein, dass jeder Luftstrom für jeden Zugriffsbereich beziehungsweise jede Luftvorhangsvorrichtung separat und unabhängig von den anderen Luftströmen bereitgestellt und/oder konditioniert wird.

Der Luftstrom ist vorzugsweise aufteilbar in zwei Teilströme, wobei ein Teilstrom zu dem Zugriffsbereich und ein weiterer Teilstrom zu einer oder mehreren Düsen, beispielsweise zu einer oder mehreren Düsen einer Luftvorhangsvorrichtung, zuführbar sind. Die Aufteilung kann dabei unmittelbar stromaufwärts des Zugriffsbereichs und/oder unmittelbar stromaufwärts der einen oder der mehreren Düsen erfolgen.

Günstig kann es sein, wenn die Aufteilung manuell oder automatisch steuerbar oder regelbar ist, beispielswiese mittels eines oder mehrerer Ventile oder Klappen, wobei vorzugsweise eine Steuervorrichtung vorgesehen ist, welche ausgebildet und eingerichtet ist zur Steuerung und/oder Regelung der Aufteilung, insbesondere abhängig von Luftstromparametern im Behandlungsbereich der Behandlungsanlage und/oder abhängig von Luftstromparametern des zugeführten und/oder aufgeteilten oder aufzuteilenden Luftstroms.

Die Zuführung eines Luftstroms, insbesondere eines Teilluftstroms, zu dem Zugriffsbereich erfolgt beispielsweise über eine Filterdecke oder ein Plenum direkt über dem Zugriffsbereich. Alternativ oder ergänzend hierzu kann eine Zuführung eines Luftstroms, insbesondere eines Teilluftstroms, zu dem Zugriffsbereich über eine oder mehrere Düsen im Zugriffsbereich oder oberhalb des Zugriffsbereichs erfolgen, beispielsweise mittels einer oder mehrerer Fächerdüsen, welche beispielsweise viertelzylinderförmig und/oder im Querschnitt viertelkreisförmig ausgebildet sind und beispielsweise längs einer, zwei oder mehr als zwei Kantenbereichen zwischen einer Decke des Zugriffsbereichs und einer Trennwand angeordnet sind.

Beispielsweise können zwei einander gegenüberliegend angeordnete Düsen, insbesondere Fächerdüsen, zu beiden Seiten einer Zutrittsöffnung und/oder zu beiden Seiten einer Zugangsöffnung angeordnet sein.

Alternativ oder ergänzend zu als Fächerdüsen ausgebildeten Düsen können auch eine oder mehrere dreiecksförmige Düsen vorgesehen sein.

Günstig kann es sein, wenn eine Düse, insbesondere eine Fächerdüse, auf derjenigen Seite des Trennelements angeordnet ist, auf welcher die Zugangsöffnung angeordnet ist. Eine weitere Düse, insbesondere eine weitere Fächerdüse, ist vorzugsweise an der dieser Seite gegenüberliegenden Seite angeordnet.

Insbesondere durch die Verwendung einer Luftvorhangsvorrichtung kann es vorzugsweise ermöglicht werden, dass eine Frischluftmenge, welche beispielsweise einem oder mehreren Zugriffsbereichen zugeführt wird, nicht zusätzlich zu einer Frischluftmenge zur Einhaltung von vorgegebenen Luftparametern im Behandlungsbereich bereitgestellt und/oder zugeführt werden muss.

Vielmehr kann vorzugsweise vorgesehen sein, dass ein Anteil des Frischluftvolumentstroms an einem Umluftvolumenstrom höchstens ungefähr 20%, insbesondere höchstens ungefähr 15%, beispielsweise höchstens ungefähr 10%, vorteilhafterweise höchstens ungefähr 5%, beträgt, wenn dieser dem einen oder den mehreren Zugriffsbereichen zugeführt wird. Hierdurch kann vorzugsweise eine begehbare Atmosphäre in dem einen oder den mehreren Zugriffsbereichen erhalten werden und vorzugsweise zugleich eine explosionsfähige Atmosphäre im Behandlungsbereich vermieden werden.

Ein energetisches Optimum des zugeführten Frischluftvolumenstromanteils liegt vorzugsweise zwischen ungefähr 3% und ungefähr 7% des Umluftvolumenstroms.

Ferner kann sich vorzugsweise ein energetischer Vorteil ergeben, wenn - abhängig von klimatischen Bedingungen und abhängig von Anteil des Frischluftvolumenstroms am Umluftvolumenstrom - eine Temperaturdifferenz zwischen der Temperatur des Frischluftstroms und der Temperatur des Umluftstroms höchstens ungefähr 7°, insbesondere höchstens ungefähr 5°, vorzugsweise höchstens ungefähr 2°, beträgt.

Als ein konkretes Beispiel für einen Zugriffsbereich kann vorgesehen sein, dass dieser die folgenden Maße aufweist (jeweils Innenmaße zwischen den den Zugriffsbereich begrenzenden Wände):
Grundfläche ca. 1500 mm x 1500 mm;
Höhe ca. 2500 mm.

Ein dem jeweiligen Zugriffsbereich zugeführter Luftvolumenstrom beträgt vorzugsweise mindestens ungefähr 400 m³/h, beispielsweise mindestens ungefähr 600 m³/h, und/oder höchstens ungefähr 1500 m³/h, beispielsweise höchstens ungefähr 1000 m³/h. Insbesondere kann ein Luftvolumenstrom von beispielsweise ungefähr 860 m³/h vorteilhaft sein.

Eine Strömungsgeschwindigkeit der den Zugriffsbereich durchströmenden Luft beträgt im Mittel vorzugsweise mindestens ungefähr 0,1 m/s, beispielsweise mindestens ungefähr 0,14 m/s, und/oder höchstens ungefähr 0,3 m/s, beispielsweise höchstens ungefähr 0,16 m/s. Insbesondere kann eine solche Strömungsgeschwindigkeit von ungefähr 0,16 m/s vorteilhaft sein.

Es kann vorgesehen sein, dass die Strömungsgeschwindigkeit der den Behandlungsbereich durchströmenden Luft im Zentrum und/oder durchschnittlich vorzugsweise mindestens ungefähr 0,2 m/s, beispielsweise mindestens ungefähr 0,3 m/s, und/oder höchstens ungefähr 0,6 m/s, beispielsweise höchstens ungefähr 0,5 m/s, beträgt. Insbesondere kann eine solche Strömungsgeschwindigkeit von ungefähr 0,35 bis ungefähr 0,4 m/s vorteilhaft sein.

In einem Randbereich des Behandlungsbereichs und/oder bezüglich einer Förderrichtung vor und/oder nach dem Behandlungsbereich beträgt die Strömungsgeschwindigkeit der Luft durchschnittlich vorzugsweise mindestens ungefähr 0,1 m/s, beispielsweise mindestens ungefähr 0,2 m/s, und/oder höchstens ungefähr 0,4 m/s, beispielsweise höchstens ungefähr 0,3 m/s, beträgt. Insbesondere kann eine solche Strömungsgeschwindigkeit von ungefähr 0,22 bis ungefähr 0,28 m/s vorteilhaft sein.

Die mittlere Strömungsgeschwindigkeit, insbesondere eine Sinkgeschwindigkeit, im Behandlungsbereich ist vorzugsweise größer als die mittlere Strömungsgeschwindigkeit, insbesondere eine Sinkgeschwindigkeit, im Zugriffsbereich, oder zumindest näherungsweise gleich groß wie diese, wobei insbesondere eine Abweichung von höchstens ungefähr 5 % vorgesehen ist.

Bei einer hohen Differenz der Sinkgeschwindigkeiten vor und hinter der Zugangsöffnung entsteht ein Druckunterschied, der zur Vermischung der zwei Luftströme führen kann. Ein Luftvorhang kann diesen Austausch vorzugsweise minimieren und die Trennung der Umluft und der Frischluft stabilisieren.

Bei einer geringen Geschwindigkeit im Zugriffsbereich muss die Geschwindigkeit der den Luftvorhang bildenden Luft vorzugsweise beschleunigt werden, um eine optimale fluidwirksame Trennung zu erzielen.

Zur Optimierung einer Trennwirkung zwischen dem Behandlungsbereich und dem Zugriffsbereich kann alternativ oder ergänzend zu einem Luftvorhang eine mechanische Schließvorrichtung zum zumindest teilweisen oder vollständigen Schließen oder Abdecken der Zugangsöffnung vorgesehen sein. Beispielsweise sind eine Saloon-Klappenlösung oder ein Schiebefenster denkbar. Mechanische Schließvorrichtungen sind vorzugsweise überwachbar, insbesondere zur Vermeidung von Kollisionen von Schließelementen der Schließvorrichtung mit einer oder mehreren Aktionsvorrichtungen, wenn diese in einen Zugriffszustand gebracht werden sollen.

Die Temperaturen der Luftströme können einen Einfluss auf die fluidwirksame Trennung des Behandlungsbereichs von dem Zugriffsbereich haben. Vorzugsweise beträgt daher die Temperaturdifferenz zwischen dem Luftstrom im Behandlungsbereich und dem Luftstrom im Zugriffsbereich höchstens ungefähr 10 K, insbesondere höchstens ungefähr 7 K, beispielsweise höchstens ungefähr 4 K.

Als Zuluft für den einen oder die mehreren Zugriffsbereiche kann beispielsweise Luft aus einem Reinraum genutzt werden, welche dann beispielsweise in einem Temperaturfenster zwischen ungefähr 16 °C und ungefähr 30 °C liegen sollte, wenn die Temperatur des Umluftstroms im Behandlungsbereich ungefähr 23 °C beträgt.

Eine oder mehrere Zugangsöffnungen können beispielsweise stets geöffnet sein.

Alternativ oder ergänzend hierzu kann vorgesehen sein, dass eine oder mehrere Zugangsöffnungen verschließbar sind, insbesondere automatisch, beispielsweise motorisch, verschließbar sind. Ferner kann eine manuelle Öffnung und ein manuelles Verschließen einer oder mehrerer Zugangsöffnungen vorgesehen sein.

Zum Verschließen einer oder mehrerer Zugangsöffnungen können insbesondere eine oder mehrere Klappen und/oder Schieber vorgesehen sein.

Günstig kann es sein, wenn eine oder mehrere Zugangsöffnungen automatisch geöffnet werden, wenn und/oder sobald eine oder mehrere Aktionsvorrichtungen in einen Zugriffszustand versetzt werden und somit von dem der jeweiligen Zugangsöffnung zugeordneten Zugriffsbereich aus zugänglich sein sollen.

Vorzugsweise wird die jeweilige Zugangsöffnung beispielsweise automatisch verschlossen, wenn die Aktionsvorrichtung erneut in einen Bereitschaftszustand und/oder Behandlungszustand versetzt wird und/oder den Zugriffsbereich verlässt.

Eine oder mehrere Zugangsöffnungen, insbesondere sämtliche Zugangsöffnungen, weisen vorzugsweise eine Höhe, insbesondere eine lichte Höhe, auf, welche höchstens ungefähr 40%, beispielsweise höchstens ungefähr 20%, vorzugsweise höchstens ungefähr 10%, einer Höhe des Behandlungsraums (insbesondere Abstand Deckenwand-Bodenwand) entspricht.

Eine Breite, insbesondere lichte Breite, einer oder mehrerer Zugangsöffnungen, insbesondere sämtlicher Zugangsöffnungen, beträgt vorzugsweise höchstens ungefähr 20%, insbesondere höchstens ungefähr 10%, beispielsweise ungefähr 5%, einer Breite des Behandlungsraums (insbesondere Abstand der bezüglich einer vertikalen Längsmittelebene des Behandlungsraums einander gegenüberliegenden Seitenwände).

Vorzugsweise erstreckt sich ein mittels eines oder mehrerer Trennelemente von dem Behandlungsbereich abgetrennter Raumbereich des Behandlungsraums, welcher insbesondere den Zugriffsbereich umfasst oder diesen bildet, über mindestens ungefähr 50%, vorzugsweise mindestens ungefähr 80%, insbesondere über eine gesamte Höhe des Behandlungsraums (insbesondere Abstand Bodenwand-Deckenwand).

Günstig kann es sein, wenn eine oder mehrere Zugangsöffnungen in einem oder mehreren Trennelementen, insbesondere Trennwänden, angeordnet sind, wobei das eine oder die mehreren Trennelemente insbesondere quer, vorzugsweise zumindest näherungsweise senkrecht, zu einer Förderrichtung und/oder Führungsrichtung angeordnet sind.

Günstig kann es sein, wenn die eine oder die mehreren Zugangsöffnungen in einer oberen Hälfte und/oder in einem oberen oder mittleren Drittel eines Behandlungsraums der Behandlungsanlage angeordnet sind.

Insbesondere kann vorgesehen sein, dass eine oder mehrere Zugangsöffnungen mindestens ungefähr 80 cm, beispielsweise mindestens ungefähr 1 m, und/oder höchstens ungefähr 1,80 m, beispielsweise höchstens ungefähr 1,50 m, über einem begehbaren Boden in dem mittels eines oder mehrerer Trennelemente abgetrennten Raumbereich des Behandlungsraums angeordnet sind, insbesondere bezogen auf einen Mittelpunkt der jeweiligen Zugangsöffnung. Hierdurch kann eine einfache Zugänglichkeit eines oder mehrerer Aktionselemente einer oder mehrerer Aktionsvorrichtungen für eine Person ermöglicht werden.

Mindestens ein Zugriffsbereich ist so vorzugsweise aus einer oder zwei parallel zur Förderrichtung und/oder parallel zu einer Führungsrichtung verlaufenden Richtungen von dem Behandlungsbereich oder einem zwischen dem Behandlungsbereich und dem jeweiligen Zugriffsbereich angeordneten Zwischenbereich aus zugänglich.

Alternativ oder ergänzend hierzu kann vorgesehen sein, dass eine oder mehrere Zugangsöffnungen in einem oder mehreren Trennelementen, insbesondere Trennwänden, angeordnet sind, wobei das eine oder die mehreren Trennelemente zumindest näherungsweise parallel zur Förderrichtung und/oder Führungsrichtung angeordnet und/oder ausgerichtet sind.

Ein oder mehrere Zugriffsbereiche, insbesondere sämtliche Zugriffsbereiche, sind vorzugsweise näher an einer vertikalen Längsmittelebene des Behandlungsraums angeordnet oder erstrecken sich weiter in Richtung der vertikalen Längsmittelebene des Behandlungsraums als ein oder mehrere, insbesondere sämtliche, Führungselemente zur Führung der dem jeweiligen Zugriffsbereich zugeordneten Aktionsvorrichtungen.

Ein oder mehrere Trennelemente, insbesondere sämtliche Trennelemente, welche den mindestens einen Zugriffsbereich und den Behandlungsbereich voneinander trennen, sind vorzugsweise an einer dem Behandlungsbereich zugewandten Innenseite der dem Behandlungsraum umgebenden Seitenwände angeordnet und/oder festgelegt.

Insbesondere bildet vorzugsweise mindestens ein Abschnitt mindestens einer Seitenwand eine oder mehrere Begrenzungswände eines oder mehrerer Zugriffsbereiche. Günstig kann es sein, wenn in dem einen oder den mehreren Abschnitten der jeweiligen Seitenwand eine oder mehrere Zutrittsöffnungen, insbesondere eine oder mehrere Türen, angeordnet sind, so dass der mittels des einen oder der mehreren Trennelemente von dem Behandlungsbereich abgetrennte Raumbereich des Behandlungsraums von außerhalb des Behandlungsraums für eine oder mehrere Personen zugänglich ist. Vorteilhaft kann es sein, wenn eine oder mehrere Zugangsöffnungen jeweils mehrere Öffnungsabschnitte aufweisen, mittels welcher unterschiedlich dimensionierte freie Querschnitte der jeweiligen Zugangsöffnung freigebbar oder sperrbar sind.

Günstig kann es sein, wenn beispielsweise abhängig von einem jeweiligen Betriebsmodus der Behandlungsanlage und/oder abhängig von einer jeweiligen Wartungsaktion oder Rüstaktion an einer oder mehreren Aktionsvorrichtungen unterschiedliche Öffnungsabschnitte der einen oder der mehreren Zugangsöffnungen freigebbar oder sperrbar sind, insbesondere mittels eines oder mehrerer mechanischer Schließelemente.

Ferner kann vorgesehen sein, dass eine oder mehrere oder sämtliche Zugangsöffnungen vollständig sperrbar sind, beispielsweise durch Verschließen sämtlicher Öffnungsabschnitte der jeweiligen Zugangsöffnung.

Die Öffnungsabschnitte können einander überlappend, aneinander angrenzend oder beabstandet voneinander angeordnet oder ausgebildet sein.

Vorteilhaft kann es sein, wenn ein oder mehrere oder sämtliche Öffnungsabschnitte mechanisch verschließbar sind, beispielsweise mittels einer oder mehrere Klappen oder Türen, welche beispielsweise mittels eines oder mehrerer Scharniere oder Schiebeelemente wahlweise in eine Offenstellung oder in eine Sperrstellung bringbar sind.

Günstig kann es sein, wenn ein oder mehrere oder sämtliche Sperrelemente zum Verschließen eines oder mehrerer oder sämtlicher Öffnungsabschnitte einer oder mehrerer oder sämtlicher Zugangsöffnungen teilweise oder vollständig transparent, insbesondere für Personen durchsichtig, ausgebildet sind. Insbesondere kann vorgesehen sein, dass ein oder mehrere oder sämtliche Sperrelemente aus einem transparenten Material gebildet sind oder ein solches umfassen. Alternativ oder ergänzend hierzu kann vorgesehen sein, dass ein oder mehrere oder sämtliche Sperrelemente nicht vollständig durchgängig, sondern beispielsweise unterbrochen, beispielsweise gitterartig, ausgebildet und/oder angeordnet sind.

Vorteilhaft kann es sein, wenn ein oder mehrere oder sämtliche Sperrelemente automatisch, insbesondere selbsttätig und/oder maschinell angetrieben, in eine Sperrstellung und/oder in eine Offenstellung bringbar sind.

Alternativ oder ergänzend hierzu kann ferner vorgesehen sein, dass ein oder mehrere oder sämtliche Sperrelemente manuell, insbesondere von einer Person, beispielsweise einem Werker, in eine Sperrstellung und/oder in eine Offenstellung bringbar sind.

Eine Stellung einer oder mehrerer oder sämtlicher Sperrelemente ist vorzugsweise mittels einer Steuervorrichtung ermittelbar, insbesondere sensorisch erfassbar.

Bei einer Ausgestaltung der Erfindung kann vorgesehen sein, dass eine Zutrittsöffnung, durch welche eine Person, insbesondere ein Werker, Zutritt zu dem Zugriffsbereich hat, nur dann öffenbar ist, wenn ein oder mehrere oder sämtliche Sperrelemente in einer jeweils vorgegebenen Stellung angeordnet sind. Die Zutrittsöffnung kann dabei insbesondere mechanisch oder pneumatisch verschlossen oder verschließbar sein, um den Zutritt zu verwehren.

Alternativ oder ergänzend zu den vorstehenden Varianten eines oder mehrerer oder sämtlicher Sperrelemente kann es vorgesehen sein, dass ein oder mehrere oder sämtliche Sperrelemente mittels einer Aktionsvorrichtung betätigbar sind, insbesondere mittels derjenigen Aktionsvorrichtung auf welche ein Zugriff im Zugriffsbereich erfolgen soll. Beispielsweise kann vorgesehen sein, dass mittels einer Aktionsvorrichtung ein oder mehrere oder sämtliche Sperrelemente einer Zugangsöffnung betätigbar, insbesondere aufdrückbar oder sonstwie in die Offenstellung bringbar, sind, wenn die Aktionsvorrichtung durch die Zugangsöffnung hindurchgreift oder hindurchragt oder an dieselbe heranragt. Bei einem Entfernen der Aktionsvorrichtung von der Zugangsöffnung sind das eine oder die mehreren oder sämtliche Sperrelemente vorzugsweise zurück in eine Sperrstellung bringbar, insbesondere können diese automatisch rückstellend ausgebildet sein.

Es kann vorgesehen sein, dass mittels einer oder mehrerer Düsen der Behandlungsanlage ein Luftvorhang erzeugt wird, mittels welchem der Behandlungsbereich und der mindestens eine Zugriffsbereich voneinander getrennt werden.

Eine oder mehrere Personen können insbesondere in den Zugriffsbereich eintreten.

Die eine oder die mehreren Zutrittsöffnungen sind vorzugsweise verschließbar, insbesondere um einen unerwünschten Luftaustausch mit einer Umgebung der Behandlungsanlage zu vermeiden.

Zur Minimierung eines Luftaustauschs und/oder zur Minimierung eines Eintrags von Verunreinigungen in den Behandlungsraum kann vorgesehen sein, dass die Zutrittsöffnung eine Schleuse und/oder einen Luftvorhang und/oder eine Druckluftdusche, etc. umfasst.

Der Zugriffsbereich ist vorzugsweise für eine Person von außerhalb einer Einhausung der Behandlungsanlage durch die Zutrittsöffnung, insbesondere eine Tür, hindurch zugänglich.

Der Zugriffsbereich ist vorzugsweise für eine oder mehrere Aktionsvorrichtungen ausgehend von dem Behandlungsbereich durch eine Zugangsöffnung hindurch zugänglich.

Insbesondere ist vorgesehen, dass der Zugriffsbereich für die eine oder die mehreren Aktionsvorrichtungen unmittelbar von dem Behandlungsbereich aus durch die Zugangsöffnung hindurch zugänglich ist.

Ferner ist insbesondere vorgesehen, dass der Zugriffsbereich unmittelbar von außerhalb der Einhausung der Behandlungsanlage aus durch die Zutrittsöffnung hindurch für eine Person zugänglich ist. Die Person muss insbesondere nicht durch den Behandlungsbereich hindurchtreten, um in den Zugriffsbereich zu gelangen.

Vorzugsweise kommt die Person nicht mit der Atmosphäre des Behandlungsbereichs in Kontakt, um zu dem Zugriffsbereich zu gelangen.

Der Zugriffsbereich hat vorzugsweise eine von dem Behandlungsbereich verschiedene Gaszusammensetzung, insbesondere geringere Schadstoffbelastung, beispielsweise eine geringere Lösemittelkonzentration.

Im Zugriffsbereich herrscht vorzugsweise dauerhaft eine Atmosphäre, welche einen ungeschützten Aufenthalt einer Person ermöglicht, während im Behandlungsbereich eine höhere Schadstoffkonzentration, insbesondere höhere Lösemittelkonzentration, vorliegen kann, insbesondere mit einer Schadstoffbelastung, beispielsweise Lösemittelkonzentration, welche über einer maximalen Arbeitsplatzkonzentration liegt.

Bei einer Ausgestaltung der Erfindung kann vorgesehen sein, dass die Behandlungsanlage eine Luftführungsvorrichtung umfasst, welche eine Umluftführungsvorrichtung und/oder eine Zuluftführungsvorrichtung umfasst.

Mittels der Umluftführungsvorrichtung ist vorzugsweise ein Umluftstrom mehrfach durch den Behandlungsbereich hindurchführbar.

Mittels der Zuluftführungsvorrichtung ist vorzugsweise ein Zuluftstrom, insbesondere ein Frischluftstrom und/oder ein Hallenluftstrom, zu dem einen oder den mehreren Zugriffsbereichen zuführbar.

Insbesondere ist mittels der Zuluftführungsvorrichtung jeweils ein Zuluftstrom zu jedem der mittels eines oder mehrerer Trennelemente von dem Behandlungsbereich abgetrennten Raumbereiche des Behandlungsraums zuführbar.

Zuluft allgemein ist beispielsweise Frischluft und/oder Hallenluft. Die Zuluft kann aus der jeweiligen Quelle (beispielsweise aus der Umgebung und/oder aus der Halle) unkonditioniert und/oder unverändert zugeführt werden. Alternativ hierzu kann eine konditionierte Zuführung erfolgen, bei welcher die Zuluft insbesondere durch Erwärmen, Kühlen, Befeuchten und/oder Entfeuchten konditioniert wurde oder wird.

Mittels der Luftführungsvorrichtung ist vorzugsweise eine getrennte Luftzuführung zu dem einen oder den mehreren Zugriffsbereichen einerseits und dem Behandlungsbereich andererseits möglich, wodurch insbesondere unterschiedliche Schadstoffbelastungen, insbesondere Lösemittelkonzentrationen, erhältlich, insbesondere einstellbar, sind. Vorzugsweise kann hierdurch im Sinne eines optimalen Personenschutzes die Schadstoffbelastung in dem einen oder den mehreren Zugriffsbereichen minimiert werden, während beispielsweise im Sinne eines möglichst energiesparenden Betriebs der Behandlungsanlage die durch den Behandlungsbereich geführte Luft mehrfach umgewälzt wird und somit ein Reinigungsaufwand bei der Reinigung von Abluft sowie ein Konditionieraufwand zur Konditionierung der insgesamt benötigten Luft minimiert wird.

Vorteilhaft kann es sein, wenn mittels der Umluftführungsvorrichtung der Umluftstrom aus dem Behandlungsbereich und der Zuluftstrom aus dem einen oder den mehreren Zugriffsbereichen zu einem Gesamtstrom zusammenführbar sind.

Mittels der Umluftführungsvorrichtung ist vorzugsweise zumindest ein Teilvolumenstrom des Gesamtstroms als Umluftstrom erneut dem Behandlungsbereich zuführbar.

Mittels einer Abluftführung ist vorzugsweise ein Teilvolumenstrom des Gesamtstroms als Abluft abführbar.

Insbesondere wird der Gesamtstrom vorzugsweise stromabwärts einer Abscheidevorrichtung zum Reinigen des Gesamtstroms aufgeteilt in den Teilvolumenstrom, welcher erneut dem Behandlungsbereich zugeführt wird und in den Abluftstrom, welcher gereinigt wird, beispielsweise mittels einer thermischen Reinigungsvorrichtung, insbesondere einer regenerativen thermischen Abgasreinigungsvorrichtung, und schließlich an die Umgebung abgegeben oder anderweitig weiterverwendet wird.

Vorteilhaft kann es sein, wenn ein oder mehrere, insbesondere sämtliche, Zugriffsbereiche vorzugsweise jeweils einen Einlass aufweisen, welcher insbesondere an einem bezüglich der Schwerkraftrichtung oberen Ende eines mittels des einen oder der mehreren Trennelemente von dem Behandlungsbereich abgetrennten Raumbereichs des Behandlungsraums angeordnet ist.

Der Einlass ist insbesondere in einem Deckenbereich, insbesondere einer Deckenwand, des Behandlungsraums angeordnet.

Ferner kann vorgesehen sein, dass ein oder mehrere, insbesondere sämtliche, Zugriffsbereiche vorzugsweise jeweils einen Auslass aufweisen, welcher insbesondere an einem bezüglich der Schwerkraftrichtung unteren Ende eines mittels des einen oder der mehreren Trennelemente von dem Behandlungsbereich abgetrennten Raumbereichs des Behandlungsraums angeordnet ist.

Ein oder mehrere Auslässe münden vorzugsweise in den Behandlungsbereich, insbesondere an einem bezüglich der Schwerkraftrichtung unteren Bodenbereich des Behandlungsbereichs.

Günstig kann es sein, wenn ein oder mehrere oder sämtliche Auslässe hinsichtlich einer jeweiligen Querschnittsfläche zur Einstellung, insbesondere zur Steuerung oder Regelung, eines Volumenstroms einstellbar sind, beispielsweise manuell oder automatisch mittels einer Ventilvorrichtung oder Klappenvorrichtung. Hierdurch kann insbesondere auf die Strömungsverhältnisse und/oder Strömungsführung innerhalb des Behandlungsraums und/oder innerhalb des mindestens einen Zugriffsbereichs eingewirkt werden.

Alternativ oder ergänzend hierzu kann vorgesehen sein, dass ein oder mehrere, insbesondere sämtliche, Zugriffsbereiche keinen separaten Auslass aufweisen, sondern dass die einen oder die mehreren Zugangsöffnungen den einzigen Auslass für den dem Zugriffsbereich zugeführten Luftstrom bilden.

Ferner kann vorgesehen sein, dass ein oder mehrere Auslässe in einen unterhalb des Behandlungsraums angeordneten Rohgasschacht münden, so dass insbesondere vorgesehen ist, dass die aus den Zugriffsbereichen abgeführte Luft erst stromabwärts des Behandlungsbereichs mit der aus dem Behandlungsbereich abgeführten Luft zusammengeführt wird.

Die Strömungsquerschnitte der einen oder der mehreren Zugangsöffnungen sowie des einen oder der mehreren Auslässe sind vorzugsweise so gewählt, dass die über den einen oder die mehreren Einlässe zugeführte Zuluft, insbesondere Frischluft und/oder Hallenluft, aus dem Zugriffsbereich durch die Zugangsöffnung hindurch in Richtung des Behandlungsbereichs strömt.

Alternativ oder ergänzend hierzu kann vorgesehen sein, dass ein oder mehrere Zugangsöffnungen und/oder ein oder mehrere Auslässe insbesondere hinsichtlich des jeweiligen Strömungsquerschnitts so dimensioniert sind, dass insbesondere bei geeignet gewähltem Volumenstrom des über einen oder mehrere Einlässe zugeführten Zuluftstroms durch die eine oder die mehreren Zugangsöffnungen ein Luftstrom erzeugt wird, welcher aus dem Behandlungsbereich in den Zugriffsbereich hinein gerichtet ist.

Bei einer Weiterbildung der Erfindung kann vorgesehen sein, dass die durch den Zugriffsbereich hindurchgeführte Zuluft, insbesondere Frischluft und/oder Hallenluft, vorzugsweise ohne oder mit lediglich geringer Verunreinigung durch die durch den Behandlungsbereich geführte Umluft zum Spülen eines oder mehrerer Führungselemente genutzt wird, insbesondere um einen unerwünschten Austritt von Umluft im Bereich des einen oder der mehreren Führungselemente zu vermeiden und/oder zumindest zu minimieren.

Die Zuluftzumischung zu der Umluft ergibt sich dann insbesondere im Bereich des einen oder der mehreren Führungselemente.

Vorteilhaft kann es sein, wenn die Behandlungsanlage eine Steuervorrichtung umfasst, mittels welcher die Behandlungsanlage wahlweise in verschiedene Betriebsmodi versetzbar ist.

Insbesondere sind einer oder mehrere der folgenden Betriebsmodi vorgesehen:
a) Ein Behandlungsmodus, in welchem ein oder mehrere Werkstücke in dem Behandlungsbereich mittels einer oder mehrerer Aktionsvorrichtungen behandelt werden, wobei sich vorzugsweise keine Person in dem einen oder den mehreren Zugriffsbereichen aufhält oder aufhalten kann. Ein solcher Behandlungsmodus dient insbesondere zur Minimierung eines Zuluftbedarfs, wobei dann insbesondere in den Zugriffsbereichen keine für Personen ungeschützt zugängliche Atmosphäre herrscht.
b) Ein Sicherheitsmodus, in welchem ein oder mehrere Werkstücke in dem Behandlungsbereich mittels einer oder mehrerer Aktionsvorrichtungen behandelt werden, wobei sich vorzugsweise mindestens eine Person in dem einen oder den mehreren Zugriffsbereichen aufhält oder aufhalten kann. In einem solchen Sicherheitsmodus herrscht vorzugsweise in dem einen oder den mehreren Zugriffsbereichen eine Atmosphäre mit derart geringer Schadstoffbelastung, dass ein ungeschützter Aufenthalt für Personen ermöglicht ist. Insbesondere ist eine Schadstoffbelastung unterhalb der zulässigen maximalen Arbeitsplatzkonzentrationen in dem einen oder den mehreren Zugriffsbereichen vorgesehen, wenn die Behandlungsanlage in dem Sicherheitsmodus betrieben wird. Die Behandlungsanlage kann insbesondere in den Sicherheitsmodus versetzt werden, um Wartungs- und/oder Rüstaktionen an den Aktionsvorrichtungen durchführen zu können, während gleichzeitig im Behandlungsbereich weitere Behandlungsvorgänge an den Werkstücken durchgeführt werden. Es ist somit vorzugsweise kein vollständiger Stillstand der Behandlungsanlage erforderlich, um zumindest einzelne Wartung- und/oder Rüstaktionen an der einen oder den mehreren Aktionsvorrichtungen durchführen zu können.
c) Ein Wartungsmodus, in welchem keine Behandlung von Werkstücken im Behandlungsbereich erfolgt. Die Behandlungsanlage wird vorzugsweise nur dann in den Wartungsmodus versetzt, wenn Komponenten oder Bauteile der Behandlungsanlage gewartet werden müssen, welche auch in einem Zugriffszustand einer oder mehrerer Aktionsvorrichtungen nicht in einem Zugriffsbereich oder von dem Zugriffsbereich aus zugänglich sind.

Beispielsweise unter Verwendung eines oder mehrerer Sensoren, welche beispielsweise in oder an einer oder mehreren Zutrittsöffnungen angeordnet sind, und/oder auf der Basis einer Wartungsprädiktion und/oder eines Wartungsplans kann die Behandlungsanlage vorzugsweise mittels der Steuervorrichtung automatisch nach Bedarf in den Behandlungsmodus, den Sicherheitsmodus oder den Wartungsmodus versetzt werden.

Ferner können vorzugsweise eine oder mehrere Aktionsvorrichtungen hinsichtlich einer oder mehrerer Funktionen automatisch mittels der Steuervorrichtung deaktiviert werden, insbesondere wenn die jeweilige Aktionsvorrichtung in den Zugriffszustand versetzt wird. Beispielsweise kann vorgesehen sein, dass eine an einem Aktionselement einer Aktionsvorrichtung anliegende Hochspannung abgeschaltet wird, wenn sich das betreffende Aktionselement dem Zugriffsbereich nähert und/oder in den Zugriffsbereich hineinbewegt wird.

Günstig kann es sein, wenn die Behandlungsanlage mehrere Sicherheitsbereiche und/oder Sicherheitsstufen aufweist, welche insbesondere hinsichtlich des Gefährdungsgrads für eine Person und/oder hinsichtlich einer Verunreinigungs- und/oder Beschädigungswahrscheinlichkeit eines Werkstücks abgestuft sind.

Insbesondere sind die Sicherheitsbereiche und/oder Sicherheitsstufen so angeordnet, dass mit zunehmendem Abstand von dem Behandlungsbereich eine zunehmend geringere Gefahrenstufe vorgesehen ist.

In den einzelnen Sicherheitsbereichen und/oder Sicherheitsstufen können insbesondere unterschiedliche Bewegungsgeschwindigkeiten der Werkstücke und/oder der Aktionsvorrichtungen, insbesondere der Aktionselemente, vorgesehen sein, wobei vorzugsweise in dem Behandlungsbereich selbst die höchsten Bewegungsgeschwindigkeiten zulässig sind, während in dem Zugriffsbereich oder sonstigen für Personen zugänglichen Bereichen vorzugsweise die geringsten Geschwindigkeiten zulässig sind. Dazwischen können Zwischenbereiche, insbesondere Zwischenstufen, vorgesehen sein, um Übergangsbereiche zwischen hohen und niedrigen Bewegungsgeschwindigkeiten zu schaffen.

Günstig kann es sein, wenn die Behandlungsanlage eine oder mehrere automatische Wartungsvorrichtungen, insbesondere Reinigungsvorrichtungen, für jeweils ein oder mehrere Aktionselemente umfasst. Insbesondere kann eine automatische Reinigungsvorrichtung ein sogenannter Bell Cleaner zum Reinigen eines oder mehrerer Aktionselemente sein, wobei das eine oder die mehreren Aktionselemente insbesondere Applikationsköpfe, insbesondere Sprühköpfe, sein können.

Die eine oder die mehreren automatischen Wartungsvorrichtungen, insbesondere Reinigungsvorrichtungen, können beispielsweise außerhalb des Zugriffsbereichs und/oder auf einer dem Behandlungsraum zugewandten Seite des einen oder der mehreren Trennelemente, insbesondere Trennwände, angeordnet sein.

Alternativ oder ergänzend hierzu kann vorgesehen sein, dass eine oder mehrere automatische Wartungsvorrichtungen, insbesondere Reinigungsvorrichtungen, innerhalb des Zugriffsbereichs und/oder auf einer dem Behandlungsraum abgewandten Seite des einen oder der mehreren Trennelemente, insbesondere Trennwände, angeordnet sind.

Vorteilhaft kann es sein, wenn im Sicherheitsmodus eine oder mehrere Aktionsvorrichtungen, insbesondere eine oder mehrere Aktionselemente der einen oder der mehreren Aktionsvorrichtungen, insbesondere zeitlich nacheinander in den mindestens einen Zugriffsbereich hinein und/oder an den mindestens einen Zugriffsbereich heran bewegbar sind, so dass von einer Person eine Wartungsaktion und/oder eine Rüstaktion durchführbar ist. Insbesondere ist dabei vorgesehen, dass in dem Sicherheitsmodus die Werkstückbehandlung, insbesondere eine Werkstückbeschichtung, nicht unterbrochen wird.

Die eine oder die mehreren Aktionsvorrichtungen, welche in einen Zugriffszustand versetzt werden, insbesondere um eine Wartungsaktion und/oder eine Rüstaktion durchzuführen, werden hinsichtlich ihrer Funktion vorzugsweise von einer oder mehreren weiteren Aktionsvorrichtungen der Behandlungsanlage zumindest temporär ersetzt.

Die Behandlungsanlage, insbesondere die Aktionsvorrichtungen, sind vorzugsweise in einem Degrademodus betreibbar, in welchem sämtliche für die Behandlung der Werkstücke erforderlichen Aktionen denjenigen Aktionsvorrichtungen zugewiesen werden, welche nicht in einem Zugriffszustand und/oder Störzustand im Falle einer Störung oder eines Defekts, sondern in einem Bereitschaftszustand und/oder Behandlungszustand vorliegen.

Günstig kann es sein, wenn die Behandlungsanlage mehr Aktionsvorrichtungen aufweist, als für die Durchführung der zur Behandlung der Werkstücke erforderlichen Aktionen benötigt werden. Somit können nacheinander jeweils einzelne oder mehrere Aktionsvorrichtungen temporär von einzelnen Aufgaben entbunden und zur Durchführung einer oder mehrerer Wartungsaktionen und/oder Rüstaktionen in den Zugriffszustand versetzt werden.

Es kann vorgesehen sein, dass die Behandlungsanlage eine Fördervorrichtung umfasst, mittels welcher die Werkstücke längs einer Förderrichtung in den Behandlungsbereich hinein, durch den Behandlungsbereich hindurch und/oder aus dem Behandlungsbereich heraus förderbar sind.

Vorzugsweise sind mindestens zwei Zugriffsbereiche vorgesehen, welche auf einander gegenüberliegenden Seiten einer parallel zur Förderrichtung verlaufenden vertikalen Längsmittelebene der Behandlungsanlage angeordnet und/oder ausgebildet sind.

Die Werkstücke sind somit insbesondere beidseitig zugänglich, wobei vorzugsweise eine gleichzeitige beidseitige Behandlung und/oder nacheinander alternierend jeweils eine einseitige Behandlung der Werkstücke vorgesehen sein kann.

Alternativ oder ergänzend hierzu kann vorgesehen sein, dass mindestens zwei Zugriffsbereiche vorgesehen sind, von welchen mindestens ein Zugriffsbereich bezüglich der Förderrichtung vor einem Behandlungsbereich angeordnet ist und von welchem mindestens ein weiterer Zugriffsbereich bezüglich der Förderrichtung hinter dem Behandlungsbereich angeordnet ist.

Vorzugsweise sind somit mindestens zwei Zugriffsbereiche vorgesehen, welche bezüglich einer senkrecht zur Förderrichtung verlaufenden Quermittelebene des Behandlungsbereichs und/oder der Behandlungsanlage einander gegenüberliegend angeordnet sind.

Insbesondere kann vorgesehen sein, dass jedem Behandlungsbereich zwei oder vier Zugriffsbereiche zugeordnet sind, wobei die Zugriffsbereiche insbesondere in Eckbereichen eines den Behandlungsbereich umgebenden Behandlungsraums angeordnet sind.

Unterhalb des Behandlungsbereichs, insbesondere direkt unter dem Behandlungsraum, ist vorzugsweise eine Abscheidevorrichtung zum Abscheiden von Verunreinigungen aus einem durch den Behandlungsbereich geführten Luftstrom angeordnet.

Die Abscheidevorrichtung ist insbesondere mittels eines Rohgasschachts der Behandlungsanlage mit dem Behandlungsbereich strömungswirksam verbunden.

Der aus dem Behandlungsbereich abgeführte Luftstrom ist insbesondere über den Rohgasschacht einer oder mehreren Abscheideeinheiten der Abscheidevorrichtung zuführbar.

Der Rohgasschacht ist insbesondere im Wesentlichen mittig unterhalb des Behandlungsraums angeordnet. Insbesondere erstreckt sich der Rohgasschacht vorzugsweise längs einer Förderrichtung der Behandlungsanlage, beispielsweise direkt unterhalb der Fördervorrichtung.

Über dem Behandlungsbereich, insbesondere direkt über dem Behandlungsraum, ist vorzugsweise ein Plenum zur Zuführung von Luft zu dem Behandlungsbereich angeordnet.

Das Plenum kann beispielsweise ein Split-Plenum, das heißt ein geteiltes Plenum, sein, mittels welchem zu unterschiedlichen Bereichen des Behandlungsraums unterschiedliche Luftströme zuführbar sind. Beispielsweise kann mittels eines Split-Plenums Umluft zu dem Behandlungsbereich zugeführt werden, während beispielsweise Zuluft, insbesondere Frischluft und/oder Hallenluft, zu einem oder mehreren Zugriffsbereichen zugeführt wird.

Die Behandlungsanlage umfasst ferner vorzugsweise einen oder mehrere Ventilatoren zum Antreiben einer oder mehrerer Luftströmungen, insbesondere zum Antreiben des Umluftstroms und/oder des Zuluftstroms und/oder des Abluftstroms.

Insbesondere kann durch die Verwendung eines Split-Plenums und/oder durch die Verwendung von zusätzlichen Düsen eine Aufteilung des Behandlungsraums in Bereiche mit unterschiedlichen Sinkgeschwindigkeiten realisiert werden.

Insbesondere kann vorgesehen sein, dass dem Behandlungsbereich ein Luftstrom, insbesondere ein Umluftstrom, mit einer höheren Sinkgeschwindigkeit zugeführt wird als ein oder mehrere Luftströme zu einem oder mehreren weiteren Bereichen, insbesondere einem oder mehreren Zugriffsbereichen.

Beispielsweise kann vorgesehen sein, dass der Behandlungsraum insbesondere längs der Förderrichtung in Bereiche mit unterschiedlichen Sinkgeschwindigkeiten eingeteilt ist, wobei ein Bereich mit maximaler Sinkgeschwindigkeit vorzugsweise mittig im Behandlungsbereich angeordnet ist oder den Behandlungsbereich umfasst. Bezüglich der Förderrichtung vor und/oder nach dem Bereich mit maximaler Sinkgeschwindigkeit sind vorzugsweise ein oder zwei oder mehr als zwei Bereiche mit reduzierter Sinkgeschwindigkeit vorgesehen, wobei die Sinkgeschwindigkeit vorzugsweise mit zunehmendem Abstand von dem Bereich mit maximaler Sinkgeschwindigkeit abnimmt.

Vorzugsweise ist vorgesehen, dass eine Sinkgeschwindigkeit im Bereich mit maximaler Sinkgeschwindigkeit mindestens ungefähr 0,25 m/s, beispielsweise mindestens ungefähr 0,3 m/s, und/oder höchstens ungefähr 0,5 m/s, beispielsweise höchstens ungefähr 0,4 m/s, insbesondere ungefähr 0,35 m/s, beträgt.

In einem oder beiden sich unmittelbar daran anschließenden Bereichen beträgt die Sinkgeschwindigkeit vorzugsweise mindestens ungefähr 0,15 m/s, beispielsweise mindestens ungefähr 0,2 m/s, und/oder höchstens ungefähr 0,4 m/s, beispielsweise höchstens ungefähr 0,3 m/s, insbesondere ungefähr 0,25 m/s.

Mit weiterem Abstand von dem Bereich mit maximaler Sinkgeschwindigkeit ist vorzugsweise mindestens ein Bereich mit einer Sinkgeschwindigkeit von mindestens ungefähr 0,05 m/s, beispielsweise mindestens ungefähr 0,08 m/s, und/oder höchstens ungefähr 0,3 m/s, beispielsweise höchstens ungefähr 0,2 m/s, insbesondere ungefähr 0,1 m/s, vorgesehen.

Für die Zuführung von Luft zu einer oder mehreren oder sämtlichen Zugriffsbereichen ist vorzugsweise mindestens eine separate Luftführung vorgesehen.

Das Behandlungsverfahren ist insbesondere ein Verfahren zum Behandeln von Werkstücken, insbesondere Fahrzeugkarosserien.

Vorzugsweise werden bei dem Verfahren mittels einer oder mehrerer Aktionsvorrichtungen in einem Behandlungsbereich eine oder mehrere Aktionen an den Werkstücken durchgeführt.

Eine oder mehrere Aktionsvorrichtungen werden ferner vorzugsweise in einen Zugriffszustand versetzt und sind dann vorzugsweise von mindestens einem Zugriffsbereich aus und/oder an mindestens einem Zugriffsbereich zugänglich, insbesondere zur Durchführung von Wartungsaktionen und/oder Rüstaktionen.

Die Behandlungsanlage wird vorzugsweise wahlweise in verschiedenen Betriebsmodi betrieben, wobei insbesondere einer oder mehrere der folgenden Betriebsmodi vorgesehen sind:
ein Behandlungsmodus, in welchem ein oder mehrere Werkstücke in dem Behandlungsbereich mittels einer oder mehrerer Aktionsvorrichtungen behandelt werden,
wobei sich vorzugsweise keine Person in dem einen oder den mehreren Zugriffsbereichen aufhält oder aufhalten kann; und/oder ein Sicherheitsmodus, in welchem ein oder mehrere Werkstücke in dem Behandlungsbereich mittels einer oder mehrerer Aktionsvorrichtungen behandelt werden, wobei sich vorzugsweise mindestens eine Person in dem einen oder den mehreren Zugriffsbereich aufhält oder aufhalten kann; und/oder ein Wartungsmodus, in welchem keine Behandlung von Werkstücken im Behandlungsbereich erfolgt.

Günstig kann es sein, wenn nacheinander voneinander verschiedene Aktionsvorrichtungen in einen Zugriffszustand gebracht werden und wenn an denselben jeweils mindestens eine Wartungsaktion und/oder eine Rüstaktion durchgeführt wird, während im Behandlungsbereich mittels einer oder mehrerer Aktionsvorrichtungen, welche nicht in dem Zugriffszustand sind, eine oder mehrere Behandlungsaktionen zur Behandlung der Werkstücke durchgeführt werden, insbesondere fortgesetzt werden und/oder ununterbrochen aufrecht erhalten werden.

Insbesondere kann vorgesehen sein, dass mehrere Aktionsvorrichtungen einander überlappende Aufgabenbereiche aufweisen, um Wartungs- und/oder Rüstzeiten durch alternierende Nutzung der Aktionsvorrichtungen überbrücken zu können.

Bei einer Ausgestaltung der Erfindung kann vorgesehen sein, dass beispielsweise mindestens eine als Außenlackierroboter ausgebildete Aktionsvorrichtung abhängig von der Verfügbarkeit und/oder abhängig von einem Funktionsumfang der einen oder der mehreren übrigen Aktionsvorrichtungen mindestens eine Zusatzaufgabe erfüllt, beispielsweise eine Innenlackieraktion und/oder eine Handhabungsaktion, insbesondere einen Öffnungs- oder Schließvorgang an einer Karosseriehaube oder Tür des Werkstücks.

Ferner kann bei einer Ausgestaltung der Erfindung vorgesehen sein, dass beispielsweise mindestens eine als Innenlackierroboter ausgebildete Aktionsvorrichtung abhängig von der Verfügbarkeit und/oder abhängig von einem Funktionsumfang der einen oder der mehreren übrigen Aktionsvorrichtungen mindestens eine Zusatzaufgabe erfüllt, beispielsweise eine Außenlackieraktion oder eine Handhabungsaktion, insbesondere einen Öffnungs- oder Schließvorgang an einer Karosseriehaube oder Tür des Werkstücks.

Günstig kann es sein, wenn eine oder mehrere Handhabungsaktionen, insbesondere ein oder mehrere Öffnungs- oder Schließvorgänge an einer Karosseriehaube oder Tür des Werkstücks, von mehreren Aktionsvorrichtungen, insbesondere von mehreren hinsichtlich ihrer Hauptaufgabe verschiedener Aktionsvorrichtungen, durchführbar sind. Beispielsweise ist mittels mehrerer als Lackierroboter ausgebildeter Aktionsvorrichtungen dieselbe mindestens eine Handhabungsaktion durchführbar.

Günstig kann es sein, wenn die mindestens eine Handhabungsaktion abhängig von Prozessdetails des Behandlungsvorgangs zur Behandlung der Werkstücke variierend, insbesondere abwechselnd, von den Aktionsvorrichtungen durchführbar ist. Insbesondere kann eine Steuervorrichtung vorgesehen sein, welche derart ausgebildet und eingerichtet ist, dass mittels dieser Steuervorrichtung abhängig von Prozessdetails des Behandlungsvorgangs auswählbar ist, welche der Aktionsvorrichtungen im Einzelfall die jeweiligen Handhabungsaktion durchführt.

Das Verfahren weist vorzugsweise einzelne oder mehrere der im Zusammenhang mit der Behandlungsanlage beschriebenen Merkmale und/oder Vorteile auf.

Ferner weist vorzugsweise die Behandlungsanlage einzelne oder mehrere der im Zusammenhang mit dem Verfahren beschriebenen Merkmale und/oder Vorteile auf.

Bei einer Ausgestaltung der Erfindung kann vorgesehen sein, dass die Behandlungsanlage ein oder mehrere Führungselemente umfasst, an welchen vorzugsweise jeweils eine oder mehrere Aktionsvorrichtungen verfahrbar angeordnet sind. Günstig kann es sein, wenn ein oder mehrere Führungselemente, insbesondere sämtliche Führungselemente, als Führungsschienen ausgebildet sind.

Das eine oder die mehreren Führungselemente sind vorzugsweise abschnittsweise oder vollständig zumindest näherungsweise parallel zueinander und/oder abschnittsweise oder vollständig zumindest näherungsweise parallel zu einer Förderrichtung einer Fördervorrichtung der Behandlungsanlage ausgebildet und/oder ausgerichtet.

Insbesondere ist eine Führungsrichtung, längs welcher eine oder mehrere Aktionsvorrichtungen mittels des einen oder der mehreren Führungselemente geführt verfahrbar sind, zumindest näherungsweise parallel zur Förderrichtung oder schräg oder senkrecht hierzu.

Unter der Formulierung "zumindest näherungsweise" sowie unter der Formulierung "ungefähr" oder "im Wesentlichen" ist insbesondere eine Abweichung von höchstens ungefähr 20%, vorzugsweise höchstens ungefähr 10%, des angegebenen Werts zu verstehen, wobei bei Winkelangaben eine Abweichung von höchstens 20°, insbesondere höchstens 10°, vorzugsweise höchstens 5°, vorgesehen ist.

Vorteilhaft kann es sein, wenn die Behandlungsanlage zwei oder mehr als zwei Führungselemente umfasst, welche bezüglich einer vertikalen Längsmittelebene der Behandlungsanlage auf derselben Seite angeordnet sind, insbesondere an einer Seitenwand einer den Behandlungsbereich umgebenden Einhausung der Behandlungsanlage.

Die vertikale Längsmittelebene der Behandlungsanlage ist insbesondere eine parallel zwischen den Seitenwänden der Einhausung verlaufende Ebene.

Insbesondere ist die vertikale Längsmittelebene mittig zwischen den Seitenwänden der Einhausung angeordnet.

Die vertikale Längsmittelebene der Behandlungsanlage bildet insbesondere eine Symmetrieebene für die Seitenwände, eine oder mehrere Aktionsvorrichtungen und/oder eine oder mehrere Führungselemente und/oder einen oder mehrere Zugriffsbereiche.

Vorteilhaft kann es sein, wenn die Behandlungsanlage zwei oder mehr als zwei Führungselemente umfasst, welche bezüglich einer vertikalen Längsmittelebene der Behandlungsanlage auf einander gegenüberliegenden Seiten angeordnet sind, insbesondere an einander gegenüberliegenden Seitenwänden einer den Behandlungsbereich umgebenden Einhausung der Behandlungsanlage.

Vorzugsweise umfasst die Behandlungsanlage eine Fördervorrichtung. Das eine oder die mehreren Führungselemente sind vorzugsweise bezüglich der Schwerkraftrichtung unterhalb der Fördervorrichtung, insbesondere vollständig unterhalb einer die Fördervorrichtung bezüglich der Schwerkraftrichtung nach oben begrenzenden Oberseite der Fördervorrichtung, angeordnet.

Alternativ oder ergänzend hierzu kann vorgesehen sein, dass ein oder mehrere Führungselemente bezüglich der Schwerkraftrichtung oberhalb der Fördervorrichtung, insbesondere vollständig oberhalb einer die Fördervorrichtung in der Schwerkraftrichtung nach oben begrenzenden Oberseite der Fördervorrichtung, angeordnet sind.

Zudem kann alternativ oder ergänzend vorgesehen sein, dass eine oder mehrere Führungselemente bezüglich der Schwerkraftrichtung auf derselben Höhe wie die Fördervorrichtung, insbesondere auf derselben Höhe wie eine die Fördervorrichtung bezüglich der Schwerkraftrichtung nach oben begrenzenden Oberseite der Fördervorrichtung, angeordnet sind.

Mehrere Aktionsvorrichtungen sind vorzugsweise längs einer Führungsrichtung eines oder mehrerer Führungselemente der Behandlungsanlage und/oder längs einer Förderrichtung einer Fördervorrichtung der Behandlungsanlage aneinander vorbei verfahrbar.

Die Aktionsvorrichtungen sind dabei vorzugsweise so ausgebildet und/oder angeordnet, dass diese von der grundsätzlichen Beweglichkeit der jeweiligen Aktionsvorrichtung theoretisch miteinander kollidieren können, das heißt insbesondere einander zumindest teilweise überlappende Bewegungsräume aufweisen.

Vorzugsweise sind die Aktionsvorrichtungen so programmiert und/oder angesteuert, dass eine Kollision derselben vermieden wird. Insbesondere kann ein Bewegungsmodus oder Bewegungszustand einer oder mehrerer Aktionsvorrichtungen eingestellt werden, in welchem diese den Überlappungsbereich meiden und somit aneinander vorbeifahrbar sind.

Insbesondere werden eine oder mehrere Aktionsvorrichtungen in den Bewegungsmodus versetzt, wenn die jeweilige Aktionsvorrichtung aus einem Bereitschaftszustand oder Behandlungszustand in den Zugriffszustand versetzt werden soll und hierfür an einer weiteren Aktionsvorrichtung vorbei verfahren werden soll.

Ein oder mehrere Führungselemente der Behandlungsanlage führen vorzugsweise jeweils genau zwei oder mehr als zwei Aktionsvorrichtungen.

Insbesondere sind voneinander verschiedene Aktionsvorrichtungen vorgesehen, welche an jeweils nur einem der Führungselemente geführt sind.

Günstig kann es sein, wenn mehreren Aktionsvorrichtungen ein gemeinsamer Zugriffsbereich zugeordnet ist, von welchem aus und/oder an welchem die Aktionsvorrichtungen zumindest in einem Zugriffszustand derselben zugänglich sind.

Die Aktionsvorrichtungen sind insbesondere nacheinander in den Zugriffszustand versetzbar, um eine Wartungs- und/oder Rüstaktion durchführen zu können.

Zwei oder mehr als zwei Aktionsvorrichtungen, welche an voneinander verschiedenen Führungselementen der Behandlungsanlage geführt sind, kann vorzugsweise ein gemeinsamer Zugriffsbereich zugeordnet sein.

Beispielsweise können zwei oder drei Aktionsvorrichtungen, welche an zwei oder drei voneinander verschiedenen Führungselementen geführt sind, an einem gemeinsamen Endbereich der Führungselemente anordenbar und dort dem Zugriffsbereich zuführbar sein.

Der gemeinsame Endbereich der Führungselemente ist insbesondere ein Raumbereich des Behandlungsraums, in welchem jedes der Führungselemente endet.

Vorteilhaft kann es sein, wenn längs einer Führungsrichtung eines oder mehrerer Führungselemente der Behandlungsanlage und/oder längs einer Förderrichtung einer Fördervorrichtung der Behandlungsanlage zwischen zwei Führungselementen ein Zugriffsbereich angeordnet ist, von welchem aus und/oder an welchem mindestens zwei Aktionsvorrichtungen, welche an den beiden Führungselementen geführt sind, zumindest in einem Zugriffszustand der Aktionsvorrichtungen zugänglich sind.

Günstig kann es insbesondere sein, wenn eine Aktionsvorrichtung an einem Führungselement und eine weitere Aktionsvorrichtung an einem weiteren Führungselement angeordnet ist, wobei vorzugsweise beiden Aktionsvorrichtungen derselbe Zugriffsbereich zugeordnet ist.

Der Zugriffsbereich kann dabei insbesondere zwischen den beiden Aktionsvorrichtungen angeordnet sein.

Der Zugriffsbereich kann beispielsweise ein oder mehrere Führungselemente unterbrechen oder aber beispielsweise in einem Mittelbereich eines oder mehrerer Führungselemente angeordnet sein.

Auch in einem solchen Fall können vorzugsweise zwei oder mehr als zwei Aktionsvorrichtungen vorgesehen sein, welchen derselbe Zugriffsbereich zugeordnet ist, wobei der Zugriffsbereich insbesondere zwischen den Aktionsvorrichtungen angeordnet ist.

Ein oder mehrere Zugriffsbereiche unterbrechen vorzugsweise ein oder mehrere Führungselemente, insbesondere längs der Förderrichtung und/oder Führungsrichtung.

Alternativ oder ergänzend hierzu kann vorgesehen sein, dass ein oder mehrere Zugriffsbereiche beispielsweise in einem Mittelbereich an längs der Förderrichtung und/oder Führungsrichtung ununterbrochenen Führungselementen angeordnet sind.

Vorteilhaft kann es sein, wenn längs einer Führungsrichtung eines oder mehrerer Führungselemente der Behandlungsanlage und/oder längs einer Förderrichtung einer Fördervorrichtung der Behandlungsanlage an einander gegenüberliegenden Endbereichen eines oder mehrerer Führungselemente jeweils ein Zugriffsbereich angeordnet ist.

Insbesondere können hierdurch jeweils zwei Aktionsvorrichtungen pro Führungselement vorgesehen sein, wobei jede Aktionsvorrichtung jeweils einem der beiden Zugriffsbereiche zugeordnet ist.

Beispielsweise kann vorgesehen sein, dass an jeder Seitenwand des Behandlungsraums jeweils drei Führungselemente angeordnet sind, wobei an jedem Führungselement jeweils zwei Aktionsvorrichtungen angeordnet sind. Wenn in den Endbereichen der Führungselemente jeweils ein Zugriffsbereich angeordnet ist, ergeben sich vier Zugriffsbereiche, von welchen aus und/oder an welchen alle zwölf Aktionsvorrichtungen zur Durchführung von Wartungs- und/oder Rüstaktionen zugänglich sind, zumindest im jeweiligen Zugriffszustand einer jeden Aktionsvorrichtung.

Selbstverständlich können auch mehr oder weniger Führungselemente und/oder Aktionsvorrichtungen und/oder Zugriffsbereiche vorgesehen sein.

Bei einer Ausgestaltung der Erfindung kann vorgesehen sein, dass die Behandlungsanlage eine oder mehrere feststehende Aktionsvorrichtungen umfasst. Unter einer feststehenden Aktionsvorrichtung ist insbesondere eine Aktionsvorrichtung zu verstehen, welche eine ortsfeste und/oder unbewegliche Aktionsbasis umfasst. Ein Aktionsarm einer solchen Aktionsvorrichtung ist vorzugsweise relativ zu der Aktionsbasis bewegbar, nicht jedoch gemeinsam mit der Aktionsbasis.

Alternativ zu einer oder mehreren feststehenden Aktionsvorrichtungen kann die Behandlungsanlage optional eine oder mehrere bewegliche Aktionsvorrichtungen umfassen, insbesondere eine oder mehrere Aktionsvorrichtungen, bei welchen eine Aktionsbasis beweglich, insbesondere längs eines Führungselements verschiebbar, angeordnet und/oder ausgebildet ist.

Insbesondere dann, wenn die Behandlungsvorrichtung eine oder mehrere feststehende Aktionsvorrichtungen und eine oder mehrere bewegliche Aktionsvorrichtungen umfasst, kann es vorgesehen sein, dass die eine oder die mehreren feststehenden Aktionsvorrichtungen zwischen einer oder mehreren beweglichen Aktionsvorrichtungen einerseits und einem Zugriffsbereich andererseits angeordnet sind, insbesondere bezogen auf eine Förderrichtung einer Fördervorrichtung der Behandlungsanlage. Insbesondere kann es vorgesehen sein, dass eine jeweilige Aktionsbasis der einen oder der mehreren feststehenden Aktionsvorrichtungen zwischen einem oder mehreren Führungselementen zur Führung der einen oder der mehreren beweglichen Aktionsvorrichtungen einerseits und dem Zugriffsbereich andererseits angeordnet ist, insbesondere bezogen auf die Förderrichtung.

Günstig kann es sein, wenn die eine oder die mehreren feststehenden Aktionsvorrichtungen und die eine oder die mehreren beweglichen Aktionsvorrichtungen demselben Zugriffsbereich zugeordnet sind.

Vorteilhaft kann es sein, wenn eine oder mehrere bewegliche Aktionsvorrichtungen eine oder mehrere feststehende Aktionsvorrichtungen übergreifen oder umgreifen, insbesondere an einer Oberseite und/oder an einer einer Mitte des Behandlungsraums abgewandten Seite eines Aktionsarms der einen oder der mehreren feststehenden Aktionsvorrichtungen, um ein Aktionselement der jeweiligen beweglichen Aktionsvorrichtung zu dem Zugriffsbereich zuzuführen oder in den Zugriffsbereich einzuführen.

Ferner kann es vorteilhaft sein, wenn mehrere bewegliche Aktionsvorrichtungen, insbesondere mehrere auf einem gemeinsamen Führungselement angeordnete bewegliche Aktionsvorrichtungen, demselben Zugriffsbereich zugeordnet sind. Hierbei kann es vorgesehen sein, dass eine der beweglichen Aktionsvorrichtungen mindestens eine weitere der beweglichen Aktionsvorrichtungen übergreifen oder umgreifen kann, insbesondere an einer Oberseite und/oder an einer einer Mitte des Behandlungsraums abgewandten Seite eines Aktionsarms der einen oder der mehreren weiteren beweglichen Aktionsvorrichtungen, um ein Aktionselement der beweglichen Aktionsvorrichtung zu dem Zugriffsbereich zuzuführen oder in den Zugriffsbereich einzuführen.

Es kann vorgesehen sein, dass die Behandlungsanlage mehrere Aktionsvorrichtungspaare oder Aktionsvorrichtungsgruppen umfasst, welche jeweils genau eine oder mehrere bewegliche Aktionsvorrichtung und genau eine oder mehrere feststehende Aktionsvorrichtung umfassen und einem gemeinsamen Zugriffsbereich zugeordnet sind. Beispielsweise sind jedem Behandlungsbereich jeweils zwei oder vier solcher Aktionsvorrichtungspaare oder Aktionsvorrichtungsgruppen zugeordnet.

Die Behandlungsanlage weist vorzugsweise einen von dem jeweils zu behandelnden Werkstücktyp unabhängigen Haltepunkt auf. Der Haltepunkt ist insbesondere eine Stelle im Behandlungsbereich, bis zu welchem beispielsweise ein bezüglich einer Förderrichtung vorderster oder hinterster Punkt des zu behandelnden Werkstücks gefördert wird, bevor die Behandlung des Werkstücks gestartet wird.

Abhängig von einer individuellen maximalen Längserstreckung unterschiedlicher zu behandelnder Werkstücktypen erstrecken sich die Werkstücke ausgehend von dem Haltepunkt unterschiedlich weit längs beziehungsweise entgegen der Förderrichtung. Insbesondere zur zuverlässigen Behandlung sämtlicher Werkstücktypen kann daher vorzugsweise vorgesehen sein, dass mindestens eine feststehende Aktionsvorrichtung, welche insbesondere an einer dem Haltepunkt abgewandten Seite des Behandlungsraums angeordnet ist, derart ausgebildet und eingerichtet ist, dass ein kürzester zu behandelnder Werkstücktyp noch behandelbar ist. Beispielsweise kann ein Aktionsarm dieser Aktionsvorrichtung eine entsprechende Länge aufweisen, um auch den kürzesten Werkstücktyp noch erreichen zu können.

Die Behandlungsanlage umfasst vorzugsweise einen zumindest näherungsweise quaderförmig ausgebildeten Behandlungsraum, welcher insbesondere im Wesentlichen mittig den Behandlungsbereich umfasst.

Vorzugsweise sind in einer, zwei, drei oder vier Eckbereichen des Behandlungsraums eine, zwei, drei oder vier Zugriffsbereiche angeordnet und/oder ausgebildet.

Insbesondere ist in jedem Eckbereich des Behandlungsraums jeweils ein Zugriffsbereich angeordnet und/oder ausgebildet.

Ein Eckbereich eines Behandlungsraums ist insbesondere ein bezogen auf einen horizontalen Querschnitt des Behandlungsraums in einer der vier Ecken angeordneter Bereich, welcher sich vorzugsweise über mindestens ungefähr 50%, beispielsweise mindestens ungefähr 80%, vorzugsweise ungefähr 100%, einer Gesamthöhe des Behandlungsbereichs und/oder des Behandlungsraums erstreckt.

Vorzugsweise sind ein oder mehrere Zugriffsbereiche, insbesondere sämtliche Zugriffsbereiche, zumindest näherungsweise quaderförmig ausgebildet und/oder angeordnet.

Günstig kann es sein, wenn die Behandlungsanlage eine Behandlungslinie umfasst, welche insbesondere mehrere längs einer Förderrichtung einer Fördervorrichtung der Behandlungsanlage aufeinanderfolgende Behandlungsbereiche aufweist. Zwischen zwei Behandlungsbereichen sind vorzugsweise jeweils ein oder mehrere Zugriffsbereiche angeordnet, von welchen aus und/oder an welchen mindestens zwei Aktionsvorrichtungen zur Durchführung von Aktionen in voneinander verschiedenen Behandlungsbereichen zugänglich sind, zumindest in einem Zugriffszustand der Aktionsvorrichtungen.

Der eine oder die mehreren Zugriffsbereiche sind insbesondere beidseitig zugänglich. Insbesondere sind beidseitige Zugangsöffnungen in einem oder mehreren Trennelementen, insbesondere Trennwänden, zur Abtrennung des jeweiligen Zugriffsbereichs von dem Behandlungsbereich vorgesehen.

Bei einer Ausgestaltung der Erfindung ist vorgesehen, dass die Behandlungsanlage ein oder mehrere Führungselemente zur beweglichen, insbesondere verschiebbaren, Führung einer oder mehrerer Aktionsvorrichtungen umfasst. Das eine oder die mehreren Führungselemente sind vorzugsweise an einer Seitenwand des Behandlungsraums angeordnet, wobei insbesondere elektronische und/oder elektrische und/oder pneumatische Komponenten der einen oder der mehreren Aktionsvorrichtungen teilweise außerhalb der Seitenwand angeordnet sind.

Es kann vorgesehen sein, dass eine äußere Seitenwand eines oder mehrerer Zugriffsbereiche im Wesentlichen bündig mit der Seitenwand des Behandlungsraums und/oder Behandlungsbereichs ist.

Alternativ hierzu kann vorgesehen sein, dass eine äußere Seitenwand eines oder mehrerer Zugriffsbereiche relativ zur Seitenwand des Behandlungsraums und/oder Behandlungsbereichs nach außen versetzt angeordnet ist. Hierdurch kann insbesondere eine Durchfahrtsbreite zur Durchführung eines Werkstücks zwischen zwei Zugriffsbereichen erhöht werden.

Günstig kann es sein, wenn die äußere Seitenwand eines oder mehrerer Zugriffsbereiche höchstens so weit relativ zur Seitenwand des Behandlungsraums nach außen versetzt angeordnet ist, wie strukturelle und/oder mechanische und/oder elektronische und/oder elektrische und/oder pneumatische Komponenten der einen oder der mehreren Aktionsvorrichtungen von der Seitenwand des Behandlungsraums nach außen weg ragen. Ein aufgrund der Komponenten ohnehin benötigter Raumbereich auf einer dem Behandlungsraum abgewandten Seite der Seitenwand des Behandlungsraums kann somit auch effizient für die Positionierung des einen oder der mehreren Zugriffsbereiche genutzt werden.

Weitere bevorzugte Merkmale und/oder Vorteile der Erfindung sind Gegenstand der nachfolgenden Beschreibung und der zeichnerischen Darstellung von Ausführungsbeispielen.

### In den Zeichnungen zeigen:

- Fig. 1: eine schematische perspektivische, teilweise geschnittene Darstellung einer Behandlungsanlage zum Behandeln von Werkstücken, wobei im Sinne einer optimierten Darstellung lediglich einseitige Aktionsvorrichtungen dargestellt sind;
- Fig. 2: eine schematische Draufsicht auf eine Einlassseite der Behandlungsanlage aus Fig. 1, wobei eine Einhausung der Behandlungsanlage nicht dargestellt ist;
- Fig. 3: eine schematische Draufsicht auf eine Auslassseite der Behandlungsanlage aus Fig. 1, wobei die Aktionsvorrichtungen lediglich einseitig dargestellt sind und zusätzlich eine Fördervorrichtung zum Fördern von Werkstücken skizziert ist;
- Fig. 4: eine schematische Draufsicht auf die Behandlungsanlage aus Fig. 1, wobei die Aktionsvorrichtungen lediglich einseitig dargestellt sind;
- Fig. 5: eine vergrößerte Darstellung des Bereichs V in Fig. 4;
- Fig. 6: eine der Fig. 1 ähnliche, weitere schematische perspektivische, teilweise geschnittene Darstellung der Behandlungsanlage aus Fig. 1;
- Fig. 7: eine vergrößerte Darstellung eines Zugriffsbereichs in einem Behandlungsraum der Behandlungsanlage aus Fig. 1;
- Fig. 8: eine vereinfachte Darstellung der Behandlungsanlage aus Fig. 1 mit Blick auf eine dem Behandlungsraum nach oben hin begrenzende Deckenwand;
- Fig. 9: eine der Fig. 4 entsprechende schematische Draufsicht auf die Behandlungsanlage, wobei unterschiedliche Sicherheitsbereiche illustriert sind;
- Fig. 10: eine schematische vereinfachte Darstellung eines vertikalen Querschnitts durch die Behandlungsanlage aus Fig. 1;
- Fig. 11: eine der Fig. 8 entsprechende schematische Darstellung einer alternativen Ausführungsform einer Behandlungsanlage, bei welcher eine alternative Luftführung vorgesehen ist;
- Fig. 12: eine der Fig. 8 entsprechende schematische Darstellung einer weiteren alternativen Ausführungsform einer Behandlungsanlage, bei welcher eine weitere alternative Luftführung vorgesehen ist;
- Fig. 13: eine vereinfachte Illustration einer Behandlungsanlage, wobei vier Aktionsvorrichtungen und vier in Eckbereichen des Behandlungsraums angeordnete Zugriffsbereiche vorgesehen sind;
- Fig. 14: eine der Fig. 13 entsprechende schematische Darstellung einer alternativen Ausführungsform einer Behandlungsanlage, bei welcher zwischen jeweils zwei Aktionsvorrichtungen jeweils ein Zugriffsbereich angeordnet ist;
- Fig. 15: eine der Fig. 13 entsprechende schematische Darstellung einer weiteren alternativen Ausführungsform einer Behandlungsanlage, bei welcher mehrere Behandlungsbereiche vorgesehen sind, wobei sowohl in den Eckbereichen des die mehreren Behandlungsbereiche umfassenden Behandlungsraums als auch in einem Mittelbereich jeweils zwei Zugriffsbereiche vorgesehen sind, wobei längs einer Förderrichtung jeweils zwischen zwei Zugriffsbereichen jeweils zwei Aktionsvorrichtungen angeordnet sind;
- Fig. 16: einen schematischen vertikalen Querschnitt durch eine Behandlungsanlage zur Illustration unterschiedlicher Luftführungsvarianten;
- Fig. 17: eine schematische perspektivische Darstellung eines Trennelements und einer darin angeordneten Zugangsöffnung, wobei zusätzlich eine Luftvorhangsvorrichtung zur fluidwirksamen Trennung eines Behandlungsbereichs der Behandlungsanlage von einem Zugriffsbereich vorgesehen ist;
- Fig. 18: einen schematischen vertikalen Schnitt durch die Trennwand, die Zugangsöffnung und die Luftvorhangsvorrichtung aus Fig. 17;
- Fig. 19: eine vergrößerte Darstellung der Luftvorhangsvorrichtung gemäß der Darstellung in Fig. 18;
- Fig. 20: eine schematische Vorderansicht der Trennwand, der Zugangsöffnung und der Luftvorhangsvorrichtung aus Fig. 17;
- Fig. 21: eine schematische Draufsicht auf eine alternative Ausführungsform einer Zugangsöffnung, welche mehrere Öffnungsabschnitte umfasst;
- Fig. 22: eine der Fig. 4 entsprechende Darstellung einer alternativen Ausführungsform der Behandlungsanlage, bei welcher sowohl bewegliche Aktionsvorrichtungen als auch feststehende Aktionsvorrichtungen vorgesehen sind;
- Fig. 23: eine der Fig. 4 entsprechende Darstellung der Behandlungsanlage aus Fig. 22, wobei eine bewegliche Aktionsvorrichtung in einer Zugriffsstellung angeordnet ist;
- Fig. 24: eine schematische Darstellung einer Behandlungsanlage, bei welcher drei Führungselemente mit jeweils zwei funktional identischen Aktionsvorrichtungen versehen sind;
- Fig. 25: eine der Fig. 24 entsprechende Darstellung einer alternativen Ausführungsform einer Behandlungsanlage, bei welcher drei feststehende Aktionsvorrichtungen und drei bewegliche Aktionsvorrichtungen vorgesehen sind;
- Fig. 26: eine der Fig. 24 entsprechende Darstellung einer alternativen Ausführungsform einer Behandlungsanlage, bei welcher zwei Führungselemente mit jeweils funktional voneinander verschiedenen Aktionsvorrichtungen und ein Führungselement mit zwei funktional identischen Aktionsvorrichtungen vorgesehen sind; und
- Fig. 27: eine schematische Darstellung der Bereiche eines begehbaren Bodens einer Behandlungsanlage, wobei der begehbare Boden unterschiedliche Höhenniveaus aufweist.

Gleiche oder funktional äquivalente Elemente sind in sämtlichen Figuren mit denselben Bezugszeichen versehen.

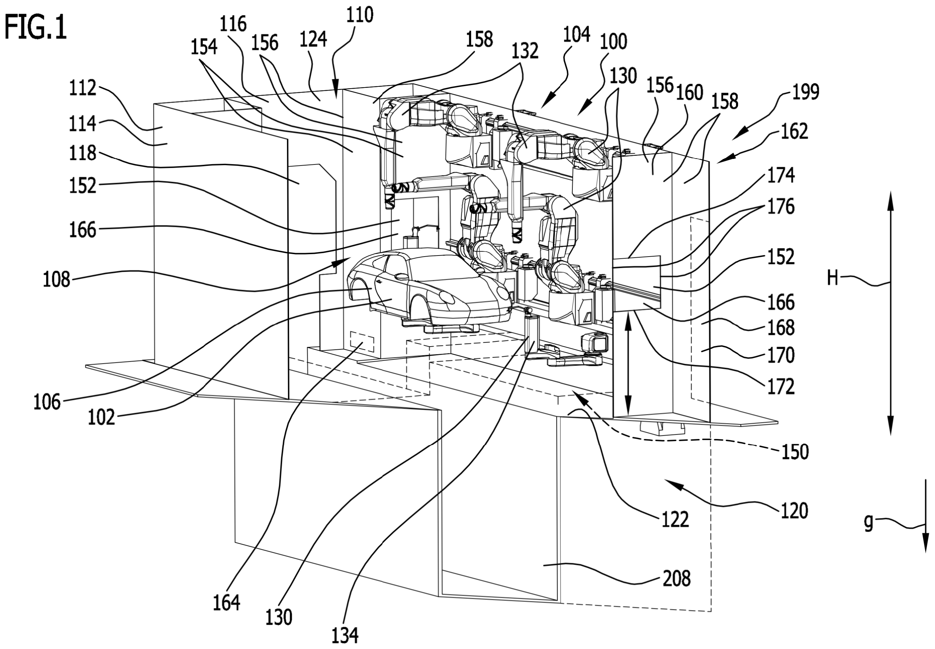

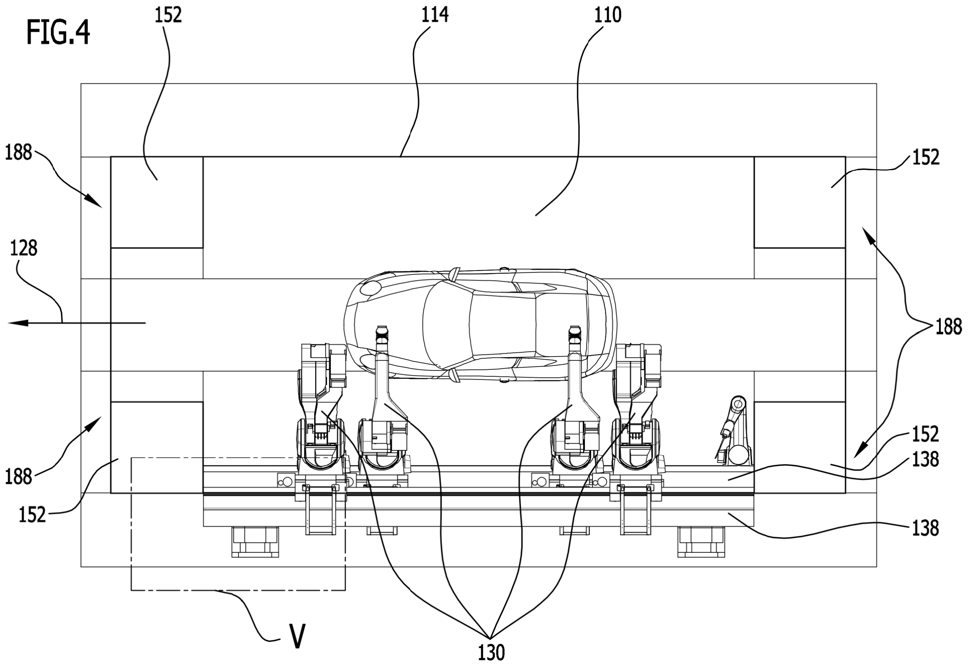

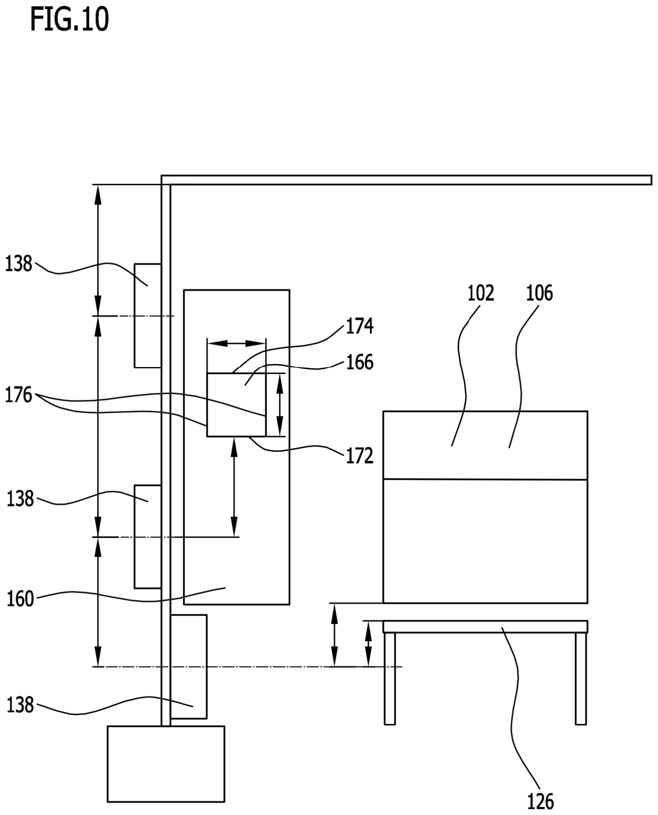

Eine in den Fig. 1 bis 10 dargestellte, als Ganzes mit 100 bezeichnete Behandlungsanlage dient insbesondere dem Behandeln von Werkstücken 102.

Die Behandlungsanlage 100 ist insbesondere eine Lackieranlage 104 zum Lackieren von Fahrzeugkarosserien 106.

Vorzugsweise umfasst die Behandlungsanlage 100 einen Behandlungsbereich 108, in welchen die Werkstücke 102 nacheinander einbringbar sind, um eine oder mehrere Behandlungsaktionen, insbesondere Beschichtungsschritte, durchzuführen.

Der Behandlungsbereich 108 ist insbesondere Bestandteil eines Behandlungsraums 110, welcher von einer Einhausung 112 der Behandlungsanlage 100 umgeben ist.

Die Einhausung 112 ist insbesondere im Wesentlichen quaderförmig ausgebildet. Der Behandlungsraum 110 ist somit vorzugsweise ebenfalls im Wesentlichen quaderförmig ausgebildet.

Die Einhausung 112 umfasst zwei einander gegenüberliegende Seitenwände 114 sowie eine Einlassseite 116. Die Einlassseite 116 umfasst insbesondere eine Zuführöffnung 118, durch welche die Werkstücke in den Behandlungsraum 110 einbringbar und/oder aus demselben herausführbar sind.

Optional kann der Einlassseite 116 gegenüberliegend eine weitere Seitenwand 114 angeordnet sein. Ferner kann der Einlassseite 116 eine Auslassseite 120 gegenüberliegen.

Im zuerst genannten Fall ist die Behandlungsanlage 100 insbesondere eine Einzelboxenanlage mit einseitiger Zuführung. Im zuletzt genannten Fall ist die Behandlungsanlage eine Einzelboxenanlage mit Durchführung oder aber Bestandteil einer Handlungslinie.

Bezüglich einer Schwerkraftrichtung g ist der Behandlungsraum 110 an seiner Unterseite von einer Bodenwand 122 und an seiner Oberseite von einer Deckenwand 124 begrenzt.

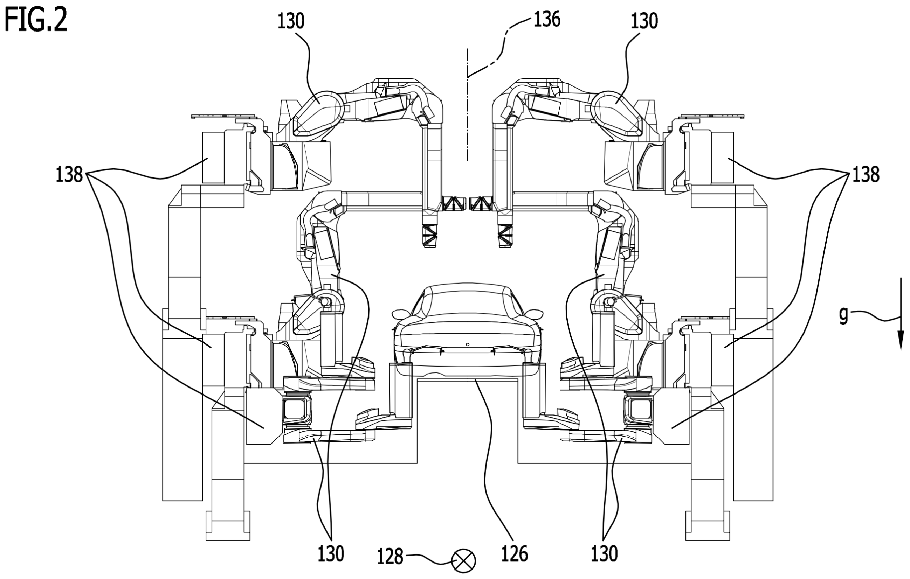

Die Behandlungsanlage 100 umfasst vorzugsweise eine Fördervorrichtung 126 zum Fördern der Werkstücke 102 längs einer Förderrichtung 128 (siehe insbesondere Fig. 2).

Die beiden einander gegenüberliegenden Seitenwände 114 der Einhausung 112 sind insbesondere parallel zur Förderrichtung 128 ausgerichtet.

Die Einlassseite 116 und die Auslassseite 120 sind vorzugsweise im Wesentlichen senkrecht zur Förderrichtung 128 ausgerichtet.

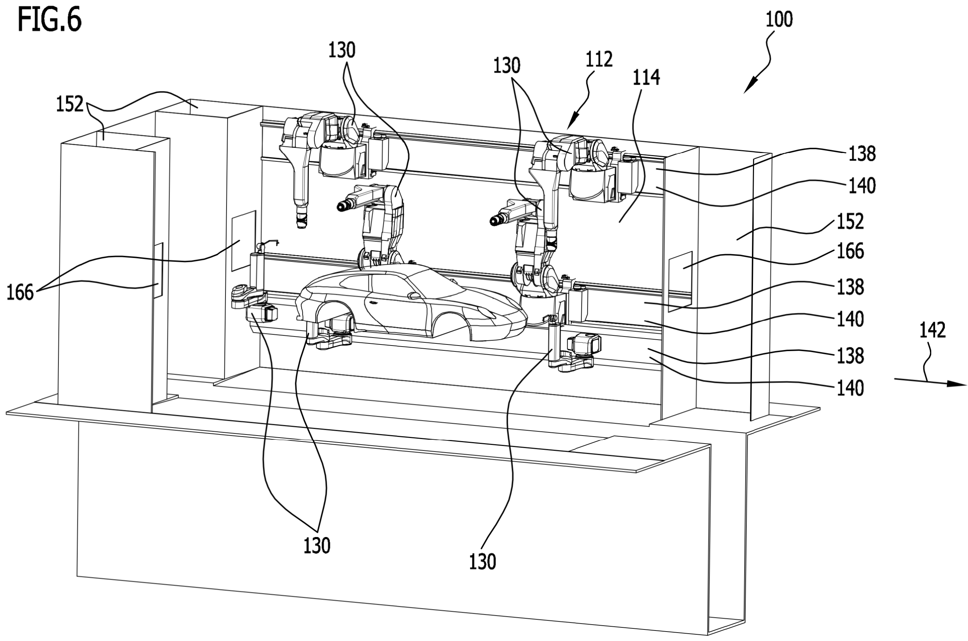

Wie insbesondere den Fig. 1 und 6 zu entnehmen ist, umfasst die Behandlungsanlage 100 vorzugsweise mehrere Aktionsvorrichtungen 130 zur Durchführung einer oder mehrerer Aktionen zur Behandlung der Werkstücke 102.

Die Aktionen sind insbesondere Beschichtungsaktionen und/oder Handhabungsaktionen.

Die Aktionsvorrichtungen 130 sind somit insbesondere Applikationsvorrichtungen und/oder Handhabungsvorrichtungen, beispielsweise Applikationsroboter 132 und/oder Handhabungsroboter 134.

Vorzugsweise sind sowohl als Applikationsroboter 132 ausgebildete Aktionsvorrichtungen 130 als auch weitere Aktionsvorrichtungen 130, welche als Handhabungsroboter 134 ausgebildet sind, vorgesehen.

Wie insbesondere Fig. 2 zu entnehmen ist, sind die Aktionsvorrichtungen 130 vorzugsweise an beiden Seitenwänden 114 des Behandlungsraums 110 vorgesehen.

Insbesondere ist eine im Wesentlichen spiegelsymmetrische Anordnung der Aktionsvorrichtungen 130 bezüglich einer vertikalen Längsmittelebene 136 des Behandlungsraums 110 vorgesehen.

Zur einfacheren Beschreibung der Applikationsvorrichtungen 130 wird nachfolgend insbesondere auf die Fig. 1 und 6 Bezug genommen, welche lediglich die Aktionsvorrichtungen 130 an einer einzigen Seitenwand 114 zeigen. Die gegenüberliegende Seitenwand 114 kann entsprechend identisch mit den in den Fig. 1 und 6 dargestellten Aktionsvorrichtungen 130 versehen sein.

Ferner kann bei alternativen (nicht dargestellten) Ausführungsformen auf einzelne Aktionsvorrichtungen 130 ebenso verzichtet werden, wie zusätzliche weitere Aktionsvorrichtungen 130 vorgesehen sein können.

Selbstverständlich kann auch eine asymmetrische Anordnung der Aktionsvorrichtung 130 bezüglich der vertikalen Längsmittelebene 136 vorgesehen sein.

Wie insbesondere aus Fig. 6 hervorgeht, umfasst die Behandlungsanlage 100 vorzugsweise ein oder mehrere, beispielsweise drei, Führungselemente 138 zum Führen jeweils einer oder mehrerer Aktionsvorrichtungen 130. Beispielsweise sind an jedem Führungselement 138 jeweils zwei Aktionsvorrichtungen 130 geführt, insbesondere verfahrbar geführt.

Die Führungselemente 138 bilden insbesondere Führungsschienen 140 oder sind als solche ausgebildet.

Die Führungselemente 138 erstrecken sich insbesondere längs einer Führungsrichtung 142.

Die Führungsrichtung 142 ist insbesondere zumindest näherungsweise parallel zur Förderrichtung 128 der Fördervorrichtung 126.

Günstig kann es sein, wenn zwei oder mehr als zwei Führungselemente 138 mit jeweils zwei als Applikationsroboter 132 ausgebildeten Applikationsvorrichtungen 130 versehen sind und/oder zur Führung derselben dienen.

Ein weiteres Führungselement 138 dient vorzugsweise der Aufnahme und/oder Führung von einem, zwei oder mehr als zwei Aktionsvorrichtungen 130, welche als Handhabungsroboter 134 ausgebildet sind.

Das Führungselement 138 zur Aufnahme und/oder Führung der einen oder der mehreren als Handhabungsroboter 134 ausgebildeten Aktionsvorrichtungen 130 ist vorzugsweise unter dem einen oder den mehreren Führungselementen 138 angeordnet, welche zur Aufnahme einer oder mehrerer als Applikationsroboter 132 ausgebildeter Aktionsvorrichtungen 130 dienen.

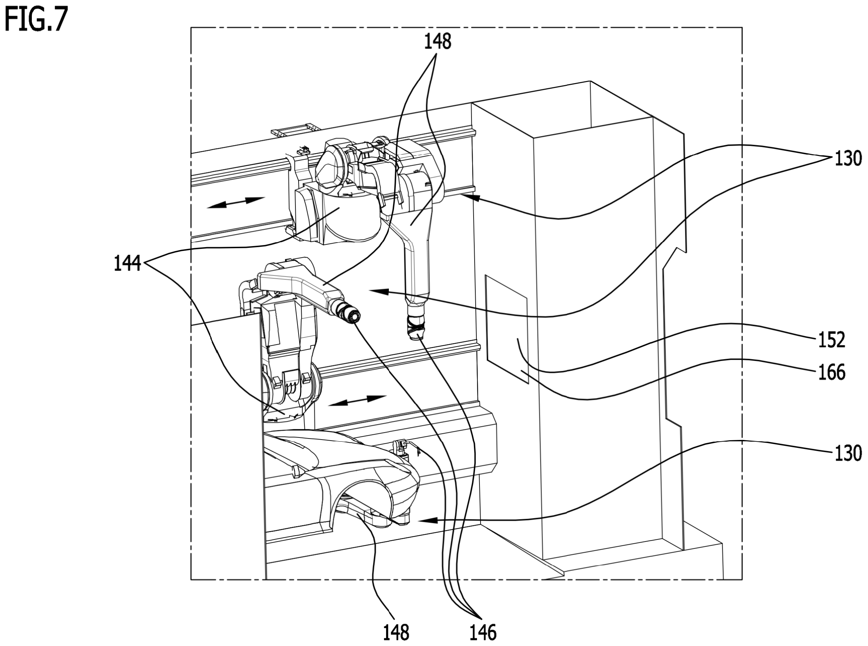

Wie insbesondere Fig. 7 zu entnehmen ist, umfasst jede Aktionsvorrichtung 130 vorzugsweise eine Aktionsbasis 144, mittels welcher die jeweilige Aktionsvorrichtung 130 insbesondere verfahrbar an dem jeweiligen Führungselement 138 angeordnet ist. Ferner umfasst jede Aktionsvorrichtung 130 vorzugsweise ein Aktionselement 146, welches zur Durchführung einer Aktion dient. Ein Aktionselement 146 kann beispielsweise ein Sprühkopf zum Applizieren von Beschichtungsmaterial sein.

Ferner kann ein Aktionselement 146 beispielsweise ein Greifer sein, mit welchem eine als Handhabungsroboter 134 ausgebildete Aktionsvorrichtung 130 beispielsweise zum Türen öffnen beispielsweise an einem als Fahrzeugkarosserie 106 ausgebildeten Werkstück 102 angreift.

Die Aktionsbasis 144 und das Aktionselement 146 einer jeden Aktionsvorrichtung 130 sind insbesondere an einander gegenüberliegenden Enden eines Aktionsarms 148 einer jeden Aktionsvorrichtung 130 angeordnet.

Der Aktionsarm 148 einer jeden Aktionsvorrichtung 130 ist beispielsweise als ein Gelenkarm und/oder Roboterarm ausgebildet.

Insbesondere können Mehrfachgelenke und/oder mehrachsige Roboterarme als Aktionsarm 148 vorgesehen sein.

Wie insbesondere aus Fig. 2 hervorgeht, sind die Aktionsvorrichtungen 130 in unterschiedlichen Positionen und/oder Bewegungszuständen anordenbar, wobei insbesondere die Aktionsvorrichtungen 130 an voneinander verschiedenen Führungselementen 138 sich in einander überlappende Raumbereiche erstrecken können. Bei der Bewegung der Aktionsvorrichtung 130 längs der Führungselemente 138 kann sich somit eine potentielle Kollision ergeben.

Mittels einer (nicht dargestellten) Steuervorrichtung der Behandlungsanlage 100 kann vorzugsweise eine Koordination der Aktionsvorrichtung 130 derart erfolgen, dass diese, insbesondere durch geeignete Positionierung und/oder Ausrichtung des jeweiligen Aktionsarms 148 kollisionsfrei aneinander vorbei bewegt werden können.

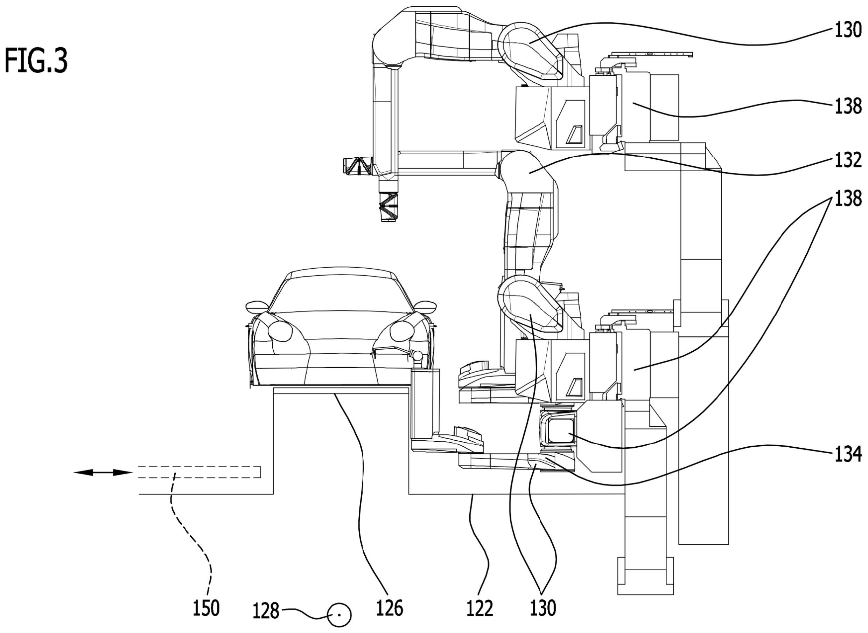

Wie insbesondere Fig. 3 zu entnehmen ist, kann die Bodenwand 122 selbst begehbar sein. Die Bodenwand 122 kann somit einen begehbaren Boden 150 des Behandlungsraums 110 bilden.

Vorzugsweise ist jedoch vorgesehen, dass oberhalb der den Behandlungsraum 110 begrenzende Bodenwand 122 ein zusätzlicher begehbarer Boden 150 angeordnet ist, welcher beispielsweise in den Bereich oberhalb der Bodenwand 122 einfahrbar, einschwenkbar und/oder einschiebbar ist.

Der begehbare Boden 150 kann dann insbesondere nur bei Bedarf eingebracht werden, um beispielsweise lediglich zu Wartungszwecken einen begehbaren Bereich in dem Behandlungsraum 110 zu schaffen.

Der begehbare Boden 150 ist dabei vorzugsweise weiterhin unterhalb sämtlicher Aktionsvorrichtungen 130 und/oder unterhalb sämtlicher Führungselemente 138. Hierdurch kann insbesondere eine einfache Zugänglichkeit der Aktionsvorrichtungen 130 und/oder der Führungselemente 138 im Wartungsfall gewährleistet werden. Der begehbare Boden 150 ist dabei ferner vorzugsweise unterhalb der Fördervorrichtung 126 angeordnet.

Wenn die Fördervorrichtung 126 selbst begehbar ist, ergibt sich vorzugsweise zwischen dem begehbaren Boden 150 und einer Oberseite der Fördervorrichtung 126 eine Stufe oder ein Versatz, welcher vorzugsweise höchstens ungefähr 70 cm, insbesondere höchstens ungefähr 60 cm, beispielsweise ungefähr 50 cm, beträgt. Eine Absturzsicherung kann in einem solchen Fall entbehrlich sein.

Wie insbesondere den Fig. 1, 4, 6 und 7 zu entnehmen ist, umfasst der Behandlungsraum 110 vorzugsweise mehrere von dem Behandlungsbereich 108 abgetrennte Raumbereiche, welche nachfolgend als Zugriffsbereiche 152 bezeichnet sind. Nachfolgend werden die gesamten abgetrennten Raumbereiche als Zugriffsbereich 152 bezeichnet, um eine einfache Beschreibung der Erfindung zu ermöglichen. Es kann jedoch auch vorgesehen sein, dass die funktional als Zugriffsbereich 152 anzusehenden Raumbereiche lediglich Teilräume der von dem Behandlungsraum 110 abgetrennten Raumbereiche darstellen.

Ein Zugriffsbereich 152 ist insbesondere ein Bereich, in welchen eine Person eintreten kann, um Zugriff zu einer oder mehreren Aktionsvorrichtungen 130 zu erhalten, insbesondere ohne den Behandlungsbereich 108 betreten zu müssen oder dessen Atmosphäre ausgesetzt zu sein.

Die Aktionsvorrichtungen 130 sind hierfür insbesondere in einen Zugriffszustand bringbar, um den Zugriff für eine Person von dem Zugriffsbereich 152 aus oder in dem Zugriffsbereich 152 zu ermöglichen. Hierauf wird nachfolgend noch näher eingegangen.

Die Zugriffsbereiche 152 sind insbesondere mittels mehrerer Trennelemente 154 räumlich von dem Behandlungsbereich 108 getrennt.

Die Trennelemente 154 sind insbesondere Trennwände 156.

Beispielsweise bilden die Trennwände 156 Schachtwände 158 eines als Wartungsschacht 160 ausgebildeten Zugriffsbereichs 152.

Die Zugriffsbereiche 152 sind vorzugsweise mittels einer noch zu beschreibenden Zuluftführungsvorrichtung 199 mit Zuluft gespült und/oder durchströmt.

Die Zuluft ist insbesondere Frischluft und/oder Hallenluft, vorzugsweise unkonditionierte Frischluft und/oder Hallenluft.

Die Zugriffsbereiche 152 weisen hierfür vorzugsweise einen Einlass 162 auf, welcher insbesondere an einem bezüglich der Schwerkraftrichtung g oberen Ende des Zugriffsbereichs 152 angeordnet ist.

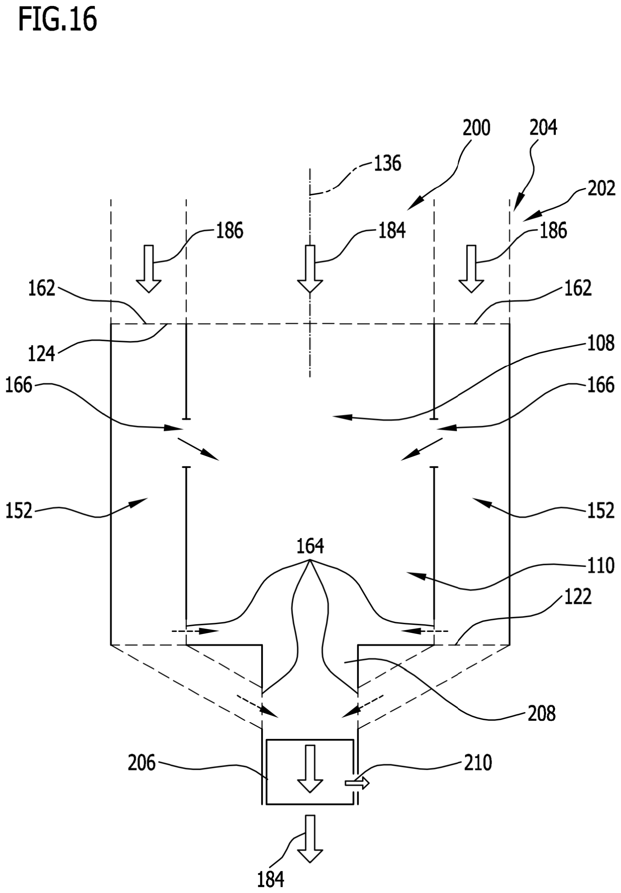

Ferner sind vorzugsweise ein oder mehrere (noch zu beschreibende) Auslässe 164 vorgesehen. Die Auslässe 164 können in verschiedenen Variationen vorgesehen sein. Hierauf wird mit Hinblick auf die Fig. 16 weiter unten eingegangen.

An dieser Stelle ist lediglich entscheidend, dass durch den Einlass 162 Zuluft zu dem Zugriffsbereich 152 zugeführt wird, welche sich aufgrund des Vorhandenseins der Trennelemente 154, insbesondere der Trennwände 156 nicht oder nur unwesentlich mit dem Gas, insbesondere der Umluft, im Behandlungsbereich 108 vermischt.

Die durch den Zugriffsbereich 152 strömende Luft weist somit eine geringe Schadstoffkonzentration auf, so dass sich Personen ungeschützt in dem Zugriffsbereich 152 aufhalten können, insbesondere auch dann, wenn in dem Behandlungsbereich 108 Werkstücke 102 behandelt werden.

Mindestens ein Trennelement 154 weist vorzugsweise eine Zugangsöffnung 166 auf.

Mittels der Zugangsöffnung 166 ist insbesondere eine Verbindung zwischen dem Zugriffsbereich 152 und dem Behandlungsbereich 108 geschaffen.

Insbesondere kann vorgesehen sein, dass zumindest ein Teil, insbesondere ein Aktionselement 146, einer Aktionsvorrichtung 130 durch die Zugangsöffnung 166 hindurch in den Zugriffsbereich 152 einbringbar ist, um eine Wartungs- und/oder Rüstaktion durchführen zu können.

Insbesondere sind die Aktionsvorrichtungen 130 nacheinander so bewegbar, dass zumindest deren jeweiliges Aktionselement 146 in den Zugriffsbereich 152 hineinragt oder darin angeordnet ist. Dadurch, dass an den Aktionsvorrichtungen 130 im Zugriffsbereich 152 Wartungs- und/oder Rüstaktionen durchführbar sind und dadurch, dass der Zugriffsbereich 152 vorzugsweise stets oder zumindest temporär eine für Personen unschädliche Atmosphäre aufweist, kann die Behandlung von Werkstücken 102 im Behandlungsbereich 108 vorzugsweise fortgesetzt werden, während Wartungs- und/oder Rüstaktionen durchgeführt werden.

Der Zugang zu dem Zugriffsbereich 152 für eine oder mehrere Personen ist insbesondere durch eine Zutrittsöffnung 168 in einer Seitenwand 114 der Einhausung 112 der Behandlungsanlage 100 möglich.

Insbesondere ist die Zutrittsöffnung 168 eine Tür 170, durch welche eine Person in den Zugriffsbereich 152 eintreten kann.

Die Zugangsöffnung 166 ist vorzugsweise derart in mindestens einem Trennelement 154 angeordnet, dass ein durch die Zugangsöffnung 166 in den Zugriffsbereich 152 hineinragendes Aktionselement 146 einer Aktionsvorrichtung 130 bequem für eine im Zugriffsbereich 152 befindliche Person zugänglich ist, beispielsweise auf Hüfthöhe und/oder Brusthöhe.

Insbesondere eine Mitte der Zugangsöffnung 166 ist dabei vorzugsweise mindestens ungefähr 1 m, beispielsweise mindestens ungefähr 1,20 m, und/oder höchstens ungefähr 1,80 m, insbesondere höchstens ungefähr 1,60 m, über einem begehbaren Boden 150 im Zugriffsbereich 152 angeordnet.

Die Zugangsöffnung 166 weist vorzugsweise eine bezüglich der Schwerkraftrichtung g untere Unterkante 172 und eine dieser Unterkante 172 gegenüberliegende, bezüglich der Schwerkraftrichtung g obere Oberkante 174 auf. Zudem sind zwei die beiden Kanten 172, 174 miteinander verbindenden Seitenkanten 176 vorgesehen.

Vorzugsweise ist die Oberkante 174 der Zugangsöffnung 166 in einer Höhe von höchstens ungefähr 2 m über dem begehbaren Boden 150, beispielsweise in einer Höhe von höchstens ungefähr 1,80 m über dem begehbaren Boden 150 im Zugriffsbereich 152.

Eine Unterkante 172 ist vorzugsweise mindestens ungefähr 80 cm, vorzugsweise mindestens ungefähr 1,20 m, über dem begehbaren Boden 150 des Zugriffsbereichs 152.

Die Zugangsöffnung 166 ist vorzugsweise so dimensioniert, dass ein oder mehrere Aktionselemente 146 einer oder mehrerer Aktionsvorrichtungen 130 ungehindert durch die Zugangsöffnung 166 hindurchführbar, insbesondere hindurchstreckbar, sind. Beispielsweise ist die freie Durchtrittsfläche der Zugangsöffnung 166 mindestens 50% größer, beispielsweise mindestens 100% größer, und/oder höchstens ungefähr 500% größer, beispielsweise höchstens ungefähr 200% größer, als eine maximale Querschnittsfläche eines oder mehrerer, insbesondere sämtlicher, Aktionselemente 146, welche durch die jeweilige Zugangsöffnung 166 in den Zugriffsbereich 152 einbringbar sein sollen oder einbringbar sind.

Die Form der Zugangsöffnung 166 kann beispielsweise rechteckig gewählt sein.

Alternativ hierzu kann die Zugangsöffnung 166 auch eine an die Außenkontur eines oder mehrerer, insbesondere sämtlicher, Aktionselemente 146 angepasste Form aufweisen.

Die Zugangsöffnung 166, insbesondere eine geometrische Mitte derselben, ist vorzugsweise im Wesentlichen mittig bezüglich einer Höhe H des Behandlungsraums 110 angeordnet, insbesondere in einem Bereich zwischen ungefähr 30% bis ungefähr 70%, vorzugsweise in einem Bereich zwischen ungefähr 40% bis ungefähr 60%, der Höhe H des Behandlungsraums 110.

Günstig kann es sein, wenn die Zugangsöffnung 166 vollständig in einem mittleren Drittel des Behandlungsraums 110 bezogen auf dessen Höhe angeordnet und/oder ausgebildet ist.

Günstig kann es sein, wenn die Zugangsöffnung 166 zumindest näherungsweise auf derselben Höhe angeordnet ist, wie ein Werkstück 102. Ferner kann vorgesehen sein, dass eine oder mehrere Zugangsöffnungen 166 bezüglich einer parallel zur Schwerkraftrichtung verlaufenden Höhenrichtung oberhalb oder überlappend mit einem oder mehreren Werkstücken 102 angeordnet ist.

Die Aktionsvorrichtungen 130 sind vorzugsweise wahlweise in unterschiedliche Zustände versetzbar, um unterschiedliche Aktionen durchzuführen.

Insbesondere kann ein Bereitschaftszustand oder ein Behandlungszustand vorgesehen sein, in welchem Werkstücke 102 behandelt werden oder zumindest die Bereitschaft der jeweiligen Aktionsvorrichtung 130 hierfür besteht.

Ferner ist vorzugsweise ein Zugriffszustand vorgesehen, in welchem die jeweilige Aktionsvorrichtung 130 insbesondere zur Durchführung von Wartungs- und/oder Rüstaktionen zu dem Zugriffsbereich 152 bewegbar ist. Insbesondere ist in dem Zugriffszustand eines Aktionselements 146 der jeweiligen Aktionsvorrichtung 130 im Zugriffsbereich 152 angeordnet.

Die Aktionsvorrichtungen 130 sind vorzugsweise so ausgebildet, dass diese zum Versetzen in den Zugriffszustand und/oder den Behandlungszustand und/oder den Bereitschaftszustand aneinander vorbeibewegbar sind und insbesondere einander nicht blockieren, zumindest mit Ausnahme derjenigen Aktionsvorrichtungen 130, welche an demselben Führungselement 138 geführt sind.

Ferner sind die Aktionsvorrichtungen 130 vorzugsweise so ausgebildet und/oder angesteuert, dass diese einander überlappende Tätigkeitsprofile aufweisen und somit zumindest teilweise einander zumindest temporär ersetzen können.

Beispielsweise können zwei oder mehr als zwei Aktionsvorrichtungen 130 zur Durchführung desselben Beschichtungsvorgangs ausgebildet und/oder angesteuert sein, so dass dieser Beschichtungsvorgang im Falle einer erforderlichen Wartung einer der Aktionsvorrichtungen 130 weiterhin an den Werkstücken 102 durchgeführt werden kann, nämlich von einer der Aktionsvorrichtungen 130, während die weitere Aktionsvorrichtung 130 in den Zugriffszustand versetzt und im Zugriffsbereich gewartet, beispielsweise gereinigt, wird.

Eine oder mehrere Aktionsvorrichtungen 130 sind somit insbesondere redundant ausgebildet und/oder angeordnet und/oder angesteuert.

Da die Aktionsvorrichtungen 130 in deren Betrieb eine Gefahr für Personen und/oder andere Komponenten der Behandlungsanlage 100 darstellen, beispielsweise aufgrund Hochspannungsüberschlägen, etc., sind bei der Behandlungsanlage 100 vorzugsweise mehrere Sicherheitsbereiche vorgesehen, welche insbesondere hinsichtlich des jeweiligen Gefahren- und/oder Beschädigungspotentials abgestuft sind.

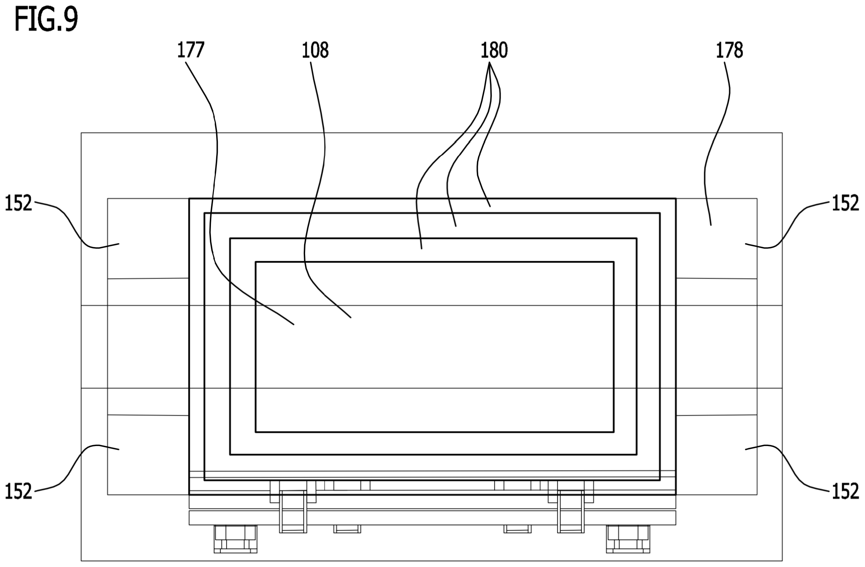

Wie Fig. 9 zu entnehmen ist, ergibt sich dabei insbesondere ein im Behandlungsbereich 108 befindlicher Hochrisikobereich 177.

Zu diesem Hochrisikobereich 177 darf keine Person Zugang haben, wenn ein Behandlungsvorgang durchgeführt wird. In dem Hochrisikobereich 177 sind insbesondere die höchsten Bewegungsgeschwindigkeiten der Aktionsvorrichtungen 130 zulässig. Zudem ist im Hochrisikobereich 177 eine Hochspannungsversorgung zur Durchführung von Behandlungsvorgängen aktiviert.

Ein Niedrigrisikobereich 178 ist insbesondere der Zugriffsbereich 152. In diesem Niedrigrisikobereich 178 werden die Aktionsvorrichtungen 130 vorzugsweise mit der geringsten Geschwindigkeit bewegt. Zudem ist vorzugsweise die Hochspannung deaktiviert, so dass ein Verletzungsrisiko für Personen sowie ein Beschädigungsrisiko für weitere Komponenten der Behandlungsanlage 100 möglichst minimiert ist.

Zwischen dem Hochrisikobereich 177 und dem Niedrigrisikobereich 178 sind vorzugsweise weitere Zwischenrisikobereiche 180 vorgesehen, in welchen insbesondere abgestufte Geschwindigkeitsgrenzen für die Bewegung der Aktionsvorrichtungen 130 bestehen.

Sämtliche Bereiche 177, 178, 180 können mit zusätzlichen Sicherheitsvorkehrungen gesichert werden. Beispielsweise kann vorgesehen sein, dass in einzelnen Bereichen, beispielsweise im Niedrigrisikobereich 178 und/oder in einem oder mehreren daran angrenzenden Zwischenrisikobereichen 180 eine Bewegung der Aktionsvorrichtungen 130 nur dann zulässig ist, wenn eine Person dies freigibt, beispielsweise durch Betätigen eines Zustimmungstasters.

Ferner kann vorgesehen sein, dass eine oder mehrere, insbesondere sämtliche, Aktionsvorrichtungen 130 überwacht werden, beispielsweise Kameraüberwacht werden. Eine oder mehrere Personen können die von einer oder mehreren Kameras erfassten Bilder und/oder Videos beispielsweise in einer Visualisierung überprüfen, insbesondere zur Beurteilung von möglichen Fehlern oder aber einer einwandfreien Funktion der Behandlungsanlage 100.

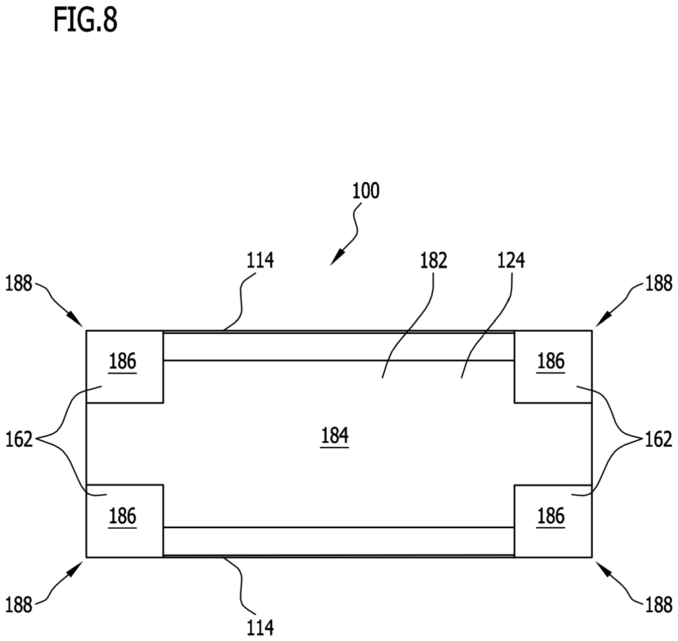

In Fig. 8 ist eine vereinfachte Darstellung einer Deckenwand 124 der Behandlungsanlage 100 dargestellt.

Über diese Deckenwand 124 werden insbesondere ein oder mehrere Luftströme zu dem Behandlungsraum 110 zugeführt.

Die Deckenwand 124 umfasst dabei insbesondere eine im Wesentlichen mittige Filterdecke 182, über welche ein Umluftstrom zu dem Behandlungsbereich 108 zuführbar ist.

Ferner umfasst die Deckenwand 124 mehrere Einlässe 162 zur Zuführung eines Luftstroms, insbesondere eines oder mehrerer Zuluftströme 186 zu den Zugriffsbereichen 152.

Die Zugriffsbereiche 152 sind dabei in Eckbereichen 188 des im Wesentlichen quaderförmigen Behandlungsraums 110 angeordnet.

Den Seitenwänden 114 zugewandt können ein oder mehrere zusätzliche Strömungsbereiche geschaffen sein, wobei eine entsprechende Luftstromzuführung ebenfalls über die Deckenwand 124, gegebenenfalls getrennt von dem Umluftstrom 184, oder aber über ein oder mehrere Führungselemente 138 erfolgen kann.

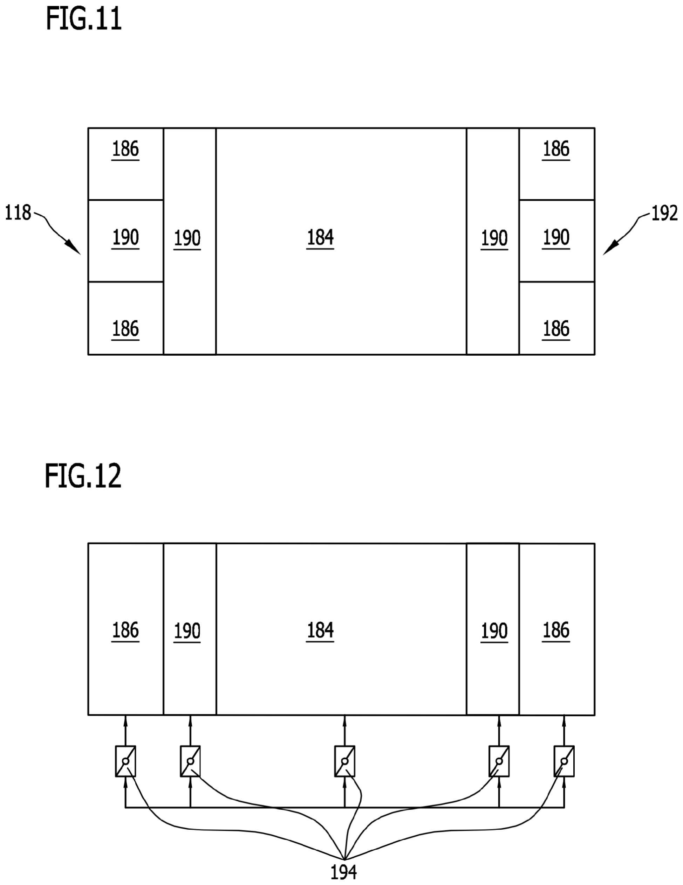

In den Fig. 11 und 12 sind alternative Strömungsvarianten dargestellt, welche sich von der in Fig. 8 dargestellten Strömungsführung im Wesentlichen dadurch unterscheiden, dass weitere Strömungsbereiche, insbesondere zwischen dem dem Behandlungsbereich 108 zugeführten Umluftstrom 184 und den den Zugriffsbereichen 152 zugeführten Zuluftströmen 186 geschaffen sind.

Diese weiteren Bereiche bilden insbesondere Luftschleusen oder Luftvorhänge zur effizienteren Trennung der Atmosphäre im Behandlungsbereich 108 einerseits von den Atmosphären in den Zugriffsbereichen 152 andererseits.

Nachfolgend werden diese Bereiche daher als Trennungsbereiche 190 bezeichnet.

Ein Trennungsbereich 190 kann zudem alternativ oder ergänzend im Bereich einer Zuführöffnung 118 und/oder einer gegenüberliegenden Abführöffnung 192 vorgesehen sein, wobei hierdurch insbesondere eine Schleusenfunktion im Bereich der Förderung der Werkstücke 102 erzielt werden kann.

Im Übrigen stimmt die in Fig. 11 dargestellte alternative Strömungsführung hinsichtlich Aufbau und Funktion mit der in Fig. 8 dargestellten Ausführungsform überein, so dass auf deren vorstehende Beschreibung insoweit Bezug genommen wird.

Eine in Fig. 12 dargestellte weitere alternative Ausführungsform einer Strömungsführung unterscheidet sich von der in Fig. 11 dargestellten Ausführungsform im Wesentlichen dadurch, dass nicht jedem Zugriffsbereich 152 ein separater Zuluftstrom 186 zugeführt wird, sondern dass vielmehr zwischen beiden Seitenwänden 114 durchgängig zwei jeweils zwei Zugriffsbereiche 152 erfassende Strömungsabschnitte gebildet sind.

Diese Strömungsabschnitte werden mit den Trennungsbereichen 190 von dem dem Behandlungsbereich 108 zuzuführenden Umluftstrom 184 getrennt.

Durch geeignete Ansteuerung von Ventilen 194 können vorzugsweise die Volumenströme und/oder Geschwindigkeiten der den einzelnen Bereichen zuzuführenden Luftströme gezielt gesteuert werden, insbesondere um eine Schadstoffbelastung in den Zugriffsbereichen 152 zu minimieren und zugleich den Konditionieraufwand zur Konditionierung des Umluftstroms 184 und/oder des Zuluftstroms 186 zu minimieren.

Im Übrigen stimmt die in Fig. 12 dargestellte alternative Ausführungsform der Strömungsführung hinsichtlich Aufbau und Funktion mit der in Fig. 11 dargestellten Ausführungsform überein, so dass auf deren vorstehende Beschreibung insoweit Bezug genommen wird.

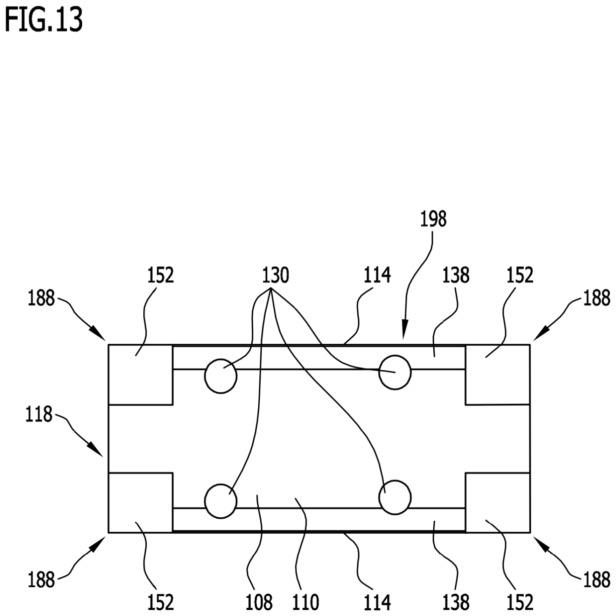

In Fig. 13 ist eine vereinfachte Darstellung einer Behandlungsanlage 100 abgebildet.

Die Behandlungsanlage 100 ist dabei in einer Draufsicht von oben dargestellt und umfasst in den Eckbereichen 188 eines Behandlungsraums 110 jeweils einen Zugriffsbereich 152, zudem zwei an einander gegenüberliegenden Seitenwänden 114 angeordnete Führungselemente 138, an welchen jeweils zwei Aktionsvorrichtungen 130 verfahrbar angeordnet sind.

Mittels der Aktionsvorrichtungen 130 ist insbesondere der Behandlungsbereich 108 zugänglich, um Werkstücke 102 (in Fig. 13 nicht dargestellt zu behandeln.

Aus Fig. 13 geht insbesondere hervor, dass jede Aktionsvorrichtung 130 durch geeignete Bewegung derselben Zugang zu einem Zugriffsbereich 152 hat und somit Wartungs- und/oder Rüstaktionen an jeder Aktionsvorrichtung 130 durchführbar sind.

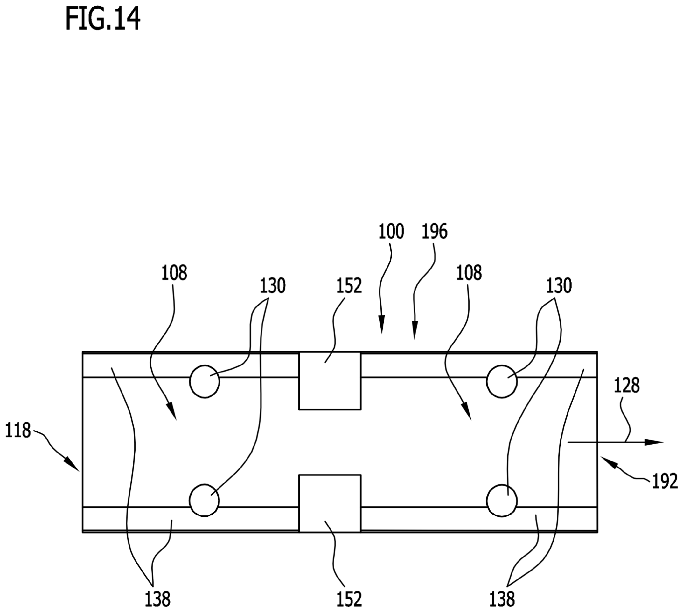

Eine in Fig. 14 dargestellte alternative Ausführungsform einer Behandlungsanlage 100 unterscheidet sich von der in Fig. 13 dargestellten Ausführungsform im Wesentlichen dadurch, dass lediglich zwei Zugriffsbereiche 152 vorgesehen sind, welche zwischen jeweils zwei Aktionsvorrichtungen 130 angeordnet sind.

Jede Aktionsvorrichtung 130 teilt sich somit einen Zugriffsbereich 152 mit einer weiteren Aktionsvorrichtung 130.

Es kann vorgesehen sein, dass die bezüglich einer Förderrichtung 128 vor den Zugriffsbereichen 152 angeordneten Aktionsvorrichtungen 130 zur Behandlung von Werkstücken 102 in einem ersten Behandlungsbereich 108 dienen, während die in der Förderrichtung 128 nach den Zugriffsbereichen 152 angeordneten Aktionsvorrichtungen 130 zur Behandlung von Werkstücken 102 in einem weiteren Behandlungsbereich 108 dienen.

Somit sind die Zugriffsbereiche 152 bei der in Fig. 14 dargestellten Ausführungsform der Behandlungsanlage 100 jeweils mehreren Aktionsvorrichtungen 130 aus unterschiedlichen Behandlungsbereichen 108 zugeordnet.

Die in Fig. 14 dargestellte Ausführungsform der Behandlungsanlage 100 kann insbesondere in Behandlungslinien 196 Anwendung finden, während die in Fig. 13 dargestellte Ausführungsform der Behandlungsanlage 100 insbesondere eine Behandlungsbox 198 sein kann.

Die Führungselemente 138 zum Führen der Aktionsvorrichtungen 130 sind bei der in Fig. 14 dargestellten Ausführungsform der Behandlungsanlage 100 mittels der Zugriffsbereiche 152 unterbrochen.

Es kann jedoch auch vorgesehen sein, dass die Zugriffsbereiche 152 im Wesentlichen mittig an längs der Förderrichtung 128 durchgängigen Führungselementen 138 angeordnet und zur vertikalen Längsmittelebene des Behandlungsraums 110 versetzt angeordnet sind.

Im Übrigen stimmt die in Fig. 14 dargestellte Ausführungsform der Behandlungsanlage 100 hinsichtlich Aufbau und Funktion mit der in Fig. 13 dargestellten Ausführungsform überein, so dass auf deren vorstehende Beschreibung insoweit Bezug genommen wird.

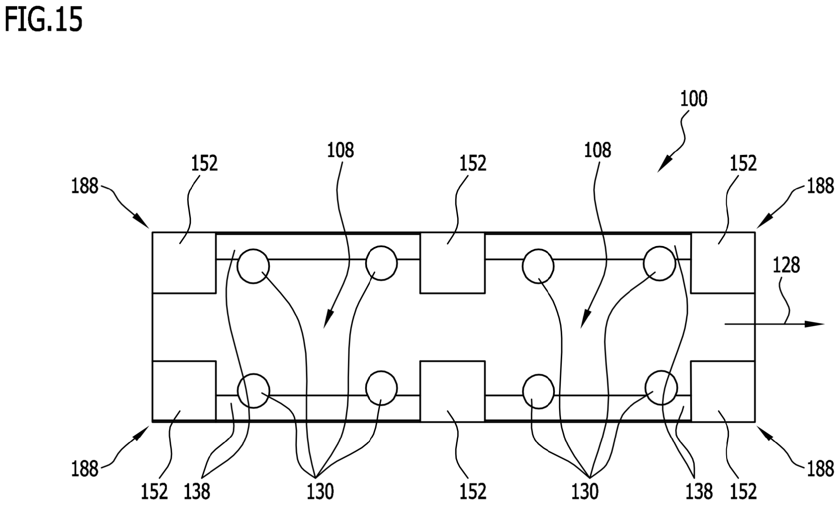

Eine in Fig. 15 dargestellte Ausführungsform einer Behandlungsanlage 100 unterscheidet sich von der in Fig. 14 dargestellten Ausführungsform im Wesentlichen dadurch, dass weitere Aktionsvorrichtungen 130 und weitere Zugriffsbereiche 152 vorgesehen sind. Insbesondere sind sechs Zugriffsbereiche 152 vorgesehen, wovon vier Zugriffsbereiche 152 in den Eckbereichen 188 angeordnet sind.

Zwei weitere Zugriffsbereiche 152 sind insbesondere im Wesentlichen mittig bezüglich der Förderrichtung 128 in dem Behandlungsraum 110 angeordnet.

Vorzugsweise sind hierbei acht Aktionsvorrichtungen 130 vorgesehen, wobei vier Führungselemente 138 zur Führung der insgesamt acht Aktionsvorrichtungen 130 vorgesehen sind.

Die Zugriffsbereiche 152 sind insbesondere an Enden der Führungselemente 138 angeordnet, so dass jede Aktionsvorrichtung 130 Zugang zu einem der Zugriffsbereiche 152 hat.

Im Übrigen stimmt die in Fig. 15 dargestellte Ausführungsform der Behandlungsanlage 100 hinsichtlich Aufbau und Funktion mit der in Fig. 14 dargestellten Ausführungsform überein, so dass auf deren vorstehende Beschreibung insoweit Bezug genommen wird.

Fig. 16 zeigt eine schematische Darstellung einer Luftführung, welche grundsätzlich bei sämtlichen dargestellten und/oder beschriebenen Behandlungsanlagen 100 vorgesehen sein kann.

Nachfolgend wird daher insbesondere auf die Behandlungsanlage 100 gemäß den Fig. 1 bis 10 Bezug genommen, da sämtliche Abweichungen, welche sich aus Fig. 16 ergeben, auch bei der Behandlungsanlage 100 gemäß den Fig. 1 bis 10 vorgesehen sein können.

Die Behandlungsanlage 100 umfasst gemäß Fig. 16 insbesondere eine Umluftführungsvorrichtung 200, mittels welcher ein Umluftstrom 184 zu dem Behandlungsbereich 108 zuführbar ist.

Ferner umfasst die Behandlungsanlage 100 eine Zuluftführungsvorrichtung 202, mittels welcher ein oder mehrere Zuluftströme 186, insbesondere Frischluftströme und/oder Hallenluftströme, durch die Einlässe 162 zu den Zugriffsbereichen 152 zuführbar sind.

Die Zuführung des Umluftstroms 184 sowie des Zuluftstroms 186 erfolgt insbesondere über ein Plenum 204, beispielsweise ein Split-Plenum oberhalb des Behandlungsraums 110.

Unter dem Behandlungsraum 110 ist insbesondere eine Abscheidevorrichtung 206 der Behandlungsanlage 10 vorgesehen, mittels welcher der aus dem Behandlungsraum 110 abgeführte Gasstrom von Verunreinigungen befreit werden kann.

Wie Fig. 16 zu entnehmen ist, werden beispielsweise im Bereich eines Rohgasschachts 208 unterhalb des Behandlungsraums 110 der Umluftstrom 184 und der eine oder die mehreren Zuluftströme 186 zusammengeführt und hierdurch vermischt.

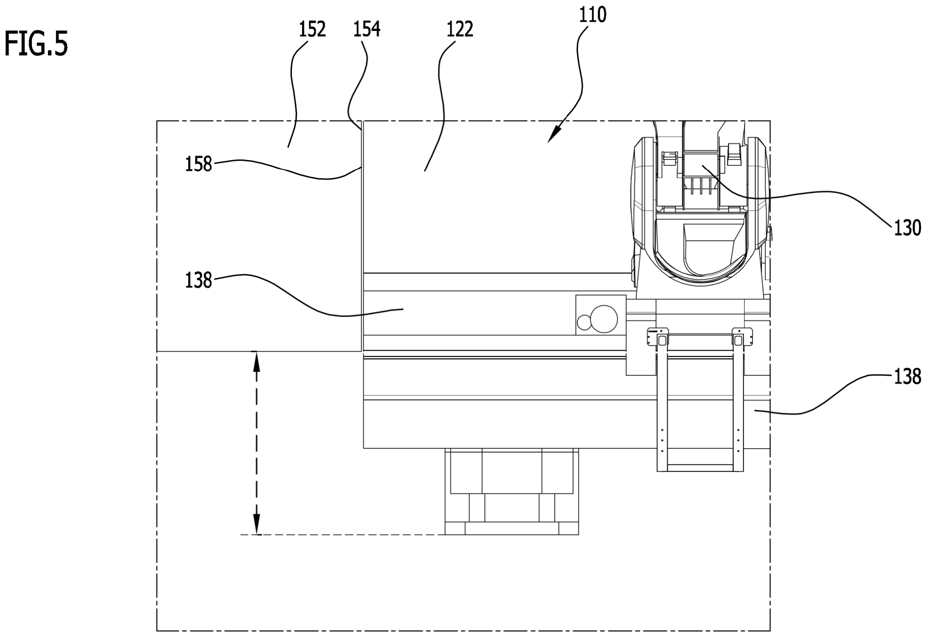

Ein Teil des so erhaltenen Gesamtstroms wird als Umluftstrom 184 erneut dem Behandlungsbereich 108 zugeführt. Die Rückführung des Umluftstroms 184, das heißt die Zuführung aus dem unterhalb des Behandlungsraums 110 angeordneten Bereich der Behandlungsanlage 100 in den oberhalb des Behandlungsraums 110 angeordneten Bereich des Plenums 204 erfolgt vorzugsweise innerhalb einer Außenkontur der Behandlungsanlage 100, wobei beispielsweise gemäß Fig. 5 insbesondere ein Breitenbereich genutzt werden kann, welcher aufgrund über die Seitenwandung 114 hinausstehender Komponente der Führungselemente 138 und/oder Aktionsvorrichtungen 130 an der Außenseite der Seitenwände 114 vorhanden ist.

Wie Fig. 16 ferner zu entnehmen ist, wird vorzugsweise ein Teil des Gesamtstroms über eine Abluftführung 210 der Behandlungsanlage 100 als Abluft abgeführt.

Der als Abluft abgeführte Teil entspricht zur Aufrechterhaltung eines konstanten Drucks im Wesentlichen dem als Zuluft zugeführten Teil.

Zur Zusammenführung des Umluftstroms 184 mit dem einen oder den mehreren Zuluftströmen 186 existieren mehrere Optionen.

Beispielsweise kann vorgesehen sein, dass der mindestens eine Zuluftstrom 186 ausschließlich durch die Zugangsöffnungen 166 hindurch in den Behandlungsbereich 108 einströmt.

Alternativ oder ergänzend hierzu kann vorgesehen sein, dass oberhalb oder unterhalb der Bodenwand 122 in einem bezüglich der Schwerkraftrichtung g unteren Endbereich des Zugriffsbereichs 152 ein oder mehrere Auslässe 164 vorgesehen sind, durch welche der mindestens eine Zuluftstrom 186 zu dem Umluftstrom 184 geführt wird.

Die Auslässe 164 können insbesondere über der Bodenwand 122 angeordnet werden und münden somit in den Behandlungsbereich 108.

Ein oder mehrere Auslässe 164 sind vorzugsweise der vertikalen Längsmittelebene 136 des Behandlungsraums 110 zugewandt angeordnet oder aber beispielsweise senkrecht hierzu verlaufend ausgerichtet, das heißt in quer, insbesondere senkrecht, zur vertikalen Längsmittelebene 136 des Behandlungsraums 110 ausgerichteten Trennelementen 154 angeordnet oder ausgebildet.

Ferner kann vorgesehen sein, dass ein oder mehrere Auslässe 164 unmittelbar in den Rohgasschacht 208 münden und somit erst im Rohgasschacht 208 die Vermischung des Umluftstroms 184 mit dem mindestens einen Zuluftstrom 186 erfolgt.

Vorteilhaft kann es ferner sein, wenn ein Auslass 164 vorgesehen ist, welcher in demselben Trennelement 154 wie die Zugangsöffnung 166 angeordnet ist, wobei der Auslass 164 insbesondere vertikal direkt unter der Zugangsöffnung 166 angeordnet ist.

Günstig kann es sein, wenn ein oder mehrere oder sämtliche Auslässe 164 hinsichtlich einer jeweiligen Querschnittsfläche zur Einstellung, insbesondere zur Steuerung oder Regelung, eines Volumenstroms einstellbar sind, beispielsweise manuell oder automatisch mittels einer Ventilvorrichtung oder Klappenvorrichtung. Hierdurch kann insbesondere auf die Strömungsverhältnisse und/oder Strömungsführung innerhalb des Behandlungsraums 110 eingewirkt werden.

Durch geeignete Führung des Umlufstroms 184 und/oder der Zuluftströme 186 können insbesondere in dem mindestens einen Zugriffsbereich 152 atmosphärische Bedingungen mit minimalen Schadstoffkonzentrationen erzielt werden, welche einen ungeschützten Aufenthalt ein oder mehrerer Personen in dem mindestens einen Zugriffsbereich 152 erlauben. Die Behandlung von Werkstücken 102 im Behandlungsbereich 108 steht somit der Durchführung von Wartungs- und/oder Rüstaktionen an den einen oder den mehreren Aktionsvorrichtungen 130 nicht im Wege. Die Behandlungsanlage 100 kann somit besonders effizient zur Werkstückbehandlung genutzt werden.

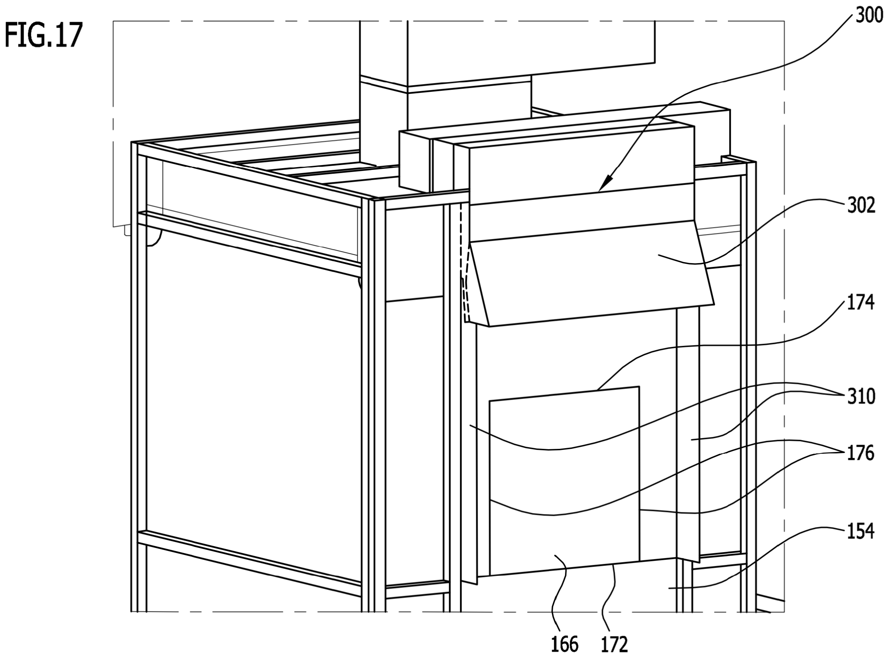

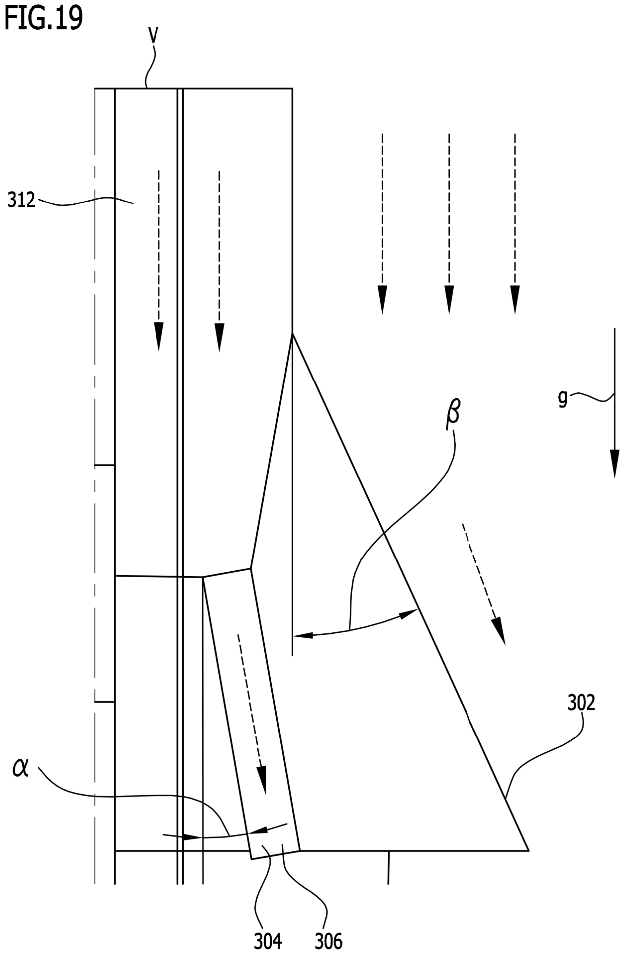

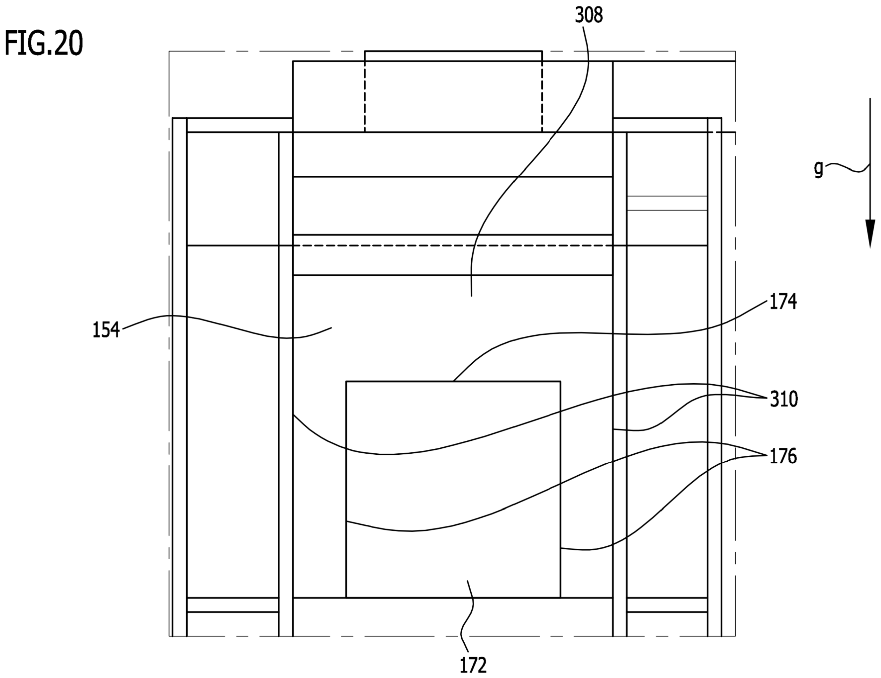

In den Fig. 17 bis 20 ist eine optionale Weiterbildung der Behandlungsanlage 100 dargestellt.

Diese Weiterbildung kann grundsätzlich bei sämtlichen Behandlungsanlagen 100 vorgesehen sein, bei welchen ein Behandlungsbereich 108 mittels eines Trennelements 154 von einem Zugriffsbereich 152 getrennt ist.

Insbesondere dann, wenn in dem Trennelement 154 eine Zugangsöffnung 166 angeordnet ist, kann mittels einer Luftvorhangsvorrichtung 300 gemäß der in den Fig. 17 bis 20 dargestellten Ausführungsform eine vorteilhafte fluidwirksame Trennung der im Behandlungsbereich 108 herrschenden Atmosphäre einerseits von der im Zugriffsbereich 152 herrschenden Atmosphäre andererseits erzielt werden.

Die Luftvorhangsvorrichtung 300 umfasst hierzu vorzugsweise ein Ablenkelement 302, welches beispielsweise als ein schräg zur Schwerkraftrichtung g ausgerichtetes Leitblech ausgebildet ist. Das Ablenkelement 302 schließt beispielsweise einen Winkel β von 25° mit der Schwerkraftrichtung g ein.

Mittels des Ablenkelements 302 kann ein längs der Schwerkraftrichtung g von oben nach unten durch den Behandlungsbereich 108 hindurchgeführter Luftstrom von dem Trennelement 154 weggeleitet werden, insbesondere um ein Einströmen des durch den Behandlungsbereich 108 strömenden Luftstroms durch die Zugangsöffnung 166 hindurch in den Zugriffsbereich 152 hinein zu vermeiden.

Die Luftvorhangsvorrichtung 300 umfasst ferner vorzugsweise eine oder mehrere Düsen 304, beispielsweise eine Schlitzdüse 306.

Die Schlitzdüse 306 ist insbesondere unter dem Ablenkelement 302 angeordnet und ermöglicht ein Einströmen von Luft, beispielsweise Zuluft, insbesondere Frischluft, in den unter dem Ablenkelement 302 befindlichen Raumbereich.

Die über die Düse 304 zugeführte Luft wird insbesondere in einem Winkel α (Düsenwinkel) zwischen dem Trennelement 154 und dem Ablenkelement 302 zugeführt, wobei der Winkel α beispielsweise ungefähr 15° beträgt. Dieser Winkel α ist vorzugsweise manuell und/oder automatisch, beispielsweise motorisch, einstellbar, insbesondere während der Inbetriebnahme der Luftvorhangsvorrichtung 300 und/oder während des Betriebs der Luftvorhangsvorrichtung 300.

Die über die Düse 304 zugeführte Luft strömt insbesondere längs des Trennelements 154 in der Schwerkraftrichtung g nach unten und bildet somit einen Luftschleier auf dem Trennelement 154, das heißt zwischen dem Trennelement 154 und der den Behandlungsbereich 108 durchströmenden Luft.

Das Ablenkelement 302 und die Düse 304 sind vorzugsweise beabstandet von der Zugangsöffnung 166 angeordnet, so dass sich in einem die Zugangsöffnung 166 umgebenden, insbesondere ebenen, Trennelementabschnitt 308 des Trennelements 154 eine gleichmäßige und/oder laminare Strömung einstellen kann. Hieraus resultieren vorzugsweise geringe Verwirbelungen im Bereich der Zugangsöffnung 166 und somit eine effiziente fluidwirksame Trennung des Behandlungsbereichs 108 von dem Zugriffsbereich 152.

Zu beiden Seiten der Zugangsöffnung 106, insbesondere ausgehend von dem Ablenkelement 302 bis mindestens zur Unterkante 172 der Zugangsöffnung 106 erstrecken sich vorzugsweise zwei Seitenleitelemente 310, der Luftvorhangsvorrichtung 300.

Die Seitenleitelemente 310 ragen insbesondere senkrecht von Trennelement 154 weg und erstrecken sich in im Wesentlichen vertikaler Richtung und parallel zueinander.

Mittels der Seitenleitelemente 310 kann vorzugsweise ebenfalls eine laminare Strömung im Bereich der Zugangsöffnung 166 optimiert werden. Insbesondere können seitliche Verwirbelungen oder Querströmungen mittels der Seitenleitelemente 310 vorzugsweise minimiert oder ganz vermieden werden.

Die der Düse 304 zugeführte Luft wird insbesondere über einen Düsenkasten 312 der Luftvorhangsvorrichtung 300 zu der Düse 304 zugeführt. Zur optimalen und/oder gleichmäßigen Luftbereitstellung über den Düsenkasten 312 an der Düse 304 weist dieser vorzugsweise eine Höhe von mindestens ungefähr 70 mm, insbesondere mindestens ungefähr 100 mm, auf.

Der Düsenkasten 312 wiederum wird beispielsweise von einem (nicht dargestellten) Ventilator gespeist, wobei zusätzliche Konditioniervorrichtungen zum Erwärmen, Abkühlen, Befeuchten und/oder Entfeuchten des der Düse 304 zuzuführenden Luftstroms vorgesehen sein können.

Insbesondere ist der Düsenkasten 312 samt der Düse 304 Bestandteil der Luftführungsvorrichtung 199, insbesondere der Zuluftführungsvorrichtung 202.

Mittels der Luftführungsvorrichtung 199 ist vorzugsweise ein Luftstrom einerseits dem Düsenkasten 312 und andererseits einem Verteilerkanal 314 zuführbar, mittels welchem wiederum einem oder mehreren Zuführkanälen 316 der Behandlungsanlage 100 Luft zuführbar ist.

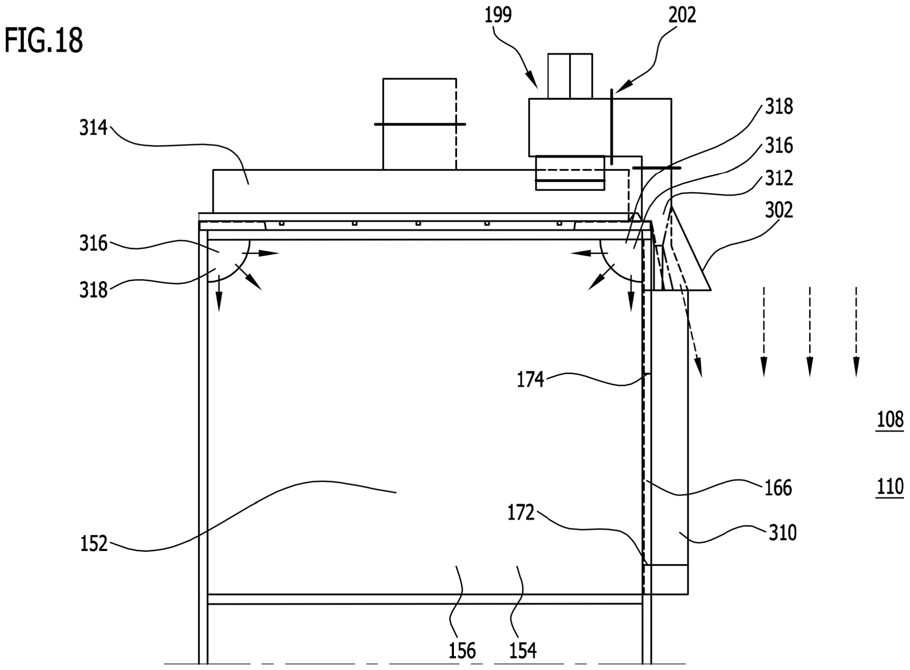

Der eine oder die mehreren Zuführkanäle 316 münden beispielsweise in eine oder mehrere Fächerdüsen 318, beispielsweise derartige Fächerdüsen 318, welche viertelzylinderförmig und/oder im Querschnitt viertelkreisförmig ausgebildet sind und/oder in zwei Eckbereichen an einem bezüglich der Schwerkraftrichtung g oberen Ende des Zugriffsbereichs 152 angeordnet sind (siehe insbesondere Fig. 18).

Über die Fächerdüsen 318 kann vorzugsweise ein Luftstrom, insbesondere ein Zuluftstrom, beispielsweise ein Frischluftstrom, zu dem Zugriffsbereich 152 zugeführt werden.

Alternativ oder ergänzend zu Fächerdüsen können beispielsweise Textilkanäle vorgesehen sein, bei welchen die Luft durch eine Textilwandung hindurch in den Zugriffsbereich 152 strömen kann.

Durch geeignete Auswahl der Strömungsgeschwindigkeiten, der Strömungsrichtungen, der Leitelemente, insbesondere Seitenleitelemente 310, der Ablenkelemente 302, der Winkel α, β und/oder der Lufttemperaturen kann vorzugsweise eine fluidwirksame Trennung des Zugriffsbereichs 152 von dem Behandlungsbereich 108 optimiert werden.

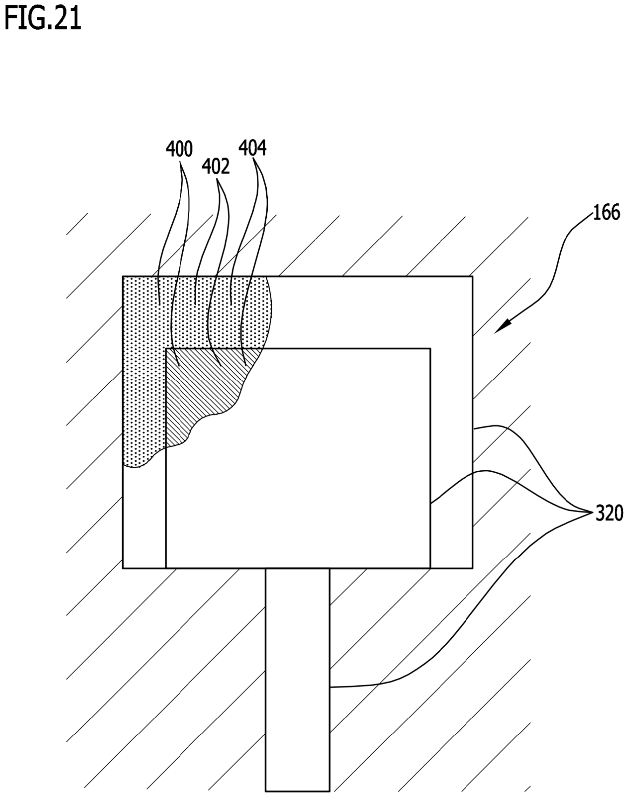

Eine in Fig. 21 dargestellte Vorderansicht einer Zugangsöffnung 166 zeigt eine alternative Ausführungsform einer Zugangsöffnung 166, bei welcher nicht nur ein vorgegebener Querschnitt dauerhaft geöffnet oder temporär öffenbar ist, sondern bei welchem vielmehr verschiedene Öffnungsabschnitte 320 vorgesehen sind, welche betriebsmodusabhängig oder abhängig von sonstigen Rahmenbedingungen geöffnet und/oder geschlossen werden können.

Insbesondere können beispielsweise die folgenden Öffnungsabschnitte 320 vorgesehen sein:
Ein beispielsweise rechteckiger Minimalöffnungsabschnitt, welcher von einem beispielsweise rechteckigen Maximalöffnungsabschnitt umgeben ist.

Zudem kann beispielsweise ein Zusatzöffnungsabschnitt, insbesondere ein länglicher Zusatzöffnungsabschnitt unterhalb des Minimalöffnungsabschnitts und des Maximalöffnungsabschnitts, vorgesehen sein.

Der Minimalöffnungsabschnitt ist beispielsweise ein temporär öffenbares oder permanent durchgängiges Fenster, welches insbesondere zum Schutz vor Durchstieg eine Kantenlänge von vorzugsweise weniger als 545 mm aufweist. Alternativ hierzu kann eine Kantenlänge von beispielsweise höchstens ungefähr 900 mm vorgesehen sein, wobei dann vorzugsweise eine zusätzliche Durchstiegsicherung vorgesehen ist. Der Minimalöffnungsabschnitt dient insbesondere der Durchführung von Kurzzeitwartungsarbeiten.

Der Maximalöffnungsabschnitt weist vorzugsweise größere Abmessungen auf als der Minimalöffnungsabschnitt und ist vorzugsweise mechanisch verschließbar, zumindest der über den Minimalöffnungsabschnitt hinausgehende Teil des Maximalöffnungsabschnitts, wenn sich die beiden Öffnungsabschnitte überlappen. Eine maximale Kantenlänge des Maximalöffnungsabschnitts beträgt vorzugsweise höchstens ungefähr 1400 mm, beispielsweise höchstens ungefähr 1200 mm, insbesondere höchstens ungefähr 1000 mm. Der Maximalöffnungsabschnitt dient insbesondere für längere Wartungsarbeiten, beispielsweise für die Zeit eines Teiletauschs an einer Aktionsvorrichtung 130.

Der Zusatzöffnungsabschnitt kann beispielsweise ebenso eine verschließbare Zusatzöffnung für den Minimalöffnungsabschnitt bieten wie der Maximalöffnungsabschnitt, wobei die Form des Zusatzöffnungsabschnitts vorzugsweise an eine Form einer zu wartenden Aktionsvorrichtung 130 angepasst ist. Insbesondere kann der Zusatzöffnungsabschnitt eine Höhe von mindestens ungefähr 600 mm und/oder höchstens ungefähr 1000 mm, beispielsweise ungefähr 800 mm, und/oder eine Breite von mindestens ungefähr 200 mm und/oder höchstens ungefähr 600 mm, beispielsweise ungefähr 300 mm, aufweisen. Der Zusatzöffnungsabschnitt dient insbesondere der Wartung und/oder Reinigung einer Aktionsvorrichtung 130.

Vorzugsweise sind an einer oder mehreren Zugangsöffnungen 166 jeweils ein oder mehrere Sperrelemente 400 angeordnet oder anordenbar. Mittels der Sperrelemente 400 sind vorzugsweise einzelne oder mehrere oder sämtliche Öffnungsabschnitte 320 der jeweiligen Zugangsöffnung 166 mechanisch verschließbr. Beispielsweise sind die Sperrelemente 400 Klappen 402 oder Türen 404, welche beispielsweise mittels eines oder mehrerer Scharniere oder Schiebeelemente wahlweise in eine Offenstellung oder in eine Sperrstellung bringbar sind.

Ein oder mehrere oder sämtliche Sperrelemente 400 sind optional teilweise oder vollständig transparent, insbesondere für Personen durchsichtig. Insbesondere kann vorgesehen sein, dass ein oder mehrere oder sämtliche Sperrelemente 400 aus einem transparenten Material gebildet sind oder ein solches umfassen. Alternativ oder ergänzend hierzu kann vorgesehen sein, dass ein oder mehrere oder sämtliche Sperrelemente 400 nicht vollständig durchgängig, sondern beispielsweise unterbrochen, beispielsweise als Gitter, ausgebildet und/oder angeordnet sind.

Ein oder mehrere oder sämtliche Sperrelemente 400 sind optional automatisch, insbesondere selbsttätig und/oder maschinell angetrieben, in eine Sperrstellung und/oder in eine Offenstellung bringbar.

Alternativ oder ergänzend hierzu kann vorgesehen sein, dass ein oder mehrere oder sämtliche Sperrelemente 400 manuell, insbesondere von einer Person, beispielsweise einem Werker, in eine Sperrstellung und/oder in eine Offenstellung bringbar sind.

Die in Fig. 21 dargestellte Zugsangsöffnung 166 oder Varianten hiervon können grundsätzlich jede der vorstehend beschriebenen Zugangsöffnungen 166 ersetzen.

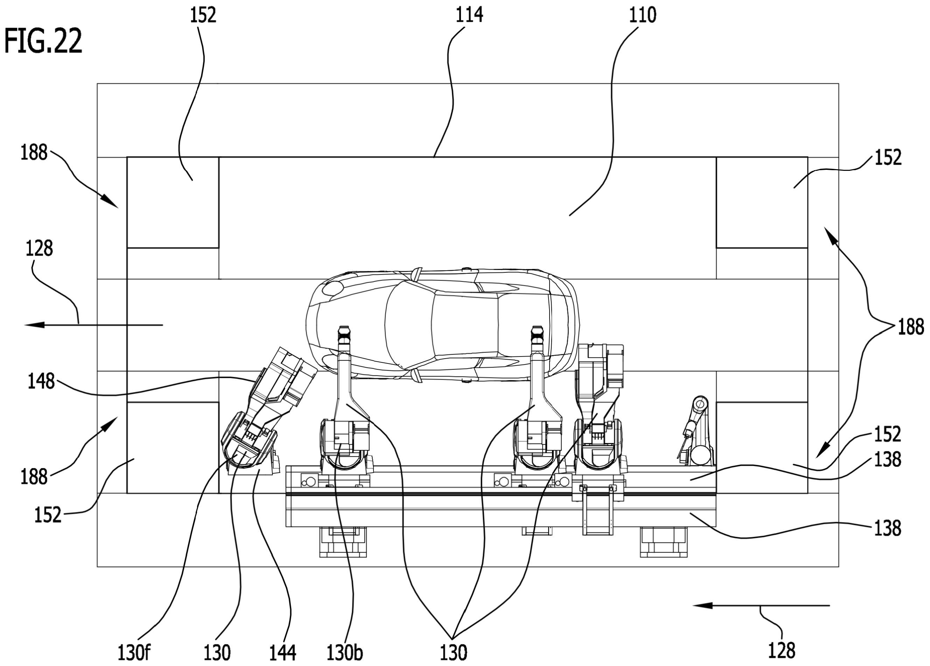

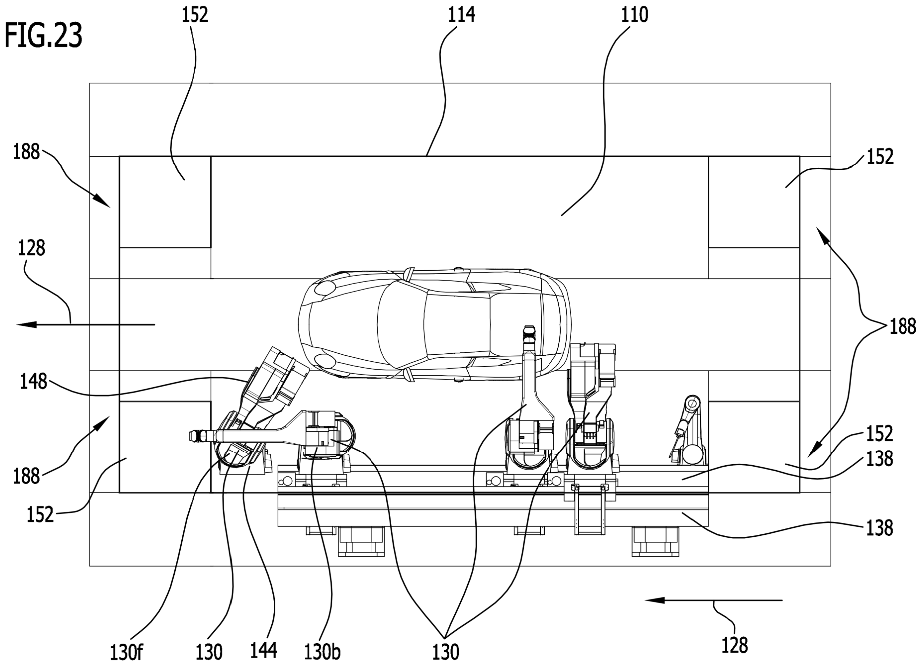

In den Fig. 22 und 23 ist eine alternative Ausführungsform einer Behandlungsanlage 100 dargestellt, welche sich von der in den Fig. 1 bis 10 dargestellten Ausführungsform im Wesentlichen dadurch unterscheidet, dass die Behandlungsanlage 100 eine oder mehrere feststehende Aktionsvorrichtungen 130f umfasst. Eine feststehende Aktionsvorrichtung 130f ist eine Aktionsvorrichtung 130, welche eine ortsfeste und/oder unbewegliche Aktionsbasis 144 umfasst. Ein Aktionsarm 148 einer solchen Aktionsvorrichtung 130 ist relativ zu der Aktionsbasis 144 bewegbar, nicht jedoch gemeinsam mit der Aktionsbasis 144.

Zusätzlich zu der einen oder den mehreren feststehenden Aktionsvorrichtungen 130f umfasst die Behandlungsanlage 100 gemäß den Fig. 22 und 23 eine oder mehrere bewegliche Aktionsvorrichtungen 130b, bei welchen die jeweilige Aktionsbasis 144 beweglich, insbesondere längs eines Führungselements 138 verschiebbar, angeordnet und/oder ausgebildet ist.

Die feststehende Aktionsvorrichtung 130f ist bezogen auf die Förderrichtung 128 zwischen einer oder mehreren beweglichen Aktionsvorrichtungen 130b einerseits und einem Zugriffsbereich 152 andererseits angeordnet, wobei dieser feststehenden Aktionsvorrichtung 130f und dieser einen oder diesen mehreren beweglichen Aktionsvorrichtungen 130b derselbe Zugriffsbereich 152 zugeordnet ist.

Wie Fig. 23 zu entnehmen ist, können eine oder mehrere bewegliche Aktionsvorrichtungen 130b eine oder mehrere feststehende Aktionsvorrichtungen 130f vorzugsweise übergreifen oder umgreifen, insbesondere an einer Oberseite und/oder an einer einer Mitte des Behandlungsraums 110 abgewandten Seite eines Aktionsarms 148 der einen oder der mehreren feststehenden Aktionsvorrichtungen 130f, um ein Aktionselement 146 der jeweiligen beweglichen Aktionsvorrichtung 130b zu dem Zugriffsbereich 152 zuzuführen oder in den Zugriffsbereich 152 einzuführen.

In den Fig. 22 und 23 sind die Aktionsvorrichtungen 130 nur einseitig dargestellt. Auf der gegenüberliegenden Seite des Behandlungsraums 110 ist vorzugsweise eine identische Konfiguration der Aktionsvorrichtungen 130 vorgesehen, wobei diese im Wesentlichen symmetrisch zu einer vertikalen Längsmittelebene des Behandlungsraums 110 oder aber symmetrisch bezüglich einer vertikalen Längsmittelachse des Behandlungsraums 110 angeordnet sein können. Die feststehenden Aktionsvorrichtungen 130f sind dann entsprechend vorzugsweise bezüglich der vertikalen Längsmittelebene einander gegenüberliegend oder aber einander diagonal gegenüberliegend angeordnet.

Im Übrigen stimmt die in den Fig. 22 und 23 dargestellte Ausführungsform der Behandlungsanlage 100 hinsichtlich Aufbau und Funktion mit der in den Fig. 1 bis 10 dargestellten Ausführungsform überein, so dass auf deren vorstehende Beschreibung insoweit Bezug genommen wird.

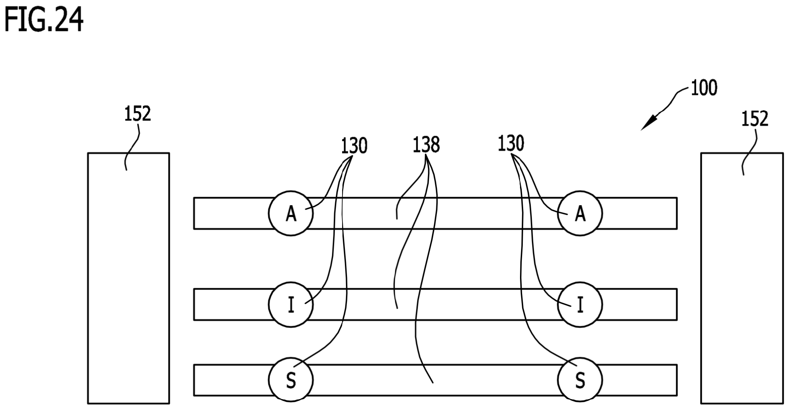

In den Fig. 24 bis 26 sind unterschiedliche Varianten zur Anordnung und Befestigung der Aktionsvorrichtungen 130 dargestellt. Alle diese Varianten und sich daraus ergebende weitere Varianten können für jede der beschriebenen Varianten von Behandlungsanlagen 100 verwendet werden.

Gemäß Fig. 24 sind zwischen zwei Zugriffsbereichen 152 drei Führungselemente 138 vorgesehen. Jedes Führungselement 138 trägt jeweils zwei Aktionsvorrichtungen 130, so dass die insgesamt sechs Aktionsvorrichtungen 130 bewegliche Aktionsvorrichtungen 130 sind. Die Aktionsvorrichtungen 130 eines jeden Führungselements 138 sind funktional zumindest hinsichtlich der jeweiligen Hauptfunktion identisch. Beispielsweise sind an einem obersten Führungselement 138 zwei als Außenlackierroboter A ausgebildete Aktionsvorrichtungen 130 angeordnet. An einem untersten Führungselement 138 sind beispielsweise zwei als Handhabungsroboter S (beispielsweise sogenannte Scaras) ausgebildete Aktionsvorrichtungen 130 angeordnet. Dazwischen sind an einem mittleren Führungselement 138 beispielsweise zwei als Innenlackierroboter I ausgebildete Aktionsvorrichtungen 130 angeordnet.

Alternativ zu der in Fig. 24 dargestellten Ausführungsform kann vorgesehen sein, dass das unterste Führungselement 138 wegfällt und ein oder mehrere Handhabungsroboter S als feststehende Aktionsvorrichtungen 130f ausgebildet ist. Insbesondere kann hierbei ein einziger Handhabungsroboter S an und/oder unter einem Endbereich der beiden verbleibenden Führungselemente 138 vorgesehen sein, welcher insbesondere der Öffnung einer Fronthaube oder Heckhaube eines Werkstücks 102 dient. Eine oder mehrere Türen des Werkstücks 102 sind dann beispielsweise mittels einer oder mehrerer der beweglichen Aktionsvorrichtungen 130b öffenbar. Alternativ hierzu kann ferner vorgesehen sein, dass eine oder mehrere Türen des Werkstücks 102 beispielsweise mittels eines oder mehrerer als feststehende Aktionsvorrichtungen 130f ausgebildeter Handhabungsroboter S öffenbar sind, während eine Fronthaube und/oder Heckhaube des Werkstücks 102 insbesondere mittels einer oder mehrerer feststehender Aktionsvorrichtungen 130f öffenbar sind.

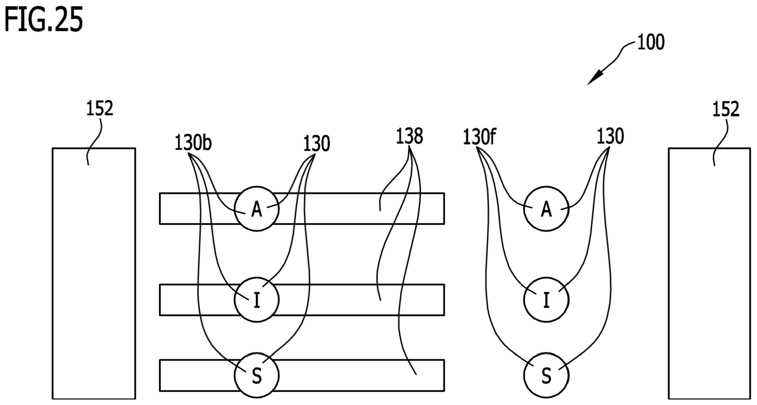

Gemäß Fig. 25 sind zwischen zwei Zugriffsbereichen 152 drei Führungselemente 138 vorgesehen. Diese sind jedoch verkürzt ausgebildet und tragen jeweils nur eine einzige Aktionsvorrichtung 130. Zusätzlich zu den hierdurch gebildeten beweglichen Aktionsvorrichtungen 130b sind gemäß Fig. 25 drei feststehende Aktionsvorrichtungen 130f vorgesehen. Dabei sind jeweils eine bewegliche Aktionsvorrichtung 130b und eine feststehende Aktionsvorrichtung 130f funktional identisch ausgebildet und/oder auf zumindest näherungsweise identischer Höhe im Behandlungsraum 110 montiert. Die obersten Aktionsvorrichtungen 130 sind dabei beispielsweise als Außenlackierroboter A ausgebildet. Die untersten Aktionsvorrichtungen 130 sind beispielsweise als Handhabungsroboter S (beispielsweise sogenannte Scaras) ausgebildet. Die dazwischen angeordneten Aktionsvorrichtungen 130 sind beispielsweise als Innenlackierroboter I ausgebildet. Vorzugsweise sind die feststehenden Aktionsvorrichtungen 130f einem der Zugriffsbereiche 152 zugeordnet, während die beweglichen Aktionsvorrichtungen 130b einem weiteren der Zugriffsbereiche 152 zugeordnet sind.

Alternativ zu der in Fig. 25 dargestellten Ausführungsform kann vorgesehen sein, dass das in Fig. 25 obere Führungselement 138 samt der oberen Aktionsvorrichtungen 130 entfällt und dass ein insbesondere von einem Zugriffsbereich 152 zu einem weiteren Zugriffsbereich 152 durchgängiges Führungselement 138 mit zwei oder mehr als zwei insbesondere beweglichen Aktionsvorrichtungen 130b versehen ist, wobei diese beweglichen Aktionsvorrichtungen 130b vorzugsweise Universallackierroboter sind, welche sowohl der Außenlackierung als auch der Innenlackierung dienen. An demselben oder einem weiteren Führungselement 138, insbesondere in einem Endbereich an demselben Führungselement 138, kann insbesondere eine als Handhabungsroboter S ausgebildete Aktionsvorrichtung 130 angeordnet sein, wobei diese Aktionsvorrichtung 130 eine feststehende Aktionsvorrichtung 130f oder aber eine bewegliche Aktionsvorrichtung 130b ist. Unterhalb des genannten Führungselements 138 kann dann insbesondere ein im Vergleich hierzu verkürzt ausgebildetes weiteres Führungselement 138 angeordnet sein, welches beispielsweise ausschließlich eine als Handhabungsroboter S ausgebildete feststehende Aktionsvorrichtung 130f oder bewegliche Aktionsvorrichtung 130b trägt.

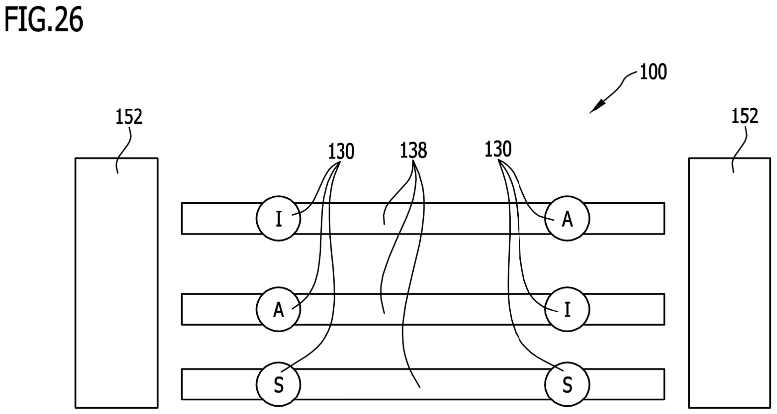

Die Variante gemäß Fig. 26 entspricht weitestgehend der in Fig. 24 dargestellten Variante, wobei die Führungselemente 138 teilweise mit funktional unterschiedlichen Aktionsvorrichtungen 130 versehen sind. So ist das oberste Führungselement 138 beispielsweise mit einer als Innenlackierroboter I ausgebildeten Aktionsvorrichtung 130 und mit einer als Außenlackierroboter A ausgebildeten Aktionsvorrichtung 130 versehen. Das mittlere Führungselement 138 ist beispielsweise ebenfalls mit einer als Innenlackierroboter I ausgebildeten Aktionsvorrichtung 130 und mit einer als Außenlackierroboter A ausgebildeten Aktionsvorrichtung 130 versehen. Die funktional unterschiedlichen Aktionsvorrichtungen 130 sind dabei so angeordnet, dass auf jeder Seite der Führungselemente 138 und somit jedem Zugriffsbereich 152 zugeordnet jeweils drei funktional verschiedene Aktionsvorrichtungen 130 vorgesehen sind. Hierdurch sind funktional unterschiedliche Aktionsvorrichtungen 130 auf unterschiedlichen Höhen im Behandlungsraum 110 und zudem an unterschiedlichen Seiten der Führungselemente 138 bereitgestellt, wodurch vorzugsweise eine optimierte, insbesondere beschleunigte, Werkstückbehandlung ermöglich werden kann.

Die Fig. 24 bis 26 zeigen die Aktionsvorrichtungen 130 nur einseitig im Behandlungsraum 110. Auf der gegenüberliegenden Seite des Behandlungsraums 110 ist vorzugsweise jeweils eine identische Konfiguration der Führungselemente 138 und der Aktionsvorrichtungen 130 vorgesehen, wobei diese im Wesentlichen symmetrisch zu einer vertikalen Längsmittelebene des Behandlungsraums 110 oder aber symmetrisch bezüglich einer vertikalen Längsmittelachse des Behandlungsraums 110 angeordnet sein können. Zudem kann vorgesehen sein, dass auf den beiden Seiten des Behandlungsraums 110 voneinander abweichende Konfigurationen der Führungselemente 138 und der Aktionsvorrichtungen 130 vorgesehen sind, beispielsweise auf einer der Seiten die Konfiguration gemäß Fig. 25 und auf der weiteren Seite die Konfiguration gemäß Fig. 26.

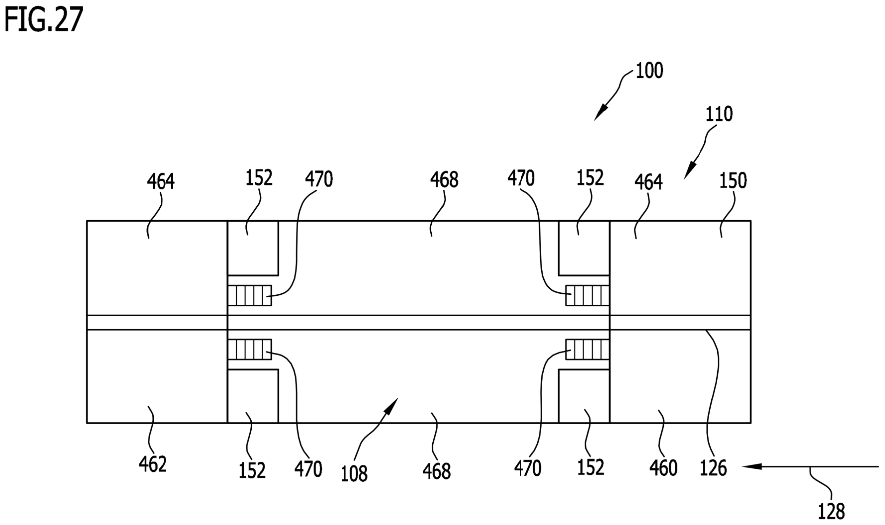

Fig. 27 zeigt eine bevorzugte Ausführungsform eines begehbaren Bodens 150 einer Behandlungsanlage 100. Diese Ausführungsform kann sämtliche vorstehend beschriebenen Ausführungsformen teilweise oder vollständig ersetzen oder ergänzen.

Bei der dargestellten Ausführungsform des begehbaren Bodens 150 ist vorgesehen, dass dieser sich auf unterschiedlichen Höhenniveaus erstreckt. Der begehbare Boden 150 ist insbesondere ein Gitterrostboden oder umfasst einen solchen.

In einem Einlaufbereich 460 und/oder in einem Auslaufbereich 462 des Behandlungsraums 110 ist ein Normalniveau 464 des begehbaren Bodens 150 vorgesehen. Das Normalniveau 464 ist insbesondere ein Höhenniveau, welches ein Überschreiten der Fördervorrichtung 126 in einer Querrichtung 466 ermöglicht, insbesondere unter Einhaltung der bestehenden Sicherheitsvorschriften.

Im Behandlungsbereich 108, insbesondere zwischen dem Einlaufbereich 460 und dem Auslaufbereich 462, ist vorzugsweise ein abgesenktes Niveau 468 vorgesehen, in welchem der begehbare Boden 150 tiefer ist als im Einlaufbereich 460 und/oder im Auslaufbereich 462. Der begehbare Boden 150 ist im Bereich des abgesenkten Niveaus 468 vorzugsweise mindestens ungefähr 300 mm, beispielsweise mindestens ungefähr 400 mm, insbesondere ungefähr 500 mm, tiefer als das Normalniveau 464.

Eine Verbindung zwischen dem abgesenkten Niveau 468 und dem Normalniveau 464 ist vorzugsweise durch eine oder mehrere Treppen 470 gebildet, wobei die eine oder die mehreren Treppen 470 beispielsweise bezüglich einer horizontal und senkrecht zur Förderrichtung 128 verlaufenden Querrichtung 466 zwischen zwei Zugriffsbereichen 152 angeordnet sind, insbesondere beidseitig der Fördervorrichtung 126 zum Fördern der Werkstücke 102.

Das Höhenniveau in den Zugriffsbereichen 152 kann insbesondere an eine gewünschte Zugriffshöhe für einen komfortablen Zugriff auf die Aktionsvorrichtungen 130 angepasst sein. Beispielsweise kann hier das Normalniveau 464 oder auch ein gegenüber dem Normalniveau 464 erhöhtes Niveau vorgesehen sein. Ferner kann in den Zugriffsbereichen 152 optional ein Umgebungsniveau 472 vorgesehen sein, so dass Personen ohne Überwinden eines Höhenunterschieds von einer Umgebung der Behandlungsanlage 100 in die Zugriffsbereiche 152 eintreten können.

Durch die unterschiedlichen Höhenniveaus des begehbaren Bodens 150 kann vorzugsweise der Vorteil erzielt werden, dass die Aktionsvorrichtungen 130 einen im Vergleich zu einheitlich durchgängigen Böden erhöhten Bewegungsraum erhalten, ohne dass sich hierdurch Probleme mit der Arbeitssicherheit ergeben. Zudem kann durch die Verwendung des abgesenkten Niveaus 468 eine Umströmung des Werkstücks 102 optimiert werden, da in Werkstücknähe weniger Störkonturen zur Beeinflussung der Strömung vorhanden sind.

Bevorzugte Ausführungsformen sind die folgenden:
1. Behandlungsanlage (100) zum Behandeln von Werkstücken (102), insbesondere Fahrzeugkarosserien (106), wobei die Behandlungsanlage (100) vorzugsweise Folgendes umfasst:
   - einen Behandlungsbereich (108) zur Aufnahme von zu behandelnden Werkstücken (102);
   - eine oder mehrere Aktionsvorrichtungen (130) zur Durchführung einer oder mehrerer Aktionen an den zu behandelnden Werkstücken (102).
2. Behandlungsanlage (100) nach Ausführungsform 1, dadurch gekennzeichnet, dass die Behandlungsanlage (100) mindestens einen Zugriffsbereich (152) umfasst, von welchem aus und/oder an welchem die eine oder die mehreren Aktionsvorrichtungen (130) zumindest in einem Zugriffszustand derselben zugänglich sind.
3. Behandlungsanlage (100) nach Ausführungsform 2, dadurch gekennzeichnet, dass die Behandlungsanlage (100) eine oder mehrere Düsen (304) zur Zuführung eines Zuluftstroms umfasst, mittels welcher ein Luftvorhang erzeugbar ist, mittels welchem der Behandlungsbereich (108) und der mindestens eine Zugriffsbereich (152) voneinander trennbar sind.
4. Behandlungsanlage (100) nach Ausführungsform 3, dadurch gekennzeichnet, dass mittels einer oder mehrerer Düsen (304) verhinderbar ist, dass die im Behandlungsbereich (108) befindliche Luft in den mindestens einen Zugriffsbereich (152) strömt.
5. Behandlungsanlage (100) nach einer der Ausführungsformen 3 oder 4, dadurch gekennzeichnet, dass mittels einer oder mehrerer Düsen (304) ein Luftaustausch zwischen dem Behandlungsbereich (108) und dem einen oder den mehreren Zugriffsbereichen (152) verhinderbar oder zumindest minimierbar ist.
6. Behandlungsanlage (100) nach einer der Ausführungsformen 2 bis 5, dadurch gekennzeichnet, dass der mindestens eine Zugriffsbereich (152) ein räumlich von dem Behandlungsbereich (108) verschiedener und/oder getrennter Bereich ist.
7. Behandlungsanlage (100) nach einer der Ausführungsformen 1 bis 6, dadurch gekennzeichnet, dass mehrere Aktionsvorrichtungen (130) zumindest in einem Zugriffszustand derselben von einem gemeinsamen Zugriffsbereich (152) aus und/oder an einem gemeinsamen Zugriffsbereich (152) zugänglich sind.
8. Behandlungsanlage (100) nach einer der Ausführungsformen 1 bis 7, dadurch gekennzeichnet, dass eine oder mehrere Aktionsvorrichtungen (130) beweglich angeordnet und/oder ausgebildet sind und dass zumindest ein Teil der einen oder der mehreren Aktionsvorrichtungen (130) in den mindestens einen Zugriffsbereich (152) hinein und/oder an den mindestens einen Zugriffsbereich (152) heran bewegbar sind.
9. Behandlungsanlage (100) nach einer der Ausführungsformen 1 bis 8, dadurch gekennzeichnet, dass der mindestens eine Zugriffsbereich (152) und der Behandlungsbereich (108) mittels einer oder mehrerer Zugangsöffnungen (166) in einem oder mehreren Trennelementen (154), insbesondere Trennwänden (156), miteinander verbunden sind.
10. Behandlungsanlage (100) nach Ausführungsform 9, dadurch gekennzeichnet, dass bezüglich einer Schwerkraftrichtung (g) oberhalb einer oder mehrerer Zugangsöffnungen (166), insbesondere direkt über einer Oberkante (174) der einen oder der mehreren Zugangsöffnungen (166), eine oder mehrere Düsen (304), insbesondere Schlitzdüsen (306), angeordnet sind.
11. Behandlungsanlage (100) nach Ausführungsform 10, dadurch gekennzeichnet, dass die eine oder die mehreren Düsen (304) derart angeordnet und ausgebildet sind, dass eine Hauptströmungsrichtung eines mittels der Düsen applizierten Gasstroms, insbesondere eines Luftstroms, einen Winkel (α, alpha) mit der Schwerkraftrichtung (g) einschließt, welcher mindestens ungefähr 5°, insbesondere mindestens ungefähr 10°, und/oder höchstens ungefähr 30°, insbesondere höchstens ungefähr 20°, beträgt.
12. Behandlungsanlage (100) nach einer der Ausführungsformen 9 bis 11, dadurch gekennzeichnet, dass bezüglich einer Schwerkraftrichtung (g) oberhalb einer oder mehrerer Zugangsöffnungen (166), insbesondere direkt über einer Oberkante (174) der einen oder der mehreren Zugangsöffnungen (166), ein oder mehrere Ablenkelemente (302) angeordnet sind, mittels welcher ein längs der Schwerkraftrichtung (g) von oben nach unten durch den Behandlungsbereich (108) hindurchgeführter Luftstrom, insbesondere Umluftstrom, von der einen oder den mehreren Zugangsöffnungen (166) wegleitbar ist.
13. Behandlungsanlage (100) nach Ausführungsform 12, dadurch gekennzeichnet, dass eine den Luftstrom ablenkende Oberseite des Ablenkelements (302) mit der Schwerkraftrichtung (g) einen Winkel (β; beta) einschließt, welcher mindestens ungefähr 10°, insbesondere mindestens ungefähr 20°, und/oder höchstens ungefähr 40°, insbesondere höchstens ungefähr 30°, beträgt.
14. Behandlungsanlage (100) nach einer der Ausführungsformen 9 bis 13, dadurch gekennzeichnet, dass bezüglich einer Schwerkraftrichtung (g) oberhalb einer oder mehrerer Zugangsöffnungen (166), insbesondere direkt über einer Oberkante (174) der einen oder der mehreren Zugangsöffnungen (166), eine oder mehrere Düsen (304), insbesondere Schlitzdüsen (306), und ein oder mehrere Ablenkelemente (302) angeordnet sind, wobei die eine oder die mehreren Düsen (304) unter dem einen oder den mehreren Ablenkelementen (304) angeordnet sind und/oder in einen direkt unter dem einen oder den mehreren Ablenkelementen (304) angeordneten Raumbereich münden.
15. Behandlungsanlage (100) nach einer der Ausführungsformen 9 bis 14, dadurch gekennzeichnet, dass die eine oder die mehreren Zugangsöffnungen (166) und/oder das eine oder die mehreren Trennelemente (154) jeweils mit einem oder mit mehreren Leitelementen, insbesondere Seitenleitelementen (310), versehen sind, mittels welcher eine Luftströmung in einer Umgebung der einen oder der mehreren Zugangsöffnungen (166) beeinflussbar ist.
16. Behandlungsanlage (100) nach Ausführungsform 15, dadurch gekennzeichnet, dass ein oder mehrere Seitenleitelemente (310) insbesondere benachbart und/oder beabstandet zu einer oder mehreren Seitenkanten (176) der einen oder der mehreren Zugangsöffnungen (166) angeordnet sind, wobei das eine oder die mehreren Seitenleitelemente (310) sich vorzugsweise zumindest näherungsweise vertikal und/oder zumindest näherungsweise senkrecht zu dem das jeweilige Seitenleitelement (310) aufnehmenden oder tragenden oder stützenden Trennelement (154) erstrecken.
17. Behandlungsanlage (100) nach einer der Ausführungsformen 9 bis 16, dadurch gekennzeichnet, dass ein oder mehrere Ablenkelemente (302), eine oder mehrere Düsen (304) und/oder ein oder mehrere Leitelemente, insbesondere Seitenleitelemente (310), beabstandet von der jeweiligen Zugangsöffnung (166) angeordnet sind, so dass ein die jeweilige Zugangsöffnung (166) umgebender, insbesondere ebener, Trennelementabschnitt (308) gebildet ist, längs welchem und/oder mittels welchem vorzugsweise eine möglichst störungsfreie und/oder laminare Luftströmung erzielbar ist.
18. Behandlungsanlage (100) nach einer der Ausführungsformen 9 bis 17, dadurch gekennzeichnet, dass eine oder mehrere Zugangsöffnungen (166) jeweils mehrere Öffnungsabschnitte (320) aufweisen, mittels welcher unterschiedlich dimensionierte freie Querschnitte der jeweiligen Zugangsöffnung (166) freigebbar oder sperrbar sind.
19. Behandlungsanlage (100) nach Ausführungsform 18, dadurch gekennzeichnet, dass abhängig von einem jeweiligen Betriebsmodus der Behandlungsanlage (100) und/oder abhängig von einer jeweiligen Wartungsaktion oder Rüstaktion an einer oder mehreren Aktionsvorrichtungen (130) unterschiedliche Öffnungsabschnitte (320) der einen oder der mehreren Zugangsöffnungen (166) freigebbar oder sperrbar sind.
20. Behandlungsanlage (100) nach einer der Ausführungsformen 1 bis 19, dadurch gekennzeichnet, dass eine oder mehrere Aktionsvorrichtungen (130) jeweils ein oder mehrere Aktionselemente (146), insbesondere ein oder mehrere Applikationselemente und/oder Handhabungselemente, aufweisen und dass eines oder mehrere dieser Aktionselemente (146), insbesondere sämtliche Aktionselemente (146), teilweise und/oder vollständig und/oder gleichzeitig und/oder zeitlich nacheinander in den Zugriffsbereich (152) hinein und/oder an den Zugriffsbereich (152) heran bewegbar sind.
21. Behandlungsanlage (100) nach einer der Ausführungsformen 1 bis 20, dadurch gekennzeichnet, dass der Zugriffsbereich (152) mittels einer oder mehrerer Trennelemente (154), insbesondere Trennwände (156), räumlich von dem Behandlungsbereich (108) getrennt ist und
   a) dass der Zugriffsbereich (152) für einen oder mehrere Aktionsvorrichtungen (130) ausgehend von dem Behandlungsbereich (108) durch eine Zugangsöffnung (166) hindurch zugänglich ist und/oder
   b) dass der Zugriffsbereich (152) für eine Person von außerhalb einer Einhausung (112) der Behandlungsanlage (100) durch eine Zutrittsöffnung (168), insbesondere eine Tür (170), hindurch zugänglich ist.
22. Behandlungsanlage (100) nach einer der Ausführungsformen 1 bis 21, dadurch gekennzeichnet, dass die Behandlungsanlage (100) eine Luftführungsvorrichtung (199) umfasst, welche eine Umluftführungsvorrichtung (200) und/oder eine Zuluftführungsvorrichtung (202) umfasst,
   wobei mittels der Umluftführungsvorrichtung (200) ein Umluftstrom (184) mehrfach durch den Behandlungsbereich (108) hindurchführbar ist und/oder
   wobei mittels der Zuluftführungsvorrichtung (202) ein oder mehrere Zuluftströme (186), insbesondere ein oder mehrere Frischluftströme und/oder ein oder mehrere Hallenluftströme, zu dem einen oder den mehreren Zugriffsbereichen (152) zuführbar sind.
23. Behandlungsanlage (100) nach Ausführungsform 22, dadurch gekennzeichnet, dass mittels der Umluftführungsvorrichtung (200) der Umluftstrom (184) aus dem Behandlungsbereich (108) und mindestens ein Zuluftstrom (186) aus dem einen oder den mehreren Zugriffsbereichen (152) zu einem Gesamtstrom zusammenführbar sind und dass mittels der Umluftführungsvorrichtung (200) zumindest ein Teilvolumenstrom des Gesamtstroms als Umluftstrom (184) erneut dem Behandlungsbereich (108) zuführbar ist.
24. Behandlungsanlage (100) nach einer der Ausführungsformen 1 bis 23, dadurch gekennzeichnet, dass die Behandlungsanlage (100) eine Steuervorrichtung umfasst, mittels welcher die Behandlungsanlage (100) wahlweise in verschiedene Betriebsmodi versetzbar ist, wobei insbesondere einer oder mehrere der folgenden Betriebsmodi vorgesehen sind:
   - ein Behandlungsmodus, in welchem ein oder mehrere Werkstücke (102) in dem Behandlungsbereich (108) mittels einer oder mehrerer Aktionsvorrichtungen (130) behandelt werden, wobei sich vorzugsweise keine Person in dem einen oder den mehreren Zugriffsbereichen (152) aufhält oder aufhalten kann; und/oder
   - ein Sicherheitsmodus, in welchem ein oder mehrere Werkstücke (102) in dem Behandlungsbereich (108) mittels einer oder mehrerer Aktionsvorrichtungen (130) behandelt werden, wobei sich vorzugsweise mindestens eine Person in dem einen oder den mehreren Zugriffsbereichen (152) aufhält oder aufhalten kann; und/oder
   - ein Wartungsmodus, in welchem keine Behandlung von Werkstücken (102) im Behandlungsbereich (108) erfolgt.
25. Behandlungsanlage (100) nach Ausführungsform 24, dadurch gekennzeichnet, dass im Sicherheitsmodus eine oder mehrere Aktionsvorrichtungen (130), insbesondere ein oder mehrere Aktionselemente (146) der einen oder der mehreren Aktionsvorrichtungen (130), insbesondere zeitlich nacheinander in den mindestens einen Zugriffsbereich (152) hinein und/oder an den mindestens einen Zugriffsbereich (152) heran bewegbar sind, so dass von einer Person eine Wartungsaktion und/oder eine Rüstaktion durchführbar ist.
26. Behandlungsanlage (100) nach einer der Ausführungsformen 1 bis 25, dadurch gekennzeichnet, dass die Behandlungsanlage (100) eine Fördervorrichtung (126) umfasst, mittels welcher die Werkstücke (102) längs einer Förderrichtung (128) in den Behandlungsbereich (108) hinein, durch den Behandlungsbereich (108) hindurch und/oder aus dem Behandlungsbereich (108) heraus förderbar sind, wobei mindestens zwei Zugriffsbereiche (152) vorgesehen sind, welche auf einander gegenüberliegenden Seiten einer parallel zur Förderrichtung (128) verlaufenden vertikalen Längsmittelebene (136) der Behandlungsanlage (100) angeordnet und/oder ausgebildet sind.
27. Behandlungsanlage (100) nach einer der Ausführungsformen 1 bis 26, dadurch gekennzeichnet, dass die Behandlungsanlage (100) eine Fördervorrichtung (126) umfasst, mittels welcher die Werkstücke (102) längs einer Förderrichtung (128) in den Behandlungsbereich (108) hinein, durch den Behandlungsbereich (108) hindurch und/oder aus dem Behandlungsbereich (108) heraus förderbar sind, wobei mindestens zwei Zugriffsbereiche (152) vorgesehen sind, von welchen mindestens ein Zugriffsbereich (152) bezüglich der Förderrichtung (128) vor dem Behandlungsbereich (108) angeordnet ist und von welchen mindestens ein weiterer Zugriffsbereich (152) bezüglich der Förderrichtung (128) hinter dem Behandlungsbereich (108) angeordnet ist.
28. Behandlungsanlage (100) nach einer der Ausführungsformen 1 bis 27, dadurch gekennzeichnet, dass die Behandlungsanlage (100) eine oder mehrere Führungselemente (138), insbesondere Führungsschienen (140), umfasst, an welchen jeweils eine oder mehrere Aktionsvorrichtungen (130) verfahrbar angeordnet sind.
29. Behandlungsanlage (100) nach Ausführungsform 28, dadurch gekennzeichnet, dass die Führungselemente (138) abschnittsweise oder vollständig zumindest näherungsweise parallel zueinander und/oder abschnittsweise oder vollständig zumindest näherungsweise parallel zu einer Förderrichtung (128) einer Fördervorrichtung (126) der Behandlungsanlage (100) ausgebildet und/oder ausgerichtet sind.
30. Behandlungsanlage (100) nach einer der Ausführungsformen 28 oder 29, dadurch gekennzeichnet, dass die Behandlungsanlage (100) zwei oder mehr als zwei Führungselemente (138) umfasst, welche bezüglich einer vertikalen Längsmittelebene (136) der Behandlungsanlage (100) auf derselben Seite angeordnet sind, insbesondere an einer Seitenwand (114) einer den Behandlungsbereich (108) umgebenden Einhausung (112) der Behandlungsanlage (100).
31. Behandlungsanlage (100) nach einer der Ausführungsformen 28 bis 30, dadurch gekennzeichnet, dass die Behandlungsanlage (100) zwei oder mehr als zwei Führungselemente (138) umfasst, welche bezüglich einer vertikalen Längsmittelebene (136) der Behandlungsanlage (100) auf einander gegenüberliegenden Seiten angeordnet sind, insbesondere an einander gegenüberliegenden Seitenwänden (114) einer den Behandlungsbereich (108) umgebenden Einhausung (112) der Behandlungsanlage (100).
32. Behandlungsanlage (100) nach einer der Ausführungsformen 28 bis 31, dadurch gekennzeichnet, dass die Behandlungsanlage (100) eine Fördervorrichtung (126) umfasst, mittels welcher die Werkstücke (102) längs einer Förderrichtung (128) in den Behandlungsbereich (108) hinein, durch den Behandlungsbereich (108) hindurch und/oder aus dem Behandlungsbereich (108) heraus förderbar sind, wobei ein oder mehrere Führungselemente (138) bezüglich der Schwerkraftrichtung (g) unterhalb der Fördervorrichtung (126), insbesondere vollständig unterhalb einer die Fördervorrichtung (126) in der Schwerkraftrichtung (g) nach oben begrenzenden Oberseite der Fördervorrichtung (126) angeordnet sind.
33. Behandlungsanlage (100) nach einer der Ausführungsformen 28 bis 32, dadurch gekennzeichnet, dass mehrere Aktionsvorrichtungen (130) längs einer Führungsrichtung (eines oder mehrerer Führungselemente (138) der Behandlungsanlage (100) und/oder längs einer Förderrichtung (128) einer Fördervorrichtung (126) der Behandlungsanlage (100) aneinander vorbei verfahrbar sind.
34. Behandlungsanlage (100) nach einer der Ausführungsformen 28 bis 33, dadurch gekennzeichnet, dass ein oder mehrere Führungselemente (138) der Behandlungsanlage (100) jeweils genau zwei oder mehr als zwei Aktionsvorrichtungen (130) führen.
35. Behandlungsanlage (100) nach einer der Ausführungsformen 28 bis 34, dadurch gekennzeichnet, dass mehreren Aktionsvorrichtungen (130) ein gemeinsamer Zugriffsbereich (152) zugeordnet ist, von welchem aus und/oder an welchem die Aktionsvorrichtungen (130) zumindest in einem Zugriffszustand derselben zugänglich sind.
36. Behandlungsanlage (100) nach Ausführungsform 35, dadurch gekennzeichnet, dass zwei oder mehr als zwei Aktionsvorrichtungen (130), welche an voneinander verschiedenen Führungselementen (138) der Behandlungsanlage (100) geführt sind, ein gemeinsamer Zugriffsbereich (152) zugeordnet ist.
37. Behandlungsanlage (100) nach einer der Ausführungsformen 28 bis 36, dadurch gekennzeichnet, dass die Behandlungsanlage (100) eine oder mehrere feststehende Aktionsvorrichtungen (130f) und eine oder mehrere bewegliche Aktionsvorrichtungen (130b) umfasst.
38. Behandlungsanlage (100) nach Ausführungsform 37, dadurch gekennzeichnet, dass die eine oder die mehreren feststehenden Aktionsvorrichtungen (130f) zwischen einer oder mehreren beweglichen Aktionsvorrichtungen (130b) einerseits und einem Zugriffsbereich (152) andererseits angeordnet sind, insbesondere bezogen auf eine Förderrichtung (128) einer Fördervorrichtung (126) der Behandlungsanlage (100).
39. Behandlungsanlage (100) nach einer der Ausführungsformen 37 und 38, dadurch gekennzeichnet, dass die eine oder die mehreren feststehenden Aktionsvorrichtungen (130f) und die eine oder die mehreren beweglichen Aktionsvorrichtungen (130b) einem gemeinsamen Zugriffsbereich (152) zugeordnet sind.
40. Behandlungsanlage (100) nach einer der Ausführungsformen 28 bis 39, dadurch gekennzeichnet, dass längs einer Führungsrichtung eines oder mehrerer Führungselemente (138) der Behandlungsanlage (100) und/oder längs einer Förderrichtung (128) einer Fördervorrichtung (126) der Behandlungsanlage (100) zwischen zwei Führungselementen (138) ein Zugriffsbereich (152) angeordnet ist, von welchem aus und/oder an welchem mindestens zwei Aktionsvorrichtungen (130), welche an den beiden Führungselementen (138) geführt sind, zumindest in einem Zugriffszustand der Aktionsvorrichtungen (130) zugänglich sind.
41. Behandlungsanlage (100) nach einer der Ausführungsformen 28 bis 40, dadurch gekennzeichnet, dass längs einer Führungsrichtung eines oder mehrerer Führungselemente (138) der Behandlungsanlage (100) und/oder längs einer Förderrichtung (128) einer Fördervorrichtung (126) der Behandlungsanlage (100) an einander gegenüberliegenden Endbereichen eines oder mehrerer Führungselemente (138) jeweils ein Zugriffsbereich (152) angeordnet ist.
42. Behandlungsanlage (100) nach einer der Ausführungsformen 1 bis 41, dadurch gekennzeichnet, dass die Behandlungsanlage (100) einen zumindest näherungsweise quaderförmig ausgebildeten Behandlungsraum umfasst, welcher im Wesentlichen mittig den Behandlungsbereich (108) umfasst, wobei in einer, zwei, drei oder vier Eckbereichen (188) des Behandlungsraums (110) eine, zwei, drei oder vier Zugriffsbereiche (152) angeordnet und/oder gebildet sind.
43. Behandlungsanlage (100) nach einer der Ausführungsformen 1 bis 42, dadurch gekennzeichnet, dass die Behandlungsanlage (100) eine Behandlungslinie umfasst, welche mehrere längs einer Förderrichtung (128) einer Fördervorrichtung (126) der Behandlungsanlage (100) aufeinander folgende Behandlungsbereiche (108) umfasst, wobei zwischen zwei Behandlungsbereichen (108) jeweils ein oder mehrere Zugriffsbereiche (152) angeordnet sind, von welchen aus und/oder an welchen mindestens zwei Aktionsvorrichtungen (130) zur Durchführung von Aktionen in voneinander verschiedenen Behandlungsbereichen (108) zugänglich sind, zumindest in einem Zugriffszustand der Aktionsvorrichtungen (130).
44. Verfahren zum Behandeln von Werkstücken (102), insbesondere Fahrzeugkarosserien (106), wobei bei dem Verfahren mittels einer oder mehrerer Aktionsvorrichtungen (130) in einem Behandlungsbereich (108) eine oder mehrere Aktionen an den Werkstücken (102) durchgeführt werden.
45. Verfahren nach Ausführungsform 44, dadurch gekennzeichnet, dass die eine oder die mehreren Aktionsvorrichtungen (130) zumindest in einem Zugriffszustand derselben vorzugsweise von mindestens einem Zugriffsbereich (152) aus und/oder an mindestens einem Zugriffsbereich (152) zugänglich sind, insbesondere zur Durchführung von Wartungsaktionen und/oder Rüstaktionen.
46. Verfahren nach einer der Ausführungsformen 44 oder 45, dadurch gekennzeichnet, dass die Behandlungsanlage (100) wahlweise in verschiedene Betriebsmodi versetzt wird, wobei insbesondere einer oder mehrere der folgenden Betriebsmodi vorgesehen sind:
   - ein Behandlungsmodus, in welchem ein oder mehrere Werkstücke (102) in dem Behandlungsbereich (108) mittels einer oder mehrerer Aktionsvorrichtungen (130) behandelt werden, wobei sich vorzugsweise keine Person in dem einen oder den mehreren Zugriffsbereichen (152) aufhält oder aufhalten kann; und/oder
   - ein Sicherheitsmodus, in welchem ein oder mehrere Werkstücke (102) in dem Behandlungsbereich (108) mittels einer oder mehrerer Aktionsvorrichtungen (130) behandelt werden, wobei sich vorzugsweise mindestens eine Person in dem einen oder den mehreren Zugriffsbereichen (152) aufhält oder aufhalten kann; und/oder
   - ein Wartungsmodus, in welchem keine Behandlung von Werkstücken (102) im Behandlungsbereich (108) erfolgt.
47. Verfahren nach einer der Ausführungsformen 44 bis 46, dadurch gekennzeichnet, dass nacheinander voneinander verschiedene Aktionsvorrichtungen (130) in einen Zugriffszustand gebracht werden und dass an denselben jeweils mindestens eine Wartungsaktion und/oder mindestens eine Rüstaktion durchgeführt wird, während mittels einer oder mehrerer Aktionsvorrichtungen (130), welche nicht in dem Zugriffszustand sind, ein oder mehrere Behandlungsaktionen zur Behandlung der Werkstücke (102) durchgeführt werden, insbesondere fortgesetzt werden und/oder ununterbrochen aufrechterhalten werden.
48. Verfahren nach einer der Ausführungsformen 44 bis 47, dadurch gekennzeichnet, dass mittels einer oder mehrerer Düsen 304) der Behandlungsanlage (100) ein Luftvorhang erzeugt wird, mittels welchem der Behandlungsbereich (108) und der mindestens eine Zugriffsbereich (152) voneinander getrennt werden.

### Bezugszeichenliste

- 100: Behandlungsanlage
- 102: Werkstück
- 104: Lackieranlage
- 106: Fahrzeugkarosserie
- 108: Behandlungsbereich
- 110: Behandlungsraum
- 112: Einhausung
- 114: Seitenwand
- 116: Einlassseite
- 118: Zuführöffnung
- 120: Auslassseite
- 122: Bodenwand
- 124: Deckenwand
- 126: Fördervorrichtung
- 128: Förderrichtung
- 130: Aktionsvorrichtung
- 130f: feststehende Aktionsvorrichtung
- 130b: bewegliche Aktionsvorrichtung
- 132: Applikationsroboter
- 134: Handhabungsroboter
- 136: Längsmittelebene
- 138: Führungselement
- 140: Führungsschiene
- 142: Führungsrichtung
- 144: Aktionsbasis
- 146: Aktionselement
- 148: Aktionsarm
- 150: begehbarer Boden
- 152: Zugriffsbereich
- 154: Trennelement
- 156: Trennwand
- 158: Schachtwand
- 160: Wartungsschacht
- 162: Einlass
- 164: Auslass
- 166: Zugangsöffnung
- 168: Zutrittsöffnung
- 170: Tür
- 172: Unterkante
- 174: Oberkante
- 176: Seitenkante
- 177: Hochrisikobereich
- 178: Niedrigrisikobereich
- 180: Zwischenrisikobereich
- 182: Filterdecke
- 184: Umluftstrom
- 186: Zuluftstrom
- 188: Eckbereich
- 190: Trennungsbereich
- 192: Abführöffnung
- 194: Ventil
- 196: Behandlungslinie
- 198: Behandlungsbox
- 199: Luftführungsvorrichtung
- 200: Umluftführung
- 202: Zuluftführung
- 204: Plenum
- 206: Abscheidevorrichtung
- 208: Rohgasschacht
- 210: Abluftführung
- 300: Luftvorhangsvorrichtung
- 302: Ablenkelement
- 304: Düse
- 306: Schlitzdüse
- 308: Trennelementabschnitt
- 310: Seitenleitelement
- 312: Düsenkasten
- 314: Verteilerkanal
- 316: Zuführkanal
- 318: Fächerdüse
- 320: Öffnungsabschnitt
- 440: Sperrelement
- 402: Klappe
- 404: Tür
- 460: Einlaufbereich
- 462: Auslaufbereich
- 464: Normalniveau
- 466: Querrichtung
- 468: abgesenktes Niveau
- 470: Treppe
- 472: Umgebungsniveau

- α: Winkel
- β: Winkel
- g: Schwerkraftrichtung
- H: Höhe
- A: Außenlackierroboter
- I: Innenlackierroboter
- S: Handhabungsroboter

## Patentansprüche

1. Behandlungsanlage (100) zum Behandeln von Werkstücken (102), insbesondere Fahrzeugkarosserien (106), wobei die Behandlungsanlage (100) Folgendes umfasst:
- einen Behandlungsbereich (108) zur Aufnahme von zu behandelnden Werkstücken (102);
- eine oder mehrere Aktionsvorrichtungen (130) zur Durchführung einer oder mehrerer Aktionen an den zu behandelnden Werkstücken (102),
wobei die Behandlungsanlage (100) mindestens zwei Zugriffsbereiche (152) umfasst, von welchen aus und/oder an welchen die eine oder die mehreren Aktionsvorrichtungen (130) zumindest in einem Zugriffszustand derselben zugänglich sind, wobei jeder Zugriffsbereich (152) und der Behandlungsbereich (108) mittels einer oder mehrerer Zugangsöffnungen (166) in einem oder mehreren Trennelementen (154), insbesondere Trennwänden (156), miteinander verbunden sind und wobei die Behandlungsanlage (100) eine Fördervorrichtung (126) umfasst, mittels welcher die Werkstücke (102) längs einer Förderrichtung (128) in den Behandlungsbereich (108) hinein, durch den Behandlungsbereich (108) hindurch und/oder aus dem Behandlungsbereich (108) heraus förderbar sind,
**dadurch gekennzeichnet, dass**
die mindestens zwei Zugriffsbereiche (152) auf einander gegenüberliegenden Seiten einer parallel zur Förderrichtung (128) verlaufenden vertikalen Längsmittelebene (136) der Behandlungsanlage (100) angeordnet sind.

2. Behandlungsanlage (100) nach Anspruch 1, **dadurch gekennzeichnet, dass** die Behandlungsanlage (100) eine oder mehrere Düsen (304) zur Zuführung eines Zuluftstroms umfasst, mittels welcher ein Luftvorhang erzeugbar ist, mittels welchem der Behandlungsbereich (108) und der mindestens eine Zugriffsbereich (152) voneinander trennbar sind,
wobei
a) mittels einer oder mehrerer Düsen (304) verhinderbar ist, dass die im Behandlungsbereich (108) befindliche Luft in den mindestens einen Zugriffsbereich (152) strömt; und/oder
b) mittels einer oder mehrerer Düsen (304) ein Luftaustausch zwischen dem Behandlungsbereich (108) und dem einen oder den mehreren Zugriffsbereichen (152) verhinderbar oder zumindest minimierbar ist.

3. Behandlungsanlage (100) nach einem der Ansprüche 1 oder 2, **dadurch gekennzeichnet, dass** der mindestens eine Zugriffsbereich (152) ein räumlich von dem Behandlungsbereich (108) verschiedener und/oder getrennter Bereich ist.

4. Behandlungsanlage (100) nach einem der Ansprüche 1 bis 3, **dadurch gekennzeichnet, dass**
a) mehrere Aktionsvorrichtungen (130) zumindest in einem Zugriffszustand derselben von einem gemeinsamen Zugriffsbereich (152) aus und/oder an einem gemeinsamen Zugriffsbereich (152) zugänglich sind; und/oder
b) eine oder mehrere Aktionsvorrichtungen (130) beweglich angeordnet und/oder ausgebildet sind und dass zumindest ein Teil der einen oder der mehreren Aktionsvorrichtungen (130) in den mindestens einen Zugriffsbereich (152) hinein und/oder an den mindestens einen Zugriffsbereich (152) heran bewegbar sind.

5. Behandlungsanlage (100) nach einem der Ansprüche 1 bis 4, **dadurch gekennzeichnet, dass** bezüglich einer Schwerkraftrichtung (g) oberhalb einer oder mehrerer Zugangsöffnungen (166), insbesondere direkt über einer Oberkante (174) der einen oder der mehreren Zugangsöffnungen (166), eine oder mehrere Düsen (304), insbesondere Schlitzdüsen (306), angeordnet sind, wobei die eine oder die mehreren Düsen (304) vorzugsweise derart angeordnet und ausgebildet sind, dass eine Hauptströmungsrichtung eines mittels der Düsen applizierten Gasstroms, insbesondere eines Luftstroms, einen Winkel (α, alpha) mit der Schwerkraftrichtung (g) einschließt, welcher mindestens ungefähr 5°, insbesondere mindestens ungefähr 10°, und/oder höchstens ungefähr 30°, insbesondere höchstens ungefähr 20°, beträgt.

6. Behandlungsanlage (100) nach Anspruch 5, **dadurch gekennzeichnet, dass** bezüglich einer Schwerkraftrichtung (g) oberhalb einer oder mehrerer Zugangsöffnungen (166), insbesondere direkt über einer Oberkante (174) der einen oder der mehreren Zugangsöffnungen (166), ein oder mehrere Ablenkelemente (302) angeordnet sind, mittels welcher ein längs der Schwerkraftrichtung (g) von oben nach unten durch den Behandlungsbereich (108) hindurchgeführter Luftstrom, insbesondere Umluftstrom, von der einen oder den mehreren Zugangsöffnungen (166) wegleitbar ist, wobei vorzugsweise eine den Luftstrom ablenkende Oberseite des Ablenkelements (302) mit der Schwerkraftrichtung (g) einen Winkel (β; beta) einschließt, welcher mindestens ungefähr 10°, insbesondere mindestens ungefähr 20°, und/oder höchstens ungefähr 40°, insbesondere höchstens ungefähr 30°, beträgt.

7. Behandlungsanlage (100) nach einem der Ansprüche 5 oder 6, **dadurch gekennzeichnet, dass**
a) bezüglich einer Schwerkraftrichtung (g) oberhalb einer oder mehrerer Zugangsöffnungen (166), insbesondere direkt über einer Oberkante (174) der einen oder der mehreren Zugangsöffnungen (166), eine oder mehrere Düsen (304), insbesondere Schlitzdüsen (306), und ein oder mehrere Ablenkelemente (302) angeordnet sind, wobei die eine oder die mehreren Düsen (304) unter dem einen oder den mehreren Ablenkelementen (302) angeordnet sind und/oder in einen direkt unter dem einen oder den mehreren Ablenkelementen (302) angeordneten Raumbereich münden; und/oder
b) die eine oder die mehreren Zugangsöffnungen (166) und/oder das eine oder die mehreren Trennelemente (154) jeweils mit einem oder mit mehreren Leitelementen, insbesondere Seitenleitelementen (310), versehen sind, mittels welcher eine Luftströmung in einer Umgebung der einen oder der mehreren Zugangsöffnungen (166) beeinflussbar ist, wobei vorzugsweise ein oder mehrere Seitenleitelemente (310) insbesondere benachbart und/oder beabstandet zu einer oder mehreren Seitenkanten (176) der einen oder der mehreren Zugangsöffnungen (166) angeordnet sind, wobei das eine oder die mehreren Seitenleitelemente (310) sich vorzugsweise zumindest näherungsweise vertikal und/oder zumindest näherungsweise senkrecht zu dem das jeweilige Seitenleitelement (310) aufnehmenden oder tragenden oder stützenden Trennelement (154) erstrecken.

8. Behandlungsanlage (100) nach einem der Ansprüche 5 bis 7, **dadurch gekennzeichnet, dass** ein oder mehrere Ablenkelemente (302), eine oder mehrere Düsen (304) und/oder ein oder mehrere Leitelemente, insbesondere Seitenleitelemente (310), beabstandet von der jeweiligen Zugangsöffnung (166) angeordnet sind, so dass ein die jeweilige Zugangsöffnung (166) umgebender, insbesondere ebener, Trennelementabschnitt (308) gebildet ist, längs welchem und/oder mittels welchem vorzugsweise eine möglichst störungsfreie und/oder laminare Luftströmung erzielbar ist.

9. Behandlungsanlage (100) nach einem der Ansprüche 5 bis 8, **dadurch gekennzeichnet, dass** eine oder mehrere Zugangsöffnungen (166) jeweils mehrere Öffnungsabschnitte (320) aufweisen, mittels welcher unterschiedlich dimensionierte freie Querschnitte der jeweiligen Zugangsöffnung (166) freigebbar oder sperrbar sind, wobei vorzugsweise abhängig von einem jeweiligen Betriebsmodus der Behandlungsanlage (100) und/oder abhängig von einer jeweiligen Wartungsaktion oder Rüstaktion an einer oder mehreren Aktionsvorrichtungen (130) unterschiedliche Öffnungsabschnitte (320) der einen oder der mehreren Zugangsöffnungen (166) freigebbar oder sperrbar sind.

10. Behandlungsanlage (100) nach einem der Ansprüche 1 bis 9, **dadurch gekennzeichnet, dass**
i) eine oder mehrere Aktionsvorrichtungen (130) jeweils ein oder mehrere Aktionselemente (146), insbesondere ein oder mehrere Applikationselemente und/oder Handhabungselemente, aufweisen und dass eines oder mehrere dieser Aktionselemente (146), insbesondere sämtliche Aktionselemente (146), teilweise und/oder vollständig und/oder gleichzeitig und/oder zeitlich nacheinander in den Zugriffsbereich (152) hinein und/oder an den Zugriffsbereich (152) heran bewegbar sind; und/oder
ii) der Zugriffsbereich (152) mittels einer oder mehrerer Trennelemente (154), insbesondere Trennwände (156), räumlich von dem Behandlungsbereich (108) getrennt ist und
a) dass der Zugriffsbereich (152) für einen oder mehrere Aktionsvorrichtungen (130) ausgehend von dem Behandlungsbereich (108) durch eine Zugangsöffnung (166) hindurch zugänglich ist und/oder
b) dass der Zugriffsbereich (152) für eine Person von außerhalb einer Einhausung (112) der Behandlungsanlage (100) durch eine Zutrittsöffnung (168), insbesondere eine Tür (170), hindurch zugänglich ist; und/oder
iii) die Behandlungsanlage (100) eine Luftführungsvorrichtung (199) umfasst, welche eine Umluftführungsvorrichtung (200) und/oder eine Zuluftführungsvorrichtung (202) umfasst,
wobei mittels der Umluftführungsvorrichtung (200) ein Umluftstrom (184) mehrfach durch den Behandlungsbereich (108) hindurchführbar ist und/oder wobei mittels der Zuluftführungsvorrichtung (202) ein oder mehrere Zuluftströme (186), insbesondere ein oder mehrere Frischluftströme und/oder ein oder mehrere Hallenluftströme, zu dem einen oder den mehreren Zugriffsbereichen (152) zuführbar sind, wobei vorzugsweise vorgesehen ist, dass mittels der Umluftführungsvorrichtung (200) der Umluftstrom (184) aus dem Behandlungsbereich (108) und mindestens ein Zuluftstrom (186) aus dem einen oder den mehreren Zugriffsbereichen (152) zu einem Gesamtstrom zusammenführbar sind und dass mittels der Umluftführungsvorrichtung (200) zumindest ein Teilvolumenstrom des Gesamtstroms als Umluftstrom (184) erneut dem Behandlungsbereich (108) zuführbar ist.

11. Behandlungsanlage (100) nach einem der Ansprüche 1 bis 10, **dadurch gekennzeichnet, dass** die Behandlungsanlage (100) eine Steuervorrichtung umfasst, mittels welcher die Behandlungsanlage (100) wahlweise in verschiedene Betriebsmodi versetzbar ist, wobei insbesondere einer oder mehrere der folgenden Betriebsmodi vorgesehen sind:
- ein Behandlungsmodus, in welchem ein oder mehrere Werkstücke (102) in dem Behandlungsbereich (108) mittels einer oder mehrerer Aktionsvorrichtungen (130) behandelt werden, wobei sich vorzugsweise keine Person in dem einen oder den mehreren Zugriffsbereichen (152) aufhält oder aufhalten kann; und/oder
- ein Sicherheitsmodus, in welchem ein oder mehrere Werkstücke (102) in dem Behandlungsbereich (108) mittels einer oder mehrerer Aktionsvorrichtungen (130) behandelt werden, wobei sich vorzugsweise mindestens eine Person in dem einen oder den mehreren Zugriffsbereichen (152) aufhält oder aufhalten kann; und/oder
- ein Wartungsmodus, in welchem keine Behandlung von Werkstücken (102) im Behandlungsbereich (108) erfolgt,
wobei vorzugsweise vorgesehen ist, dass im Sicherheitsmodus eine oder mehrere Aktionsvorrichtungen (130), insbesondere ein oder mehrere Aktionselemente (146) der einen oder der mehreren Aktionsvorrichtungen (130), insbesondere zeitlich nacheinander in den mindestens einen Zugriffsbereich (152) hinein und/oder an den mindestens einen Zugriffsbereich (152) heran bewegbar sind, so dass von einer Person eine Wartungsaktion und/oder eine Rüstaktion durchführbar ist.

12. Behandlungsanlage (100) nach einem der Ansprüche 1 bis 11, **dadurch gekennzeichnet, dass** die Behandlungsanlage (100) eine Fördervorrichtung (126) umfasst, mittels welcher die Werkstücke (102) längs einer Förderrichtung (128) in den Behandlungsbereich (108) hinein, durch den Behandlungsbereich (108) hindurch und/oder aus dem Behandlungsbereich (108) heraus förderbar sind, wobei mindestens zwei Zugriffsbereiche (152) vorgesehen sind, von welchen mindestens ein Zugriffsbereich (152) bezüglich der Förderrichtung (128) vor dem Behandlungsbereich (108) angeordnet ist und von welchen mindestens ein weiterer Zugriffsbereich (152) bezüglich der Förderrichtung (128) hinter dem Behandlungsbereich (108) angeordnet ist.

13. Verfahren zum Behandeln von Werkstücken (102), insbesondere Fahrzeugkarosserien (106), wobei bei dem Verfahren mittels einer oder mehrerer Aktionsvorrichtungen (130) in einem Behandlungsbereich (108) eine oder mehrere Aktionen an den Werkstücken (102) durchgeführt werden, wobei die eine oder die mehreren Aktionsvorrichtungen (130) zumindest in einem Zugriffszustand derselben von mindestens zwei Zugriffsbereichen (152) aus und/oder an mindestens zwei Zugriffsbereichen (152) zugänglich sind, insbesondere zur Durchführung von Wartungsaktionen und/oder Rüstaktionen, wobei jeder Zugriffsbereich (152) und der Behandlungsbereich (108) mittels einer oder mehrerer Zugangsöffnungen (166) in einem oder mehreren Trennelementen (154), insbesondere Trennwänden (156), miteinander verbunden sind und wobei die Behandlungsanlage (100) eine Fördervorrichtung (126) umfasst, mittels welcher die Werkstücke (102) längs einer Förderrichtung (128) in den Behandlungsbereich (108) hinein, durch den Behandlungsbereich (108) hindurch und/oder aus dem Behandlungsbereich (108) heraus förderbar sind,
**dadurch gekennzeichnet, dass**
die mindestens zwei Zugriffsbereiche (152) auf einander gegenüberliegenden Seiten einer parallel zur Förderrichtung (128) verlaufenden vertikalen Längsmittelebene (136) der Behandlungsanlage (100) angeordnet sind.

14. Verfahren nach Anspruch 13, **dadurch gekennzeichnet, dass** die Behandlungsanlage (100) wahlweise in verschiedene Betriebsmodi versetzt wird, wobei insbesondere einer oder mehrere der folgenden Betriebsmodi vorgesehen sind:
- ein Behandlungsmodus, in welchem ein oder mehrere Werkstücke (102) in dem Behandlungsbereich (108) mittels einer oder mehrerer Aktionsvorrichtungen (130) behandelt werden, wobei sich vorzugsweise keine Person in dem einen oder den mehreren Zugriffsbereichen (152) aufhält oder aufhalten kann; und/oder
- ein Sicherheitsmodus, in welchem ein oder mehrere Werkstücke (102) in dem Behandlungsbereich (108) mittels einer oder mehrerer Aktionsvorrichtungen (130) behandelt werden, wobei sich vorzugsweise mindestens eine Person in dem einen oder den mehreren Zugriffsbereichen (152) aufhält oder aufhalten kann; und/oder
- ein Wartungsmodus, in welchem keine Behandlung von Werkstücken (102) im Behandlungsbereich (108) erfolgt.

15. Verfahren nach einem der Ansprüche 13 oder 14, **dadurch gekennzeichnet, dass**
a) nacheinander voneinander verschiedene Aktionsvorrichtungen (130) in einen Zugriffszustand gebracht werden und dass an denselben jeweils mindestens eine Wartungsaktion und/oder mindestens eine Rüstaktion durchgeführt wird, während mittels einer oder mehrerer Aktionsvorrichtungen (130), welche nicht in dem Zugriffszustand sind, ein oder mehrere Behandlungsaktionen zur Behandlung der Werkstücke (102) durchgeführt werden, insbesondere fortgesetzt werden und/oder ununterbrochen aufrechterhalten werden; und/oder
b) mittels einer oder mehrerer Düsen (304) der Behandlungsanlage (100) ein Luftvorhang erzeugt wird, mittels welchem der Behandlungsbereich (108) und der mindestens eine Zugriffsbereich (152) voneinander getrennt werden.
